# EUROPEAN PATENT APPLICATION

(11) **EP 4 836 240 A1**
(43) Date of publication of application: **04.11.2026**
(21) Application number: 24911391.1
(22) Date of filing: 27.12.2024
(51) Int. Cl.: H02K 1/12, F16F 15/03, B60G 13/00, H02K 41/03

(54) **STATOR ASSEMBLY, ELECTROMAGNETIC ACTUATOR, VIBRATION DAMPING DEVICE, SUSPENSION SYSTEM, AND VEHICLE**

(30) Priority: 29.12.2023 CN 202311868469
(71) Applicant: BYD Company Limited, Shenzhen, Guangdong 518118 (CN)
(72) Inventor: SUN, Xianmeng, Shenzhen, Guangdong 518118 (CN); ZHANG, Feng, Shenzhen, Guangdong 518118 (CN); ZHU, Ning, Shenzhen, Guangdong 518118 (CN); YAO, Jia, Shenzhen, Guangdong 518118 (CN); CHANG, Chao, Shenzhen, Guangdong 518118 (CN)
(74) Representative: Mathys & Squire
(86) International application number: PCT/CN2024/142957
(87) International publication number: WO 2025/140470

(57) **Abstract**

A stator assembly (210), an electromagnetic actuator (1000), a shock absorption apparatus (5000), a suspension system (10000), and a vehicle (20000) are provided. The stator assembly includes: a central rod (300); a core assembly (211), the core assembly being disposed on the central rod; and a winding assembly (212), the winding assembly being disposed on the core assembly, and the central rod being provided with a wire-through channel (330) through which a connection wire (2121) of the winding assembly passes.

## Description

### CROSS-REFERENCE TO RELATED APPLICATIONS

This application is proposed based on Chinese Patent Application "STATOR ASSEMBLY, ELECTROMAGNETIC ACTUATOR, SHOCK ABSORPTION APPARATUS, SUSPENSION SYSTEM, AND VEHICLE" No. 202311868469.2, filed on December 29, 2023, and claims priority to this Chinese Patent Application, which is incorporated herein by reference in its entirety.

### TECHNICAL FIELD

This application pertains to the field of vehicle technologies, and specifically, to a stator assembly, an electromagnetic actuator, a shock absorption apparatus, a suspension system, and a vehicle.

### BACKGROUND

An electromagnetic actuator is a motor that directly generates linear motion by means of electromagnetic force, and usually includes a stator assembly and a mover assembly. The stator assembly includes a winding coil disposed around a core shaft. The winding coil is electrically connected to a power supply, and can generate a magnetic field when being powered on, to generate a magnetic force with the mover assembly, thereby driving the mover assembly to move along a straight line.

However, in existing stator assemblies, wiring is difficult, which affects working performance of the electromagnetic actuator.

### SUMMARY

Therefore, this application provides a stator assembly. The stator assembly has a simple structure and is easy to wire, thereby resolving a technical problem of difficult wiring in an electromagnetic actuator in the conventional technologies.

A stator assembly of an electromagnetic actuator according to an embodiment of this application includes: a central rod; a core assembly, the core assembly being disposed on the central rod; and a winding assembly, the winding assembly being disposed on the core assembly, and the central rod being provided with a wire-through channel through which a connection wire of the winding assembly passes.

According to the stator assembly of an electromagnetic actuator in this embodiment of this application, the central rod is provided with the wire-through channel through which the connection wire of the winding assembly passes, to reduce a wiring difficulty of the winding assembly, and facilitate support and protection of the connection wire of the winding assembly, thereby prolonging service life of the connection wire, and ensuring performance of the connection wire.

Optionally, a plurality of core assemblies are provided, and the plurality of core assemblies are sequentially stacked in an axial direction of the central rod.

Optionally, the wire-through channel extends in the axial direction of the central rod.

Optionally, the winding assembly has a first lead-out end, and at least a partial structure of the first lead-out end is located on an outer periphery of the core assembly.

Optionally, a first reinforcing rib is disposed on an outer peripheral wall of the core assembly, a wire routing channel is disposed in the first reinforcing rib, and the wire routing channel is used to guide different phases of connection wires of the winding assembly to the wire-through channel of the central rod.

Optionally, the wire-through channel includes a radial hole and an axial hole, and the radial hole communicates with the axial hole.

Optionally, the wire-through channel is formed on an outer wall of the central rod.

Optionally, the winding assembly has a second lead-out end, and at least a partial structure of the second lead-out end is located between the core assembly and the central rod.

An electromagnetic actuator according to an embodiment of this application includes: a housing, an accommodating cavity being formed in the housing; a mover assembly, the mover assembly being disposed in the accommodating cavity; and a stator assembly, the stator assembly being the foregoing stator assembly, the stator assembly being disposed in the accommodating cavity, a partial structure of the central rod extending out of the housing, and one of the mover assembly and the stator assembly being connected to the housing. The mover assembly and the stator assembly are coupled, so that one of the mover assembly and the stator assembly moves along an axis with the housing.

According to the electromagnetic actuator in this embodiment of this application, the foregoing stator assembly is used to ensure performance of the electromagnetic actuator, so that a structure of the electromagnetic actuator is simple, thereby reducing a wiring difficulty of the electromagnetic actuator.

A shock absorption apparatus according to an embodiment of this application includes the foregoing electromagnetic actuator. The electromagnetic actuator is adapted to be connected between a vehicle wheel and a vehicle body.

According to the shock absorption apparatus in this embodiment of this application, the foregoing electromagnetic actuator is used to ensure performance of the shock absorption apparatus, so that a structure of the shock absorption apparatus is simple, thereby reducing a wiring difficulty of the shock absorption apparatus.

A suspension system according to an embodiment of this application includes the foregoing shock absorption apparatus.

According to the suspension system in this embodiment of this application, the foregoing shock absorption apparatus is used to ensure performance of the suspension system, so that a structure of the suspension system is simple, thereby reducing the wiring difficulty of the suspension system.

A vehicle according to an embodiment of this application includes the foregoing suspension system.

According to the vehicle in this embodiment of this application, the foregoing suspension system is used to ensure performance of the vehicle.

Additional aspects and advantages of this application will be clear from the following descriptions or will be understood from practice of this application.

### BRIEF DESCRIPTION OF DRAWINGS

The foregoing and/or additional aspects and advantages of this application will be clear and easily understood from the description of the embodiments taken in conjunction with the following drawings.
FIG. 1 is a schematic diagram of an electromagnetic actuator according to some embodiments of a first aspect of this application;
FIG. 2 is a sectional view of an electromagnetic actuator according to some embodiments of a first aspect of this application;
FIG. 3 is an exploded view of an electromagnetic actuator according to some embodiments of a first aspect of this application;
FIG. 4 is an enlarged view of a partial structure of the electromagnetic actuator in FIG. 2;
FIG. 5 is a schematic diagram of an electromagnetic actuator according to some embodiments of a second aspect of this application;
FIG. 6 is an exploded view of an electromagnetic actuator according to some embodiments of a second aspect of this application;
FIG. 7 is a sectional view of an electromagnetic actuator according to some embodiments of a second aspect of this application;
FIG. 8 is an exploded view of an electromagnetic actuator according to some other embodiments of a second aspect of this application;
FIG. 9 is a schematic diagram of a first sub-housing according to some embodiments of a second aspect of this application;
FIG. 10 is a schematic diagram of a first sub-housing from another angle according to some embodiments of a second aspect of this application;
FIG. 11 is a schematic diagram of a second sub-housing according to some embodiments of a second aspect of this application;
FIG. 12 is a schematic diagram of a second sub-housing from another angle according to some embodiments of a second aspect of this application;
FIG. 13 is a schematic diagram of a guide rod according to some embodiments of a second aspect of this application;
FIG. 14 is a schematic diagram of fitting between a central rod and a stator assembly according to some embodiments of a second aspect of this application;
FIG. 15 is a front view of a bearing according to some embodiments of a second aspect of this application;
FIG. 16 is a schematic diagram of a bearing according to some embodiments of a second aspect of this application;
FIG. 17 is a sectional view of an electromagnetic actuator according to some embodiments of a third aspect of this application;
FIG. 18 is a partially enlarged view of a region A in FIG. 17;
FIG. 19 is a top view of an electromagnetic actuator according to some embodiments of a third aspect of this application;
FIG. 20 is a sectional view of an electromagnetic actuator according to some other embodiments of a third aspect of this application;
FIG. 21 is a schematic diagram of an electromagnetic actuator according to some embodiments of a fourth aspect of this application;
FIG. 22 is a sectional view of an electromagnetic actuator according to some embodiments of a fourth aspect of this application;
FIG. 23 is a schematic diagram of a partial structure of the electromagnetic actuator in FIG. 22;
FIG. 24 is a schematic diagram of an electromagnetic actuator with a partial structure omitted according to some embodiments of a fourth aspect of this application;
FIG. 25 is a front view of a central rod according to some embodiments of a fourth aspect of this application;
FIG. 26 is a schematic diagram of a lead-out apparatus and a connection wire according to some embodiments of a fourth aspect of this application;
FIG. 27 is a sectional view of an electromagnetic actuator according to some embodiments of a fifth aspect of this application;
FIG. 28 is a schematic diagram of a central rod and a second portion according to some embodiments of a fifth aspect of this application;
FIG. 29 is a sectional view of a partial structure of an electromagnetic actuator according to some embodiments of a fifth aspect of this application;
FIG. 30 is a top view of a partial structure of an electromagnetic actuator according to some embodiments of a fifth aspect of this application;
FIG. 31 is a schematic diagram of a stator assembly according to some embodiments of a fifth aspect of this application;
FIG. 32 is a sectional view of a central rod and a second portion according to some other embodiments of a fifth aspect of this application;
FIG. 33 is a schematic diagram of a stator assembly according to some other embodiments of a fifth aspect of this application;
FIG. 34 is a schematic diagram of a partial structure of an electromagnetic actuator according to still other embodiments of a fifth aspect of this application;
FIG. 35 is a schematic diagram of a partial structure of a stator assembly according to still other embodiments of a fifth aspect of this application;
FIG. 36 is a sectional view of an electromagnetic actuator according to some embodiments of a sixth aspect of this application;
FIG. 37 is a sectional view of a central rod according to some embodiments of a sixth aspect of this application;
FIG. 38 is a top view of a partial structure of an electromagnetic actuator according to some embodiments of a sixth aspect of this application;
FIG. 39 is a sectional view of a partial structure of an electromagnetic actuator according to some embodiments of a sixth aspect of this application;
FIG. 40 is a sectional view of a central rod according to some other embodiments of a sixth aspect of this application;
FIG. 41 is a schematic diagram of a stator core according to some embodiments of a first aspect of this application;
FIG. 42 is a schematic diagram of the stator core in FIG. 41 with a partial structure cut away;
FIG. 43 is a schematic diagram of a stator core according to some embodiments of a second aspect of this application;
FIG. 44 is a schematic diagram of the stator core in FIG. 43 with a partial structure cut away;
FIG. 45 is a schematic diagram of a stator core according to some embodiments of a third aspect of this application;
FIG. 46 is a schematic diagram of the stator core in FIG. 45 with a partial structure cut away;
FIG. 47 is a schematic diagram of a stator core according to some embodiments of a fourth aspect of this application;
FIG. 48 is a schematic diagram of the stator core in FIG. 47 with a partial structure cut away;
FIG. 49 is a schematic diagram of a stator core according to some embodiments of a fifth aspect of this application;
FIG. 50 is an exploded view of a stator core according to some embodiments of a fifth aspect of this application;
FIG. 51 is an exploded view of a stator core according to some embodiments of a fifth aspect of this application;
FIG. 52 is a schematic diagram of a stator core according to some embodiments of a sixth aspect of this application;
FIG. 53 is an exploded view of a stator core according to some embodiments of a sixth aspect of this application;
FIG. 54 is a schematic diagram of a stator core according to some embodiments of a seventh aspect of this application;
FIG. 55 is a top view of a stator yoke portion in FIG. 54;
FIG. 56 is a sectional view of FIG. 55 taken along a line A-A;
FIG. 57 is a schematic diagram of a stator tooth portion in FIG. 54;
FIG. 58 is a partially enlarged view of fitting between the stator tooth portion and the stator yoke portion in FIG. 54;
FIG. 59 is a schematic diagram of an electromagnetic actuator according to some embodiments of a seventh aspect of this application;
FIG. 60 is a schematic diagram of a stator assembly in FIG. 59;
FIG. 61 is a sectional view of the stator assembly in FIG. 60;
FIG. 62 is a partially enlarged view of a region B in FIG. 61;
FIG. 63 is a schematic diagram of a first-type core according to some embodiments of a seventh aspect of this application;
FIG. 64 is a schematic diagram of an insulating bobbin according to some embodiments of a seventh aspect of this application;
FIG. 65 is a schematic diagram of a coil according to some embodiments of a seventh aspect of this application;
FIG. 66 is a schematic diagram of fitting between a second-type core and a coil according to some embodiments of a seventh aspect of this application;
FIG. 67 is a schematic diagram of a third-type core according to some embodiments of this application;
FIG. 68 is a sectional view of a third-type core according to some embodiments of this application;
FIG. 69 is a schematic diagram of a support core according to some embodiments of this application;
FIG. 70 is a schematic diagram of a support frame according to some embodiments of this application;
FIG. 71 is a sectional view of fitting between a third-type core and a coil according to some embodiments of this application;
FIG. 72 is a schematic diagram of an electromagnetic actuator according to some embodiments of an eighth aspect of this application;
FIG. 73 is a sectional view of an electromagnetic actuator according to some embodiments of an eighth aspect of this application;
FIG. 74 is a sectional view of a housing according to some embodiments of an eighth aspect of this application;
FIG. 75 is a schematic diagram of a central rod according to some embodiments of an eighth aspect of this application;
FIG. 76 is a schematic diagram of a central rod from another angle according to some embodiments of an eighth aspect of this application;
FIG. 77 is an exploded view of a central rod according to some embodiments of an eighth aspect of this application;
FIG. 78 is a schematic diagram of a first wiring assembly according to some embodiments of an eighth aspect of this application;
FIG. 79 is a front view of a first wiring assembly according to some embodiments of an eighth aspect of this application;
FIG. 80 is an exploded view of a first wiring assembly according to some embodiments of an eighth aspect of this application;
FIG. 81 is a schematic diagram of a second wiring assembly according to some embodiments of an eighth aspect of this application;
FIG. 82 is a front view of a second wiring assembly according to some embodiments of an eighth aspect of this application;
FIG. 83 is an exploded view of a second wiring assembly according to some embodiments of an eighth aspect of this application;
FIG. 84 is a schematic diagram of a third wiring assembly according to some embodiments of an eighth aspect of this application;
FIG. 85 is a front view of a third wiring assembly according to some embodiments of an eighth aspect of this application;
FIG. 86 is an exploded view of a third wiring assembly according to some embodiments of an eighth aspect of this application;
FIG. 87 is a schematic diagram of a first core unit according to some embodiments of an eighth aspect of this application;
FIG. 88 is a top view of a first core unit according to some embodiments of an eighth aspect of this application;
FIG. 89 is an exploded view of a first core unit according to some embodiments of an eighth aspect of this application;
FIG. 90 is an exploded view of an inner lead-out apparatus according to some embodiments of an eighth aspect of this application;
FIG. 91 is a schematic diagram of a coil according to some embodiments of an eighth aspect of this application;
FIG. 92 is a top view of a coil according to some embodiments of an eighth aspect of this application;
FIG. 93 is a schematic diagram of a second-type core according to some embodiments of an eighth aspect of this application;
FIG. 94 is a sectional view of a second-type core according to some embodiments of an eighth aspect of this application;
FIG. 95 is a schematic diagram of a second-type core with a coil omitted according to some embodiments of an eighth aspect of this application;
FIG. 96 is a schematic diagram of an inner wiring apparatus according to some embodiments of an eighth aspect of this application;
FIG. 97 is an exploded view of an inner wiring apparatus according to some embodiments of an eighth aspect of this application;
FIG. 98 is a schematic diagram of a second core unit according to some embodiments of an eighth aspect of this application;
FIG. 99 is a top view of a second core unit according to some embodiments of an eighth aspect of this application;
FIG. 100 is a schematic diagram of a second core unit with a coil omitted according to some embodiments of an eighth aspect of this application;
FIG. 101 is a schematic diagram of a bottom wiring apparatus according to some embodiments of an eighth aspect of this application;
FIG. 102 is an exploded view of a bottom wiring apparatus according to some embodiments of an eighth aspect of this application;
FIG. 103 is a schematic diagram of a first lead-out assembly according to some embodiments of an eighth aspect of this application;
FIG. 104 is an exploded view of a first lead-out assembly according to some embodiments of an eighth aspect of this application;
FIG. 105 is a schematic diagram of a second lead-out assembly according to some embodiments of an eighth aspect of this application;
FIG. 106 is an exploded view of a second lead-out assembly according to some embodiments of an eighth aspect of this application;
FIG. 107 is a schematic diagram of a first-phase lead connection of an electromagnetic actuator according to some embodiments of an eighth aspect of this application;
FIG. 108 is a side view of FIG. 107;
FIG. 109 is a sectional view of FIG. 108 taken along a line B-B;
FIG. 110 is a top view of FIG. 107;
FIG. 111 is a schematic diagram of a second-phase lead connection of an electromagnetic actuator according to some embodiments of an eighth aspect of this application;
FIG. 112 is a side view of FIG. 111;
FIG. 113 is a sectional view of FIG. 112 taken along a line C-C;
FIG. 114 is a top view of FIG. 111;
FIG. 115 is a schematic diagram of a third-phase lead connection of an electromagnetic actuator according to some embodiments of an eighth aspect of this application;
FIG. 116 is a side view of FIG. 115;
FIG. 117 is a sectional view of FIG. 116 taken along a line D-D;
FIG. 118 is a top view of FIG. 115;
FIG. 119 is a schematic diagram of an electromagnetic actuator according to some embodiments of a ninth aspect of this application;
FIG. 120 is a schematic diagram of a partial structure of an electromagnetic actuator according to some embodiments of a ninth aspect of this application;
FIG. 121 is a sectional view of a partial structure of an electromagnetic actuator according to some embodiments of a ninth aspect of this application;
FIG. 122 is an exploded view of a partial structure of an electromagnetic actuator according to some embodiments of a ninth aspect of this application;
FIG. 123 is a top view of an insulating bobbin according to some embodiments of this application;
FIG. 124 is a side view of an insulating bobbin according to some embodiments of this application;
FIG. 125 is a schematic diagram of an insulating bobbin according to some embodiments of this application;
FIG. 126 is a schematic diagram of an insulating bobbin from another angle according to some embodiments of this application;
FIG. 127 is a schematic diagram of fitting between an insulating bobbin and a core assembly according to some embodiments of this application;
FIG. 128 is a sectional view of a partial structure of an electromagnetic actuator according to some embodiments of a tenth aspect of this application;
FIG. 129 is an enlarged view of a partial structure in FIG. 128;
FIG. 130 is a partial sectional view of a partial structure of an electromagnetic actuator according to some embodiments of a tenth aspect of this application;
FIG. 131 is a schematic diagram of a partial structure of an electromagnetic actuator according to some embodiments of a tenth aspect of this application;
FIG. 132 is a sectional view of an electromagnetic actuator according to some embodiments of an eleventh aspect of this application;
FIG. 133 is a partially enlarged view of a region C in FIG. 132;
FIG. 134 is a partially enlarged view of a region D in FIG. 132;
FIG. 135 is a sectional view of an electromagnetic actuator according to some other embodiments of an eleventh aspect of this application;
FIG. 136 is a partially enlarged view of a region E in FIG. 135;
FIG. 137 is a sectional view of an electromagnetic actuator according to some embodiments of a twelfth aspect of this application;
FIG. 138 is a schematic diagram of a partial structure of an electromagnetic actuator according to some embodiments of a twelfth aspect of this application;
FIG. 139 is a partial sectional view of the electromagnetic actuator in FIG. 138;
FIG. 140 is a sectional view of the electromagnetic actuator in FIG. 139 in another direction;
FIG. 141 is a schematic diagram of an electromagnetic actuator according to some embodiments of a thirteenth aspect of this application;
FIG. 142 is a sectional view of an electromagnetic actuator according to some embodiments of a thirteenth aspect of this application;
FIG. 143 is a schematic diagram of a laser sensor according to some embodiments of a thirteenth aspect of this application;
FIG. 144 is a schematic diagram of a housing after being moved upward according to some embodiments of a thirteenth aspect of this application;
FIG. 145 is a schematic diagram of a housing after being moved downward according to some embodiments of a thirteenth aspect of this application;
FIG. 146 is a schematic diagram of fitting between a laser sensor and a stator assembly according to some embodiments of a thirteenth aspect of this application;
FIG. 147 is a bottom view of an electromagnetic actuator according to some embodiments of a fourteenth aspect of this application;
FIG. 148 is a sectional view of an electromagnetic actuator according to some embodiments of a fourteenth aspect of this application;
FIG. 149 is a sectional view of FIG. 148 taken along a line E-E;
FIG. 150 is a schematic diagram of a partial structure of an electromagnetic actuator according to some embodiments of a fourteenth aspect of this application;
FIG. 151 is a sectional view of an electromagnetic actuator according to some embodiments of a fifteenth aspect of this application;
FIG. 152 is a schematic diagram of a partial structure of an electromagnetic actuator according to some embodiments of a fifteenth aspect of this application;
FIG. 153 is a first schematic diagram of a partial magnetic field distribution of an electromagnetic actuator according to some embodiments of a fifteenth aspect of this application;
FIG. 154 is a second schematic diagram of a partial magnetic field distribution of an electromagnetic actuator according to some embodiments of a fifteenth aspect of this application;
FIG. 155 is a diagram of a linear relationship between magnetic field strength of a second detection member and a stroke of a central rod according to some embodiments of a fifteenth aspect of this application;
FIG. 156 is a diagram of a linear relationship between an electrical signal of a first detection member and a stroke of a central rod according to some embodiments of a fifteenth aspect of this application;
FIG. 157 is a first schematic diagram of structures of a second detection member and a first detection member according to some embodiments of a fifteenth aspect of this application;
FIG. 158 is a second schematic diagram of structures of a second detection member and a first detection member according to some embodiments of a fifteenth aspect of this application;
FIG. 159 is a sectional view of an electromagnetic actuator according to some embodiments of a sixteenth aspect of this application;
FIG. 160 is a partially enlarged view of a region F in FIG. 159;
FIG. 161 is a schematic diagram of a first detection member according to some embodiments of a sixteenth aspect of this application;
FIG. 162 is a schematic diagram of a housing after being moved upward according to some embodiments of a sixteenth aspect of this application;
FIG. 163 is a schematic diagram of a housing after being moved downward according to some embodiments of a sixteenth aspect of this application;
FIG. 164 is a bottom view of an electromagnetic actuator according to some embodiments of a sixteenth aspect of this application;
FIG. 165 is a schematic diagram of a detection module according to some embodiments of a seventeenth aspect of this application;
FIG. 166 is a schematic diagram of a detection module from another angle according to some embodiments of a seventeenth aspect of this application;
FIG. 167 is a bottom view of an electromagnetic actuator according to some embodiments of a seventeenth aspect of this application;
FIG. 168 is a schematic diagram of an electromagnetic actuator according to some embodiments of an eighteenth aspect of this application;
FIG. 169 is a schematic diagram of an electromagnetic actuator with a partial structure omitted according to some embodiments of an eighteenth aspect of this application;
FIG. 170 is an enlarged view of a partial structure in FIG. 169;
FIG. 171 is a sectional view of an electromagnetic actuator according to some embodiments of an eighteenth aspect of this application;
FIG. 172 is a top view of an electromagnetic actuator according to some embodiments of an eighteenth aspect of this application;
FIG. 173 is an enlarged view of a partial structure in FIG. 172;
FIG. 174 is a schematic diagram of a suspension system according to some embodiments of this application;
FIG. 175 is a sectional view of a suspension system according to some embodiments of this application; and
FIG. 176 is a schematic diagram of a vehicle according to some embodiments of this application.

### Reference numerals:

1000. electromagnetic actuator; 100. housing; 101. sub-housing; 1011. cylinder; 1013. slot; 1012. end cover; 400. guide rod; 430. guide protrusion; 410. mounting boss; 411. through-hole; 420. mounting plate; 421. fifth connecting hole; 1014. extension portion; 110. first sub-housing; 115. first cavity; 111. first connecting portion; 1111. first connecting lug; 1112. first connecting hole; 112. third connecting portion; 1121. third connecting hole; 113. first clearance groove; 114. third clearance groove; 120. second sub-housing; 125. second cavity; 121. second connecting portion; 1211. second connecting lug; 1212. second connecting hole; 122. fourth connecting portion; 1221. fourth connecting hole; 123. second clearance groove; 124. fourth clearance groove; 150. first fastener; 160. first clearance through-hole; 161. second clearance through-hole; 180. sixth connecting hole; 130. accommodating cavity; 131. clearance hole; 193. anti-rotation hole; 194. wire guide groove; 195. second reinforcing rib; 191. mounting seat; 220. mover assembly; 210. stator assembly; 211. core assembly; 2014. stator core; 2141. stator tooth portion; 21411. first lamination; 21412. first central hole; 21416. first connecting structure; 21417. second anti-rotation protrusion; 2142. stator yoke portion; 21422. second lamination; 21421. second central hole; 21423. second connecting structure; 21427. body; 21428. insertion portion; 21425. anti-rotation groove; 2133. winding groove; 21415. positioning protrusion; 21424. inclined surface; 21426. first boss structure; 2012. first reinforcing rib; 2111. first-type core; 21111. first annular groove; 21114. first core unit; 21115. second core unit; 21116. first internal mounting hole; 21117. third internal mounting hole; 2112. second-type core; 21122. second internal mounting hole; 2119. placement groove; 350. second positioning portion; 2019. notch; 2013. wire arrangement groove; 2015. wire end lead-out groove; 20111. recess; 2011. wire routing space; 2016. support frame; 2017. support core; 2110. third-type core; 212. winding assembly; 2121. connection wire; 21211. first-phase lead; 21212. second-phase lead; 21213. third-phase lead; 2018. first lead-out end; 214. second lead-out end; 2123. coil; 21231. lead-out wire; 21214. first-phase winding; 21215. second-phase winding; 21216. third-phase winding; 2122. insulating paper; 213. insulating bobbin; 2131. lead channel; 2132. wire-through groove; 2138. second annular groove; 2136. inner wall; 2134. second boss structure; 2135. insulating portion; 2137. assembly hole; 1016. bolt; 1017. positioning pin; 140. rotating shaft; 1015. elastic limiting member; 300. central rod; 230. lead-out apparatus; 330. wire-through channel; 333. radial hole; 334. axial hole; 331. guide rod end lead-out groove; 332. winding section lead-out groove; 340. first positioning portion; 370. first anti-rotation portion; 320. cooling chamber; 3211. second water inlet; 3212. second water outlet; 32111. second cooling tube; 32121. third cooling tube; 321. first cooling chamber; 322. second cooling chamber; 3221. sub-chamber; 810. cooling structure; 310. guide hole; 311. wire outlet; 831. first threaded section; 851. second threaded section; 312. sealing cover; 323. filling port; 2113. wiring assembly; 21131. long wiring assembly; 21132. medium wiring assembly; 21133. short wiring assembly; 2114. conducting member; 2115. insulating layer; 21151. first limiting feature; 2116. limiting member; 2117. first terminal; 2118. second terminal; 860. inner lead-out apparatus; 861. first assembling member; 862. first insulating member; 863. first conducting wire; 870. inner wiring apparatus; 871. second assembling member; 872. second insulating member; 873. second conducting wire; 880. bottom wiring apparatus; 881. third insulating member; 882. third conducting wire; 8821. first-phase terminal; 8822. second-phase terminal; 8823. third-phase terminal; 216. lead-out assembly; 2161. long lead-out assembly; 2162. short lead-out assembly; 2163. fourth insulating member; 2164. fourth conducting wire; 2165. second limiting feature; 2166. wire-clamping recess; 360. anti-rotation rod; 380. first limiting member; 390. second limiting member; 391. first portion; 392. second portion; 393. piston portion; 900. detection module; 910. laser sensor; 920. first sensor mounting frame; 930. first detection member; 931. sensor connecting end; 932. connecting rod; 933. sensing head; 940. second detection member; 950. assembly groove; 960. sensor mounting groove; 970. second sensor mounting frame; 192. mounting frame; 1921. clearance channel; 170. bearing; 171. protrusion portion; 840. guide bearing; 850. limiting nut; 500. upper support; 600. spring; 700. bushing; 800. buffer block; 830. assembly nut; 820. dust cover; 10000. suspension system; 2000. vehicle wheel; 3000. leaf spring; 4000. steering knuckle; 5000. shock absorption apparatus; 6000. subframe; and 20000. vehicle.

### DESCRIPTION OF EMBODIMENTS

The following describes in detail embodiments of this application, and examples of the embodiments are shown in the accompanying drawings. Same or similar reference numerals throughout the accompanying drawings indicate same or similar elements or elements having same or similar functions. The following embodiments described with reference to the accompanying drawings are exemplary and are merely intended to explain this application, but will not be understood as a limitation on this application.

The following describes a stator assembly 210 of an electromagnetic actuator 1000 according to embodiments of this application with reference to the accompanying drawings of the specification.

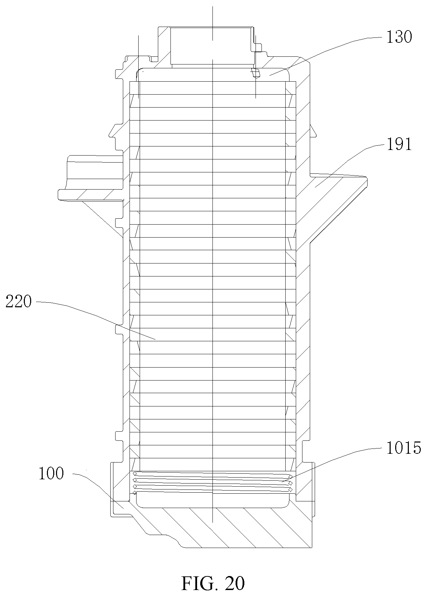

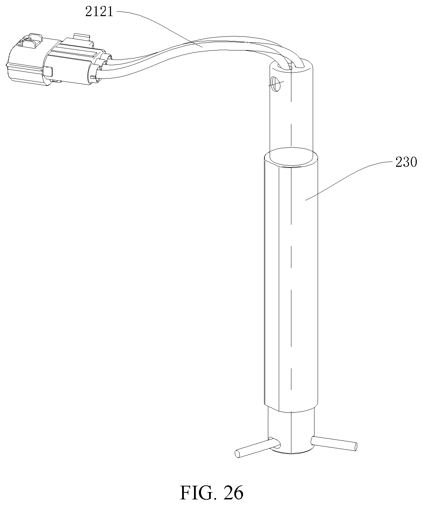

With reference to FIG. 20 to FIG. 26, a stator assembly 210 of an electromagnetic actuator 1000 according to an embodiment of this application includes a central rod 300, a core assembly 211, and a winding assembly 212.

The core assembly 211 is disposed on the central rod 300.

The winding assembly 212 is disposed on the core assembly 211, and the central rod 300 is provided with a wire-through channel 330 through which a connection wire 2121 of the winding assembly 212 passes.

The core assembly 211 is disposed on the central rod 300, and the winding assembly 212 is disposed on the core assembly 211, so that the core assembly 211 and the winding assembly 212 are supported by using the central rod 300, to improve location stability of the core assembly 211 and the winding assembly 212. In addition, the core assembly 211 and the winding assembly 212 can cooperate with a mover assembly 220, to ensure working performance of the electromagnetic actuator 1000.

It will be understood from the foregoing structure that, according to the stator assembly 210 of the electromagnetic actuator 1000 in this embodiment of this application, the central rod 300 is provided with the wire-through channel 330, and the connection wire 2121 of the winding assembly 212 passes through the wire-through channel 330, to lead out the connection wire 2121 of the winding assembly 212, thereby reducing difficulty of an electrical connection of the winding assembly 212. In addition, the connection wire 2121 may be protected by using the central rod 300, thereby prolonging service life of the connection wire 2121, and improving use security of the connection wire 2121.

It will be understood that, compared with the conventional technologies, in this application, the wire-through channel 330 is disposed for the connection wire 2121 of the winding assembly 212 to pass through, to reduce the difficulty of the electrical connection of the winding assembly 212, prolong service life of the connection wire 2121, and improve use security of the connection wire 2121.

In some embodiments, a plurality of core assemblies 211 are provided, and the plurality of core assemblies 211 are sequentially stacked in an axial direction of the central rod 300, to ensure working performance of the stator assembly 210.

In some embodiments, the wire-through channel 330 extends in the axial direction of the central rod 300, so that connection wires 2121 of winding assemblies 212 on the plurality of core assemblies 211 all can pass through the wire-through channel 330, to lead out the connection wires 2121 of the winding assemblies 212, thereby reducing difficulty of electrical connections of the winding assemblies 212.

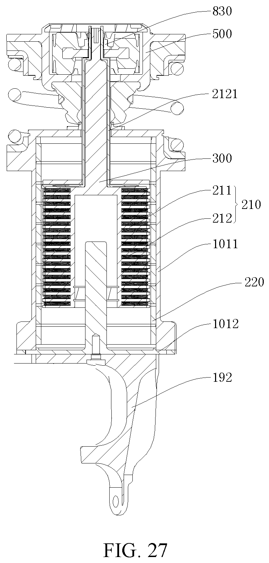

In some embodiments, with reference to FIG. 27 to FIG. 35, the winding assembly 212 has a first lead-out end 2018, and at least a partial structure of the first lead-out end 2018 is located between the core assembly 211 and a housing 100, to implement lead-out from an outer side of the winding assembly 212, thereby reducing difficulty of lead-out of the winding assembly 212 and difficulty of arrangement of the connection wire 2121.

In addition, through the foregoing arrangement, internal space of the core assembly 211 is also made available, thereby facilitating cooling design.

In some embodiments, the first lead-out end 2018 is connected to the connection wire 2121 to ensure working performance of the winding assembly 212.

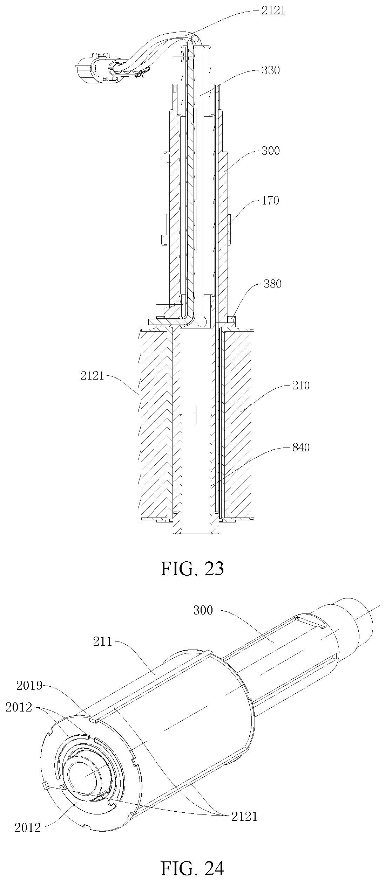

In some embodiments, as shown in FIG. 24, a first reinforcing rib 2012 is disposed on an outer peripheral wall of the core assembly 211, and a wire routing channel is disposed in the first reinforcing rib 2012. The wire routing channel is used to guide different phases of connection wires 2121 of the winding assembly 212 to the wire-through channel 330 of the central rod 300. Herein, this means the following: The wire routing channel is disposed on an inner side of the first reinforcing rib 2012, and the wire routing channel is used to facilitate lead-out of the connection wire 2121 of the winding assembly 212, thereby reducing the difficulty of the electrical connection of the winding assembly 212.

In addition, the first reinforcing rib 2012 is provided, so that difficulty in forming the wire routing channel can be reduced. The wire routing channel may further limit a location of the connection wire 2121, thereby improving location stability of the connection wire 2121.

In some embodiments, the first reinforcing rib 2012 projects toward an outer periphery of the core assembly 211 to form the wire routing channel on a side of the first reinforcing rib 2012 that faces an inner periphery of the core assembly 211.

In some embodiments, as shown in FIG. 24, a plurality of notches 2019 and several first reinforcing ribs 2012 that may constrain a lead-out direction are evenly distributed on a circumference of the core assembly 211, and different phases of connection wires 2121 of the winding assembly 212 exit from a specified notch 2019 along a wire routing channel therein.

In addition, according to a principle that in-phase connection wires in three phases of wires need to be connected together, in-phase connection wires 2121 of the winding assembly 212 exit from the same notch 2019. In this way, the in-phase connection wires 2121 may be connected together on an outer side of the core assembly 211 from top to bottom (as shown in FIG. 24), so that tool operation space is not limited, and a problem is easily visually discovered during subsequent maintenance, thereby reducing maintenance costs.

It will be noted that the lead-out direction is limited by the notch 2019. In addition, a cylindrical pin exists between the core assembly 211 and the central rod 300 to restrict rotation of the core assembly 211 around the central rod 300, so that the connection wire 2121 of the winding assembly 212 is relatively fixed, and therefore has a small location deviation and a reliable connection.

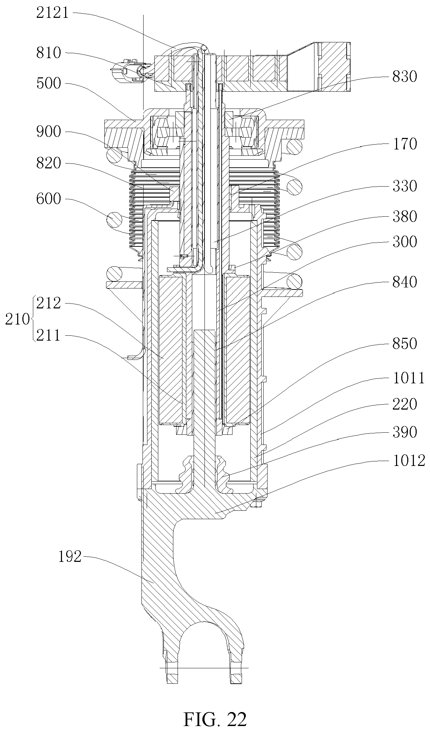

In some embodiments, with reference to FIG. 22, FIG. 23, FIG. 24, and FIG. 25, three connection wires 2121 respectively pass through three wire-through channels 330 on a lead-out apparatus 230, three outlets of the three wire-through channels 330 are evenly distributed in a circumferential direction, three wire outlets 311 are disposed on the central rod 300, and the three outlets of the wire-through channels 330, the three wire outlets 311, and three notches 2019 are in one-to-one correspondence. During assembly, the lead-out apparatus 230 is assembled on the central rod 300, and the three connection wires 2121 extend through the lead-out apparatus 230 and the wire outlets 311 to be connected to the winding assembly 212.

According to the foregoing arrangement, after exiting from the outer side of the core assembly 211, the connection wire 2121 passes into an inner side of the central rod 300, and passes through the wire-through channel 330 to reach an outer side of the housing 100, and a lead wire is fastened in the entire process. The wire-through channel 330 plays a role in fastening and protecting the connection wire 2121, to well resolve a problem of extrusion and scratch risks in the conventional technologies.

In some embodiments, as shown in FIG. 22, a first limiting member 380 is sleeved on an upper part of the central rod 300, and the first limiting member 380 fastens the connection wire 2121 together with an outlet of the central rod 300.

In some embodiments, the first limiting member 380 is made of a rubber material, and may cushion impact of a surrounding component on the connection wire 2121 in an extreme condition, thereby protecting the connection wire 2121 and ensuring reliability of the electrical system.

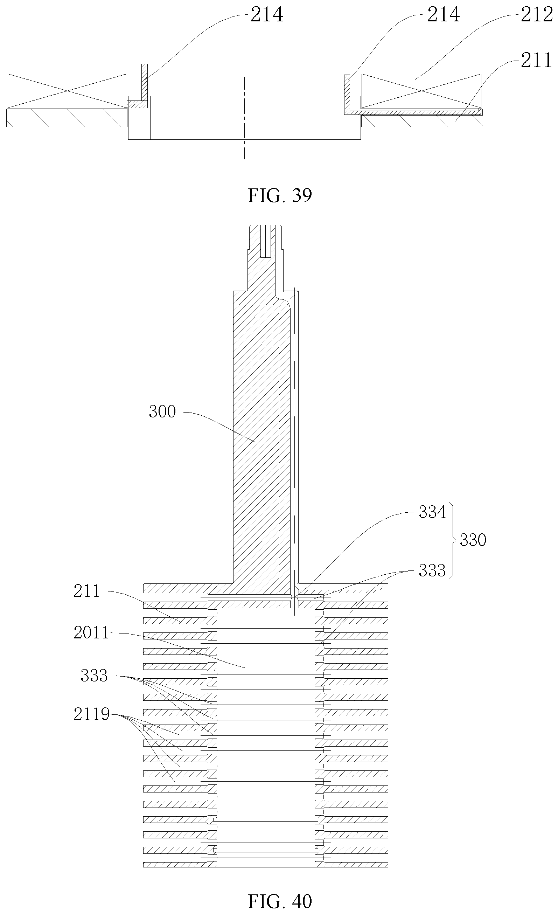

In some embodiments, as shown in FIG. 40, the wire-through channel 330 includes a radial hole 333 and an axial hole 334, and the radial hole 333 communicates with the axial hole 334. Herein, this means the following: The wire-through channel 330 includes the radial hole 333 extending in a radial direction of the electromagnetic actuator 1000 and the axial hole 334 extending in an axial direction of the electromagnetic actuator 1000, and the radial hole 333 communicates with the axial hole 334, so that the connection wire 2121 can effectively pass through the wire-through channel 330 and extend outward, thereby reducing difficulty of lead-out of the connection wire 2121.

In some embodiments, the connection wire 2121 passes through the axial hole 334 and the radial hole 333 to be connected to a second lead-out end 214 of the winding assembly 212, to connect the second lead-out end 214 and the connection wire 2121.

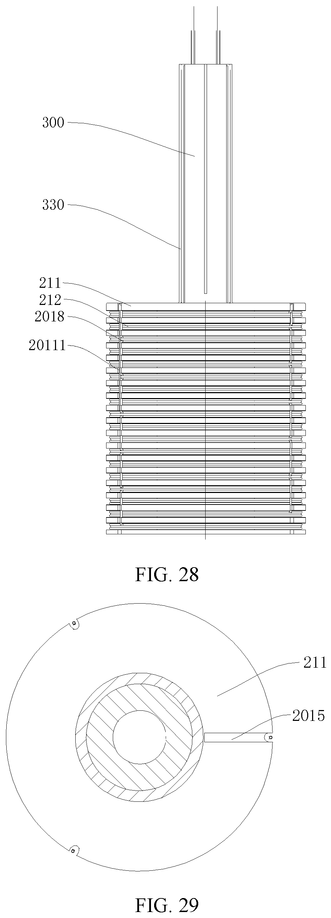

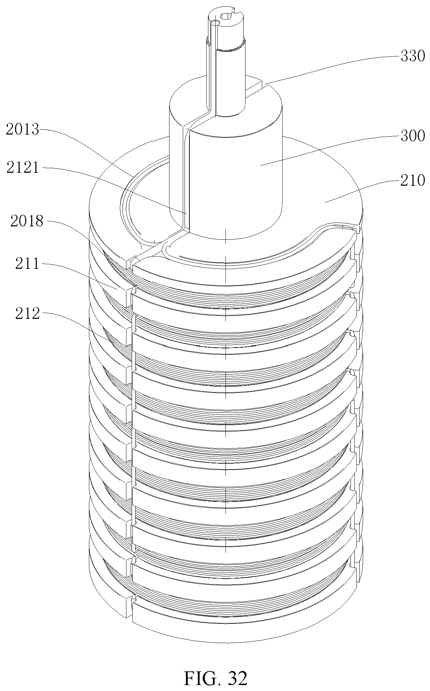

In some embodiments, with reference to FIG. 28 and FIG. 32, the wire-through channel 330 is formed on an outer wall of the central rod 300. In this way, the connection wire 2121 does not need to pass back and forth between the inside and the outside, and is perfectly attached to the outer wall of the central rod 300, thereby reducing difficulty in connecting the connection wire 2121.

In some embodiments, the connection wire 2121 may be fastened through potting or injection molding, or be covered with a protective housing, to enhance a degree of attachment between the connection wire 2121 and the central rod 300, which provides a convenient operation and sufficient operation space.

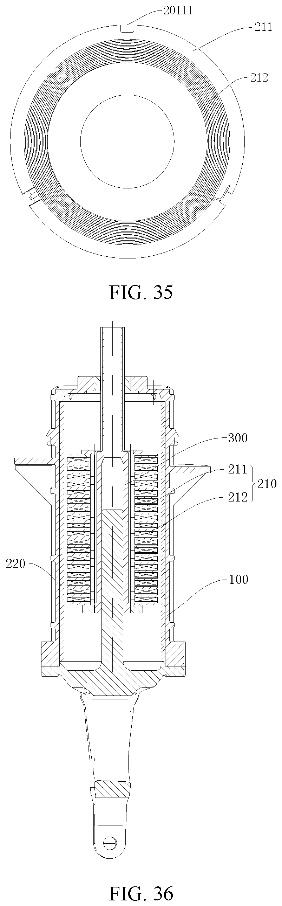

In some embodiments, with reference to FIG. 36 to FIG. 40, the winding assembly 212 has the second lead-out end 214, and at least a partial structure of the second lead-out end 214 is located between the core assembly 211 and the central rod 300, to implement lead-out from an inner side of the winding assembly 212, thereby reducing difficulty of lead-out of the winding assembly 212, reducing space occupied by the stator assembly 210, and reducing difficulty in forming the stator assembly 210.

In some embodiments, the second lead-out end 214 is connected to the connection wire 2121 to ensure working performance of the winding assembly 212.

It will be noted that, with reference to FIG. 27 to FIG. 35, the stator assembly 210 in this embodiment is applied to the electromagnetic actuator 1000, and the electromagnetic actuator 10000 belongs to a suspension system 10000 of a vehicle 20000. The electromagnetic actuator 1000 replaces a conventional vehicle shock absorber and is mounted at a location of the conventional shock absorber, and is mainly used to reduce vibration transmitted through a road surface and control energy flow, thereby improving overall vehicle comfort and energy utilization. Compared with the conventional shock absorber, the electromagnetic actuator 1000 has a complete linear motor structure that can perform linear motion, and replaces a hydraulic damping structure of the conventional shock absorber.

A lead-out structure is a linear motor portion in the electromagnetic actuator 1000. The linear motor is a motor in which the mover assembly 220 and the stator assembly 210 can perform linear displacement relative to each other, and includes a mover assembly and a stator assembly in a general sense of the motor.

In some embodiments, with reference to FIG. 27 to FIG. 35, the electromagnetic actuator 1000 in this embodiment includes an upper support 500, an assembly nut 830, a central rod 300, a connection wire 2121, a housing 100, a mover assembly 220, a stator assembly 210, a mounting frame 192, and the like. The upper support 500 is locked to the central rod 300 through the assembly nut 830. The connection wire 2121 includes three phases: A, B, and C. The connection wire 2121, the central rod 300, and the stator assembly 210 form a stator portion of the electromagnetic actuator 1000. The mover assembly 220 and the housing 100 form a mover portion of the electromagnetic actuator 1000. The mounting frame 192 plays a role in connecting the suspension system 10000.

In some embodiments, with reference to FIG. 28 and FIG. 29, the core assembly 211 has a tooth slot, and the winding assembly 212 is disposed in the tooth slot. A wire end lead-out groove 2015 is provided on a surface of each tooth slot, and is used for a wire end of the winding assembly 212 in each tooth slot to pass through to reach space between the core assembly 211 and the housing 100, so that at least a partial structure of the first lead-out end 2018 of the winding assembly 212 can be located between the core assembly 211 and the housing 100, to implement lead-out from the outer side of the winding assembly 212, thereby reducing difficulty of lead-out of the winding assembly 212 and an arrangement difficulty of the connection wire 2121.

In some embodiments, as shown in FIG. 28, a recess 20111 is provided on an outer surface of the core assembly 211 for cross-phase connection between winding assemblies 212.

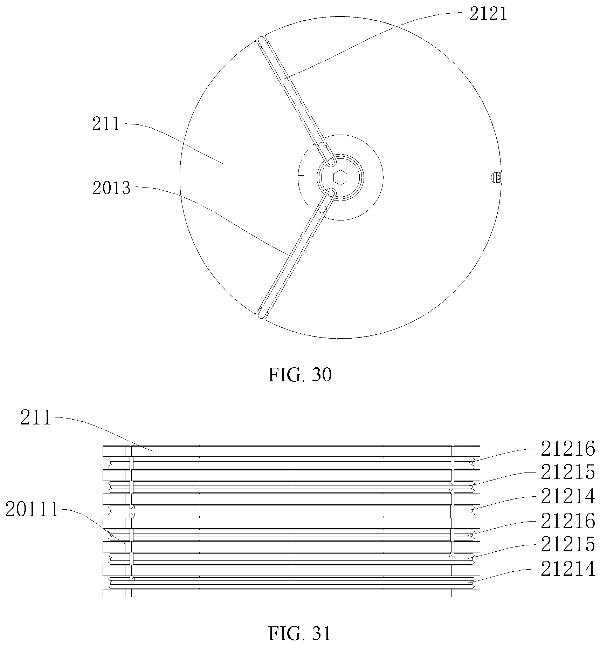

In some embodiments, as shown in FIG. 31, the winding assembly 212 includes a first-phase winding 21214, a second-phase winding 21215, and a third-phase winding 21216. First lead-out ends 2018 need to be connected to each other at one end between first-phase windings 21214, between second-phase windings 21215, and between second-phase windings 21216 to form a series structure. In this embodiment, the recess 20111 is provided on the outer surface of the core assembly 211, which facilitates passing through by the first lead-out ends 2018 between phases. In addition, the first lead-out ends 2018 need to be connected by using a process such as welding or crimping, and the recess 20111 can ensure that a region around the first lead-out ends 2018 is unobstructed during connection of the first lead-out ends 2018, thereby providing large operation space, reducing an operation difficulty, and facilitating mass production.

In some embodiments, as shown in FIG. 30, a wire arrangement groove 2013 is provided on a top of the core assembly 211. After wiring between the three phases of first lead-out ends 2018 is completed, the connection wires 2121 finally reach an upper surface of the core assembly 211, and the three phases of wires are directly embedded in the wire arrangement groove 2013 on the upper surface to ensure smooth wiring.

In some embodiments, a wire-through channel 330 is provided on the central rod 300, and the connection wire 2121 passes through the wire-through channel 330 to extend to the outside of the housing 100.

In some embodiments, with reference to FIG. 30 and FIG. 32, the wire arrangement groove 2013 may be of a straight-line type, or may be of a spiral type, or may be of a curved type. In addition, there may be one or more wire arrangement grooves 2013. A configuration in which a plurality of wire arrangement grooves 2013 merge into one wire arrangement groove 2013 and a configuration in which one wire arrangement groove 2013 branches into a plurality of wire arrangement grooves 2013 may both fall within the scope covered by this embodiment.

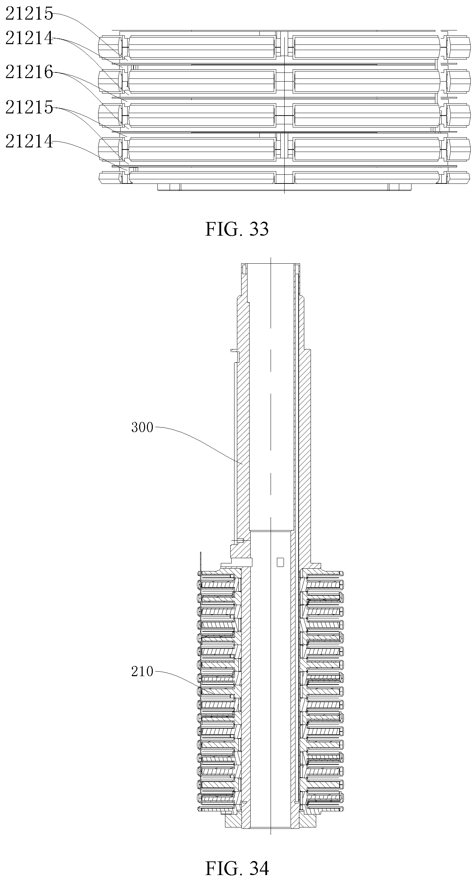

In addition, as shown in FIG. 33, an arrangement order of the first-phase winding 21214, the second-phase winding 21215, and the third-phase winding 21216 may vary arbitrarily, and a wiring operation is required for each of the three phases of windings.

In addition, as shown in FIG. 27, FIG. 34, and FIG. 35, the core assembly 211 and the central rod 300 may be integrated or may be separated from each other. The recess 20111 is provided on the outer surface of the core assembly 211, and the recess 20111 is used for cross-phase connection between winding assemblies 212.

In conclusion, in this embodiment, the connection wire 2121 is embedded in an outer wall of the core assembly 211, and does not interfere with the mover assembly 220. Similarly, the connection wire 2121 is also spaced apart from inner walls of the upper support 500 and the assembly nut 830, and therefore does not affect assembly of the upper support 500 and the central rod 300, and does not cause any interference issue. This facilitates lead maintenance of the winding assembly 212, provides sufficient operation space, and is friendly to arrangement of the connection wire 2121. In addition, the internal space of the core assembly 211 is made available, thereby facilitating cooling design.

In some embodiments, with reference to FIG. 36 to FIG. 40, the electromagnetic actuator 1000 in this embodiment includes a central rod 300, a core assembly 211, a winding assembly 212, a mover assembly 220, and a housing 100. The central rod 300, the core assembly 211, and the winding assembly 212 jointly form a stator portion of the electromagnetic actuator 1000, and the mover assembly 220 and the housing 100 jointly form a mover portion of the electromagnetic actuator 1000.

In some embodiments, the core assembly 211 is press-fitted or screwed on the central rod 300, the winding assembly 212 is wound or placed on the core assembly 211, and three phases of wires of the winding assembly 212 need to be led out of the core assembly 211 and led out from a top of the central rod 300 to facilitate connection to a motor controller.

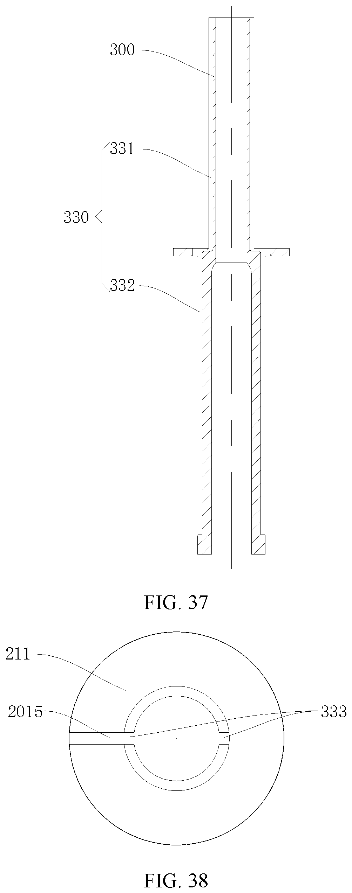

In some embodiments, with reference to FIG. 38 and FIG. 39, a wire end lead-out groove 2015 and a radial hole 333 are separately provided on the core assembly 211. An external wire end of the winding assembly 212 passes from an outermost edge of the core assembly 211 through the wire end lead-out groove 2015 back to the inside to reach the radial hole 333, and exit internally through the radial hole 333. An internal wire end of the winding assembly 212 may directly exit through the radial hole 333, so that at least a partial structure of the second lead-out end 214 is disposed between the core assembly 211 and the central rod 300.

It will be noted that, each core assembly 211 and each winding assembly 212 on the stator assembly 210 are led out in this configuration, and wiring between wire ends is performed according to a design of three-phases of wires.

It will be further noted that, compared with providing at least a partial structure of a lead-out end of the winding assembly 212 between the core assembly 211 and the housing 100, in this embodiment, space occupied is small, winding space of the winding assembly 212 is not affected, and a slot fill factor is greatly improved compared with that in an external lead-out configuration, so that more electromagnetic thrust can be obtained in same space, and performance of the electromagnetic actuator 1000 can be greatly improved to some extent.

In some embodiments, the wire end lead-out groove 2015 may be a straight groove or an oblique groove. There may be one or more wire end lead-out grooves 2015 based on a requirement. A plurality of wire end lead-out grooves 2015 are usually evenly distributed to obtain a better effect. A width of the wire end lead-out groove 2015 depends on a diameter of a wire material used by the electromagnetic actuator 1000. An opening shape of the wire end lead-out groove 2015 may be an arc opening, a square opening, or the like.

In some embodiments, a guide rod end lead-out groove 331 and a winding section lead-out groove 332 that are in communication with each other are separately provided in an axial direction of the central rod 300. Both the guide rod end lead-out groove 331 and the winding section lead-out groove 332 are provided on an outer wall surface of the central rod 300, second lead-out ends 214 of winding assemblies 212 are all fed into the winding section lead-out groove 332 to perform an inter-phase wiring operation, and finally, lead-out of a winding section is completed. The guide rod end lead-out groove 331 is provided on the central rod 300, so that the connection wire 2121 led out from the winding assembly 212 does not change an overall lead-out direction, and is directly embedded in the central rod 300. Therefore, a lead-out operation of the connection wire 2121 is convenient and rapid, natural routing of the connection wire 2121 is not changed, and the connection wire 2121 does not need to pass through internal space of the central rod 300 to lead out, so that natural lead-out states of three-phases of wires are remained, which causes small damage to the connection wire 2121, and effectively improves durability of the connection wire 2121. In addition, the internal space of the central rod 300 may be made available for cooling arrangement, thereby improving performance of the electromagnetic actuator 1000.

It will be noted that if a diameter of the connection wire 2121 used by the winding assembly 212 is relatively small, the winding section lead-out groove 332 may not be provided, and the connection wire 2121 is directly led out along an outer wall of the central rod 300.

In some embodiments, as shown in FIG. 40, when the central rod 300 is integrated with the core assembly 211, the core assembly 211 includes a plurality of placement grooves 2119 disposed at intervals in the axial direction of the central rod 300, and the winding assembly 212 is disposed in the plurality of placement grooves 2119, to implement a fitted connection between the winding assembly 212 and the core assembly 211, thereby facilitating formation of the stator assembly 210.

In some embodiments, as shown in FIG. 40, wire routing space 2011 is disposed in a middle portion of the core assembly 211, and a radial hole 333 communicating with the wire routing space 2011 is provided in each placement groove 2119, to implement internal lead-out of the winding assembly 212.

In conclusion, in this embodiment, a slot fill factor of the electromagnetic actuator 1000 can be effectively improved, thereby improving performance of the electromagnetic actuator 1000. In addition, the connection wire 2121 is embedded in a wall thickness of the central rod 300 and does not occupy additional space, and natural routing of the connection wire 2121 is not changed, which helps prolong service life of the connection wire 2121, and enables convenient and rapid operation.

The following describes an electromagnetic actuator 1000 according to embodiments of this application.

An electromagnetic actuator 1000 according to an embodiment of this application includes a housing 100, a mover assembly 220, and a stator assembly 210.

An accommodating cavity 130 is formed in the housing 100.

The mover assembly 220 is disposed in the accommodating cavity 130.

The stator assembly 210 is the foregoing stator assembly 210. A specific structure of the stator assembly 210 is not described herein again. The stator assembly 210 is disposed in the accommodating cavity 130, a partial structure of a central rod 300 extends out of the housing 100, and one of the mover assembly 220 and the stator assembly 210 is connected to the housing 100.

The mover assembly 220 and the stator assembly 210 are coupled, so that one of the mover assembly 220 and the stator assembly 210 moves along an axis with the housing 100.

It will be understood from the foregoing structure that, according to the electromagnetic actuator 1000 in this embodiment of this application, the foregoing stator assembly 210 is used to effectively reduce difficulty in assembling the electromagnetic actuator 1000, and ensure working performance of the electromagnetic actuator 1000.

In addition, a partial structure of the central rod 300 extends out of the housing 100, to implement a fixed connection between the central rod 300 and an external component, and reduce difficulty of a connection between the central rod 300 and the external component, thereby ensuring working performance of the electromagnetic actuator.

In conclusion, the stator assembly 210 is disposed on the central rod 300, the mover assembly 220 is disposed on the housing 100, and the mover assembly 210 and the stator assembly 220 are coupled, so that relative movement can be generated between the central rod 300 and the housing 100, thereby ensuring working performance of the electromagnetic actuator 1000.

In some embodiments, an end part of the electromagnetic actuator 1000 is provided with a quick replacement connector, which may implement quick plugging and unplugging between a connection wire 2121 and an electronic control member.

In some embodiments, with reference to FIG. 22, FIG. 23, and FIG. 26, a lead-out apparatus 230 is disposed in the central rod 300, and a wire-through channel 330 is disposed in the lead-out apparatus 230, so that the wire-through channel 330 is disposed in the central rod 300, and difficulty in forming the wire-through channel 330 is reduced.

It will be noted that an overall structure of the electromagnetic actuator 1000 in this embodiment is based on a conventional hydraulic damping shock absorber. An intermediate damper is replaced by a linear motor. According to structural composition of the electromagnetic actuator 1000, the electromagnetic actuator 1000 mainly includes the mover assembly 220 (a mover portion), the stator assembly 210 (a stator portion), and an upper support 500. The mover assembly 220 and the stator assembly 210 form the linear motor, and the connection wire 2121 of the stator assembly 210 is led to the outside of the housing 100 through the central rod 300.

In a specific example, the stator assembly 210 is a part of the stator portion, and the stator assembly is disposed on an inner side of the entire electromagnetic actuator 1000, and includes the connection wire 2121, the lead-out apparatus 230, a detection module 900, the central rod 300, a first limiting member 380, a core assembly 211, a winding assembly 212, a guide bearing 840, a limiting nut 850, a bearing 170, and an assembly nut 830. The connection wire 2121, the limiting nut 850, the guide bearing 840, the first limiting member 380, the lead-out apparatus 230, the bearing 170, and the assembly nut 830 are all assembled on the central rod 300, and form a central assembly together, which integrates a plurality of functions such as limiting, positioning, anti-rotation, heat dissipation, guiding, and leading out. The core assembly 211 and the winding assembly 212 form the stator assembly 210.

In some embodiments, both the core assembly 211 and the winding assembly 212 are circular. The stator assembly 210 is formed by stacking several core assemblies 211 and winding assemblies 212 in an alternating configuration of one layer of winding assembly 212 being stacked on one layer of core assembly 211, is sleeved on the central rod 300 to finally form a cylindrical shape, and is fastened on the central rod 300 by the limiting nut 850. Such a design facilitates manufacturing of the core assembly 211 and winding of the winding assembly 212. The detection module 900 is fastened to an assembly groove 950 of the central rod 300, to precisely position a relative location between the mover portion and the stator portion, thereby achieving accurate control. The connection wire 2121 is fastened on the central rod 300 through the lead-out apparatus 230.

In this embodiment, the mover portion of the electromagnetic actuator 1000 is disposed on the outer side of the entire structure, and includes: the bearing 170, the housing 100, the mover assembly 220, a second limiting member 390, a guide rod 400, and a mounting frame 192. The mounting frame 192 is assembled on a vehicle wheel end and is connected to the housing 100 through several bolts, to jointly form an internal closed running environment of the electromagnetic actuator 1000. The guide rod 400 plays a guiding role. The second limiting member 390 is sleeved on the guide rod 400, and can cushion impact of the mover assembly 220 on the stator assembly 210 in an extreme condition, to well protect the stator assembly 210. Mover assemblies 220 are evenly distributed on an inner side of the housing 100, and are configured to provide a fixed magnetic field. The housing 100 mainly plays a protection role, and local protruding features (such as a mounting seat 191 and a second reinforcing rib 195) of the housing 100 mainly plays a role in supporting a spring 600 and provides overall heat dissipation.

According to the foregoing arrangement, during movement of the electromagnetic actuator 1000, the mover assembly 220 performs axial upward/downward movement with the central rod 300 along a central line by using the bearing 170 and the guide bearing 840 with assistance of the housing 100 and the mounting frame 192. The entire housing 100 is sealed inside, the housing 100 is moving, and the winding assembly 212 needs to reach the outer side of the housing 100 through the central rod 300 during lead-out, while an outer side of an upper end of the central rod 300 moves relative to the bearing 170, an inner side of a lower end of the central rod 300 is embedded with the guide bearing 840, and the guide bearing 840 moves relative to the mounting frame 192. Therefore, as shown in FIG. 24, the winding assembly 212 is sleeved on a lower part of the central rod 300 and the winding assembly 212 is led out from the outer side, to be spaced apart from a region below the central rod 300 in which the bearing 170 moves relative to the mounting frame 192. The connection wire 2121 passes through the central rod 300 and reaches the outer side of the housing 100 through the lead-out apparatus 230, to be spaced apart from a region above the central rod 300 in which the central rod 300 moves relative to the bearing 170. This designs prevents the connection wire 2121 from being extruded or scratched during running.

In some embodiments, a tower top is disposed on a top of the electromagnetic actuator 1000, and the tower top includes an upper support 500, the assembly nut 830, the spring 600, a dust cover 820, and a cooling structure 810. The electromagnetic actuator 1000 assembles the electromagnetic actuator 1000 to the tower top through fitting between a first threaded section 831 on the central rod 300 and the assembly nut 830. The tower top is fastened on a vehicle body. The central rod 300 passes through the upper support 500. The connection wire 2121 also passes through the vehicle body to reach a front compartment. A connector is rapidly replaced to cooperate with an electronic control terminal, to connect to an electronic control unit of a motor, thereby finally controlling an electromagnetic shock absorber.

The spring 600 may cushion impact of a road surface. The dust cover 820 may prevent dust from entering the inside of the electromagnetic actuator 1000. The upper support 500 cooperates with the vehicle body to fasten one end of the electromagnetic actuator 1000 on the vehicle body. The cooling structure 810 may perform heat exchange circulation with coolant in the central rod 300, to reduce a temperature of the coolant.

In some embodiments, after the winding assembly 212 and the core composition 211 are assembled to the central rod 300, the limiting nut 850 cooperates with a second threaded section 851 to screw-fit the core assembly 211 to the central rod 300. Such a design ensures that the entire core assembly 211 is fastened to the central rod 300 in a designed state.

In conclusion, a lead-out structure of the electromagnetic actuator 1000 in this embodiment uses a relative relationship between peripheral components to intelligently resolve a problem of difficult lead-out, and has advantages of safety, reliability, convenience of assembly and disassembly, a compact space design, and the like.

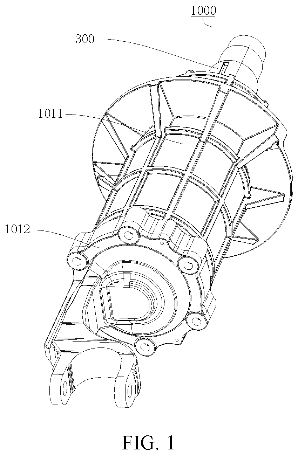

In some embodiments, with reference to FIG. 1, FIG. 2, and FIG. 3, the housing 100 includes a plurality of sub-housings 101. The plurality of sub-housings 101 are connected to define the accommodating cavity 130.

It will be noted that, in the description of this application, unless otherwise stated, "a plurality of" means two or more. In other words, the housing 100 includes at least two sub-housings 101, and the at least two sub-housings 101 are connected to define the accommodating cavity 130. In this way, difficulty in forming the accommodating cavity 130 can be reduced while difficulty in assembling the housing 100 is reduced, thereby improving maintainability.

With reference to FIG. 1 to FIG. 4, the mover assembly 220 is disposed in the accommodating cavity 130, the stator assembly 210 is disposed in the accommodating cavity 130, and one of the mover assembly 220 and the stator assembly 210 is connected to the housing 100. In other words, both the mover assembly 220 and the stator assembly 210 are disposed in the accommodating cavity 130. In one aspect, the housing 100 may be used to support one of the mover assembly 220 and the stator assembly 210, to improve location stability of one of the mover assembly 220 and the stator assembly 210, thereby ensuring working performance of the mover assembly 220 and the stator assembly 210 to some extent. In another aspect, the housing 100 may also be used to protect the mover assembly 220 and the stator assembly 210, to prolong service life of the mover assembly 220 and the stator assembly 210, thereby reducing use costs of the mover assembly 220 and the stator assembly 210.

It will be understood that one of the mover assembly 220 and the stator assembly 210 is connected to the housing 100 means that one of the mover assembly 220 and the stator assembly 210 is fixedly connected to the housing 100.

In addition, the housing 100 is disposed to include a plurality of sub-housings 101, so that the housing 100 includes a plurality of separate parts. In this way, when the mover assembly 220 and the stator assembly 210 are assembled, the mover assembly 220 and the stator assembly 210 may be first disposed between the plurality of sub-housings 101, and then the plurality of sub-housings 101 are connected, to reduce difficulty in assembling the mover assembly 220 and the stator assembly 210, and improve an assembling effect. In addition, impact of the mover assembly 220 and the stator assembly 210 on the housing 100 may be avoided to some extent during assembly, to avoid damaging the mover assembly 220 and the stator assembly 210, thereby prolonging service life of the mover assembly 220 and the stator assembly 210, and ensuring working performance of the mover assembly 220 and the stator assembly 210.

In addition, according to the foregoing arrangement, the housing 100 may be opened directly when the mover assembly 220 and the stator assembly 210 need to be maintained and repaired, to reduce difficulty in maintaining the mover assembly 220 and the stator assembly 210 during use.

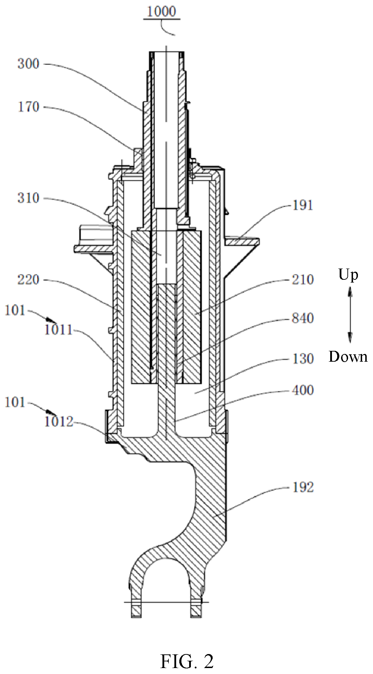

The mover assembly 220 and the stator assembly 210 are coupled, so that the other of the mover assembly 220 and the stator assembly 210 moves along the axis with the housing 100, thereby driving components that are in the mover assembly 220 and the stator assembly 210 and that are connected to the housing 100 to move along the axis. The axis described herein will be understood as a straight line that extends in an axial direction of the electromagnetic actuator 1000, that is, a straight line that extends in an up-down direction in FIG. 2.

In other words, one of the mover assembly 220 and the stator assembly 210 is connected to the housing 100. When the mover assembly 220 and the stator assembly 210 form a coupled fit, one of the mover assembly 220 and the stator assembly 210 moves along the axis with the housing 100, thereby implementing movement of the housing 100, and ensuring working performance of the electromagnetic actuator 1000.

In some embodiments, one of the mover assembly 220 and the stator assembly 210 is a permanent magnet or an electromagnet, and the other is an electromagnetic coil. The electromagnetic coil cooperates with the permanent magnet, so that the mover assembly 220 and the stator assembly 210 can form a coupled fit, thereby ensuring working performance of the electromagnetic actuator 1000. In other words, the mover assembly 220 is a first excitation assembly, and the stator assembly 210 is a second excitation assembly.

It will be understood from the foregoing structure that, according to the electromagnetic actuator 1000 in this embodiment of this application, the housing 100 is disposed to include a plurality of sub-housings 101, and the plurality of sub-housings 101 are connected to define the accommodating cavity 130, so that difficulty in assembling and maintaining the mover assembly 220 and the stator assembly 210 can be reduced while difficulty in assembling the housing 100 is reduced. In addition, the mover assembly 220 and the stator assembly 210 are prevented from colliding with the housing 100 during assembly, thereby ensuring working performance of the mover assembly 220 and the stator assembly 210.

It will be understood that, compared with the conventional technologies, in this application, the housing 100 is disposed to include a plurality of sub-housings 101, thereby reducing difficulty in assembling the mover assembly 220 and the stator assembly 210 disposed in the accommodating cavity 130. In addition, the plurality of sub-housings 101 further help reduce difficulty in assembling the housing 100, so that the mover assembly 220 and the stator assembly 210 can be effectively assembled in the housing 100, and the mover assembly 220 and the stator assembly 210 are prevented from colliding with the housing 100 to some extent during assembly, thereby ensuring working performance of the mover assembly 220 and the stator assembly 210.

In some embodiments, with reference to FIG. 1 and FIG. 2, the plurality of sub-housings 101 are arranged along the axis. In other words, the plurality of sub-housings 101 are arranged in the axial direction of the electromagnetic actuator 1000. In this way, the housing 100 may be formed as a plurality of structures arranged in the axial direction of the electromagnetic actuator 1000, which reduces difficulty in forming the housing 100, and reduces difficulty in assembling the mover assembly 220 and the stator assembly 210 that are disposed in the housing 100, thereby improving assembly efficiency of the electromagnetic actuator 1000.

In some embodiments, as shown in FIG. 2, FIG. 3, and FIG. 4, the plurality of sub-housings 101 include a cylinder 1011 with at least one end open and at least one end cover 1012. The end cover 1012 cooperates with the cylinder 1011, to form the housing 100, thereby reducing difficulty in forming the housing 100.

At least one end of the cylinder 1011 is open, to help assemble the mover assembly 220 and the stator assembly 210 in the cylinder 1011.

In addition, both inner surface precision of the cylinder 1011 and surface precision of the mover assembly 220 need to be strictly controlled, to ensure a uniform air gap between the mover assembly 220 and the stator assembly 210, thereby ensuring working performance of the electromagnetic actuator 1000.

In some embodiments, as shown in FIG. 2, a mounting frame 192 is integrated at a lower end of the end cover 1012, and the mounting frame 192 is adapted to be connected to an axle, thereby simplifying a connection configuration between the electromagnetic actuator 1000 and the axle, improving structural reliability, and reducing assembling steps and assembling time of the electromagnetic actuator 1000.

The mounting frame 192 described herein will be understood as a lower control arm of the electromagnetic actuator 1000.

In some embodiments, as shown in FIG. 2, FIG. 3, and FIG. 4, the end cover 1012 is disposed at an open location of the cylinder 1011, to ensure sealing of the accommodating cavity 130.

In some embodiments, as shown in FIG. 2, FIG. 3, and FIG. 4, the end cover 1012 fits with the cylinder 1011 through insertion. In this way, when the end cover 1012 is disposed at the open location of the cylinder 1011, a fixed connection between the end cover 1012 and the cylinder 1011 may be further implemented, thereby ensuring structural stability of the housing 100, and reducing difficulty in forming the housing 100.

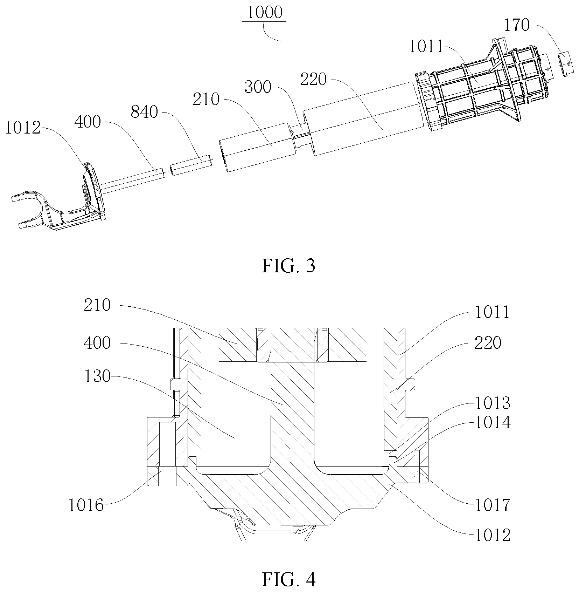

In some embodiments, as shown in FIG. 4, one of a top wall of the end cover 1012 and a lower end of the cylinder 1011 is provided with a slot 1013, the other is provided with an extension portion 1014, and the extension portion 1014 extends into the slot 1013, so that the end cover 1012 fits with the cylinder 1011 through insertion.

In some embodiments, as shown in FIG. 4, the end cover 1012 is connected to the cylinder 1011 through a bolt 1016, to implement a fixed connection between the end cover 1012 and the cylinder 1011, and ensure connection strength between the end cover 1012 and the cylinder 1011. In addition, the end cover 1012 and the cylinder 1011 form a detachable connection, thereby ensuring structural stability and working performance of the housing 100.

In some embodiments, as shown in FIG. 4, the end cover 1012 and the cylinder 1011 are positioned by using a positioning pin 1017, to position a mounting direction of the end cover 1012, prevent incorrect assembly, and reduce difficulty in connecting the end cover 1012 and the cylinder 1011.

In some embodiments, an end cover connecting boss protruding outward in a radial direction is disposed on an outer peripheral wall of the end cover 1012, a corresponding cylinder connecting boss is disposed on the cylinder 1011, a connecting hole is provided on each of the end cover connecting boss and the cylinder connecting boss, and a fastener or a bolt extends through the connecting hole, to fixedly connect the end cover 1012 and the cylinder 1011. The connection is implemented through the connecting boss, which can not only reinforce a chamber between the end cover 1012 and the cylinder 1011, but also improve connection stability.

It will be noted that specifications and quantities of bolts 1016 and positioning pins 1017 may be properly designed based on an actual mechanical strength requirement.

In some embodiments, as shown in FIG. 2, FIG. 3, and FIG. 4, the guide rod 400 is disposed on the end cover 1012, and the guide rod 400 is in a movement fit with the other of the mover assembly 220 and the stator assembly 210 to guide movement directions of the housing 100 and one of the mover assembly 220 and the stator assembly 210. In other words, one of the mover assembly 220 and the stator assembly 210 is fixedly connected to the housing 100, and the other of the mover assembly 220 and the stator assembly 210 is in a movement fit with the guide rod 400, to avoid an offset of the housing 100 during movement, that is, ensure that the housing 100 can move in a predetermined direction, thereby ensuring accuracy of movement of the housing 100.

According to the foregoing arrangement, when the electromagnetic actuator 1000 is applied to a vehicle 20000, a vehicle wheel 2000 can move in a predetermined direction, thereby ensuring smoothness of the vehicle 20000 during traveling.

In some embodiments, as shown in FIG. 2, FIG. 3, and FIG. 4, the guide bearing 840 is disposed between the guide rod 400 and the other of the mover assembly 220 and the stator assembly 210.

In some embodiments, the mover assembly 220 is fixedly connected to the housing 100, the guide rod 400 is in a movement fit with the stator assembly 210 to guide a movement direction of the housing 100. Both perpendicularity and concentricity of a lower end of the stator assembly 210 are determined by the guide rod 400 and the guide bearing 840.

In some embodiments, as shown in FIG. 2, an upper end of the cylinder 1011 is provided with a bearing mounting hole for assembling the bearing 170. The bearing 170 plays a role in positioning an upper end of the stator assembly 210. Both perpendicularity and concentricity of the upper end of the stator assembly 210 are determined by a top surface of the cylinder 1011 and the bearing 170.

In conclusion, a main structure of the electromagnetic actuator 1000 in this embodiment includes the bearing 170, the cylinder 1011, the mover assembly 220, the stator assembly 210, the guide bearing 840, and the end cover 1012. The mover assembly 220 is attached inside the cylinder 1011. The bearing 170, the cylinder 1011, the end cover 1012, and the mover assembly 220 form a mover portion of the electromagnetic actuator 1000. The stator assembly 210 includes a coil winding inside, which generates a moving magnetic field when a three-phase current is applied. The magnetic field acts on the mover portion, and an interaction force is generated between the stator assembly 210 and the mover assembly 220, to cause the housing 100 to move upward and downward. Finally, the electromagnetic actuator 1000 implements linear motion, and the linear motion of the housing 100 is controlled by adjusting a size and a direction of the three-phase current, to achieve an actually required moving state. In addition, in this embodiment, a structure between the end cover 1012 and the cylinder 1011 is properly designed, to resolve problems of mounting of the mover assembly 220 and the stator assembly 210, assembly of the mounting frame 192, and movement and positioning of the housing 100.

In a specific example, when the electromagnetic actuator 1000 is assembled, in a first step, the mover assembly 220 is mounted from a bottom of the cylinder 1011 to an inner surface of the cylinder 1011; in a second step, the bearing 170 is assembled to a top surface of the cylinder 1011; and in a third step, the guide bearing 840 is placed into a mounting hole on a lower end surface of the stator assembly 210. Then, the stator assembly 210 is mounted from the bottom of the cylinder 1011, and the upper end of the stator assembly 210 is inserted into the bearing 170. Finally, the end cover 1012 is mounted upward from the lower end of the cylinder 1011, the guide rod 400 is inserted into the guide bearing 840, the extension portion 1014 is inserted into the slot 1013, and the end cover 1012 and the cylinder 1011 are connected through the bolt 1016 and the positioning pin 1017. The housing 100 is pushed and pulled to check whether movement of the housing 100 is smooth. If the movement is not smooth, it is checked whether the guide rod 400 is properly assembled, whether machined dimensions of the components exceed tolerances, and finally whether the electromagnetic actuator 1000 moves normally when being powered on.

It will be noted that, according to the electromagnetic actuator 1000 in this embodiment, a structure in which the cylinder 1011 and the end cover 1012 are separately designed is used to facilitate mounting of the stator assembly 210 and the mover assembly 220. The end cover 1012, the guide rod 400, and the mounting frame 192 are integrally designed to simplify a connection configuration between components of the electromagnetic actuator 1000, reduce assembly steps and assembly time, improve structural reliability, and reduce a weight. The guide rod 400 is integrated into the end cover 1012, and the extension portion 1014 is designed on a top surface of the end cover 1012 to fit with an inner surface of the cylinder 1011, so that it can be ensured that the guide rod 400 overlaps a center of the cylinder 1011, thereby ensuring a uniform air gap between the stator assembly 210 and the mover assembly 220. The positioning pin 1017 is added between the end cover 1012 and the cylinder 1011 to position a mounting direction of the end cover 1012, thereby preventing incorrect assembly.

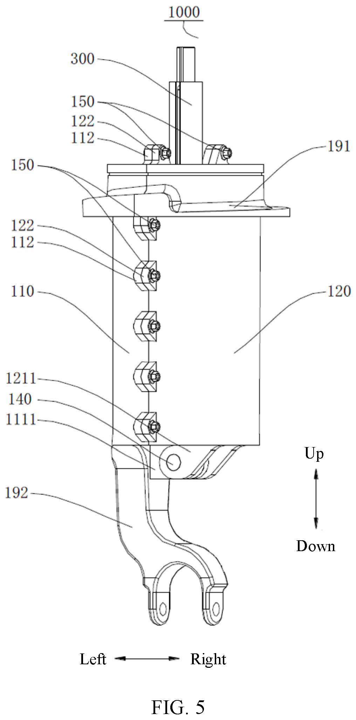

In some embodiments, with reference to FIG. 5, FIG. 6, and FIG. 8, the plurality of sub-housings 101 are arranged in a circumferential direction, and the circumferential direction is approximately perpendicular to the axis. In other words, the plurality of sub-housings 101 are not limited to being arranged along the axis of the electromagnetic actuator 1000, and may alternatively be arranged in the circumferential direction of the electromagnetic actuator 1000. This may also reduce difficulty in assembling the housing 100, and reduce difficulty in assembling and maintaining the mover assembly 220 and the stator assembly 210, so that the mover assembly 220 and the stator assembly 210 are prevented from colliding with the housing 100 during assembly, thereby ensuring working performance of the mover assembly 220 and the stator assembly 210.

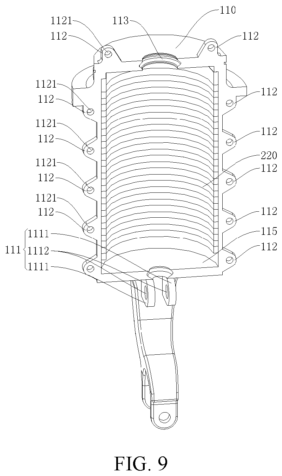

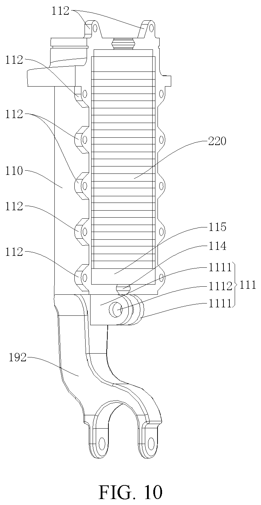

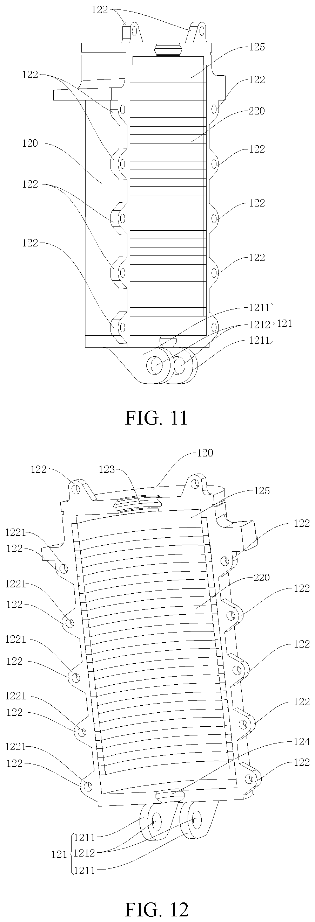

In some embodiments, with reference to FIG. 9, FIG. 10, FIG. 11, and FIG. 12, the plurality of sub-housings 101 include a first sub-housing 110 and a second sub-housing 120. A first cavity 115 is formed in the first sub-housing 110, and a second cavity 125 is formed in the second sub-housing 120. The first sub-housing 110 and the second sub-housing 120 are disposed opposite to each other, so that the first cavity 115 and the second cavity 125 enclose to form the accommodating cavity 130. Therefore, difficulty in forming the accommodating cavity 130 is reduced, and it is convenient to dispose the mover assembly 220 and the stator assembly 210 in the accommodating cavity 130.

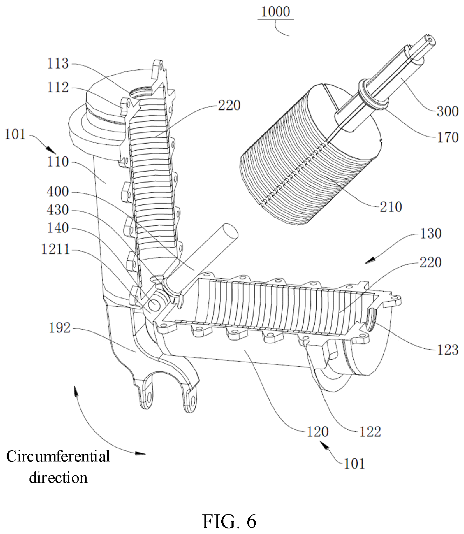

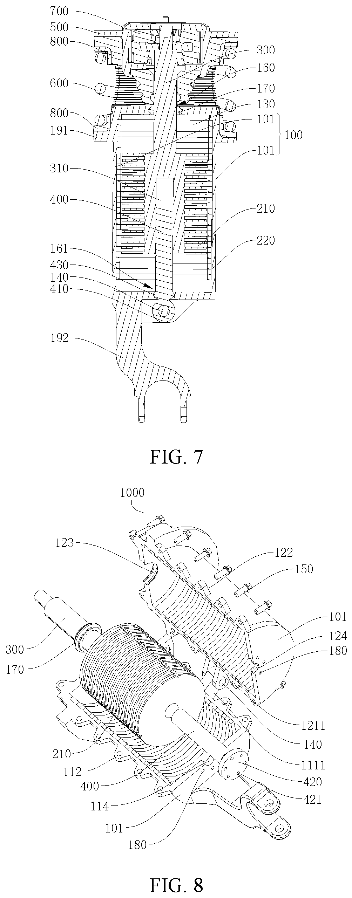

In some embodiments, as shown in FIG. 6 and FIG. 8, the first sub-housing 110 and the second sub-housing 120 are rotatably connected. Herein, this means the following: The first sub-housing 110 and the second sub-housing 120 are not only connected, but also can rotate relative to each other. In this way, in a process of assembling the first sub-housing 110 and the second sub-housing 120, the first sub-housing 110 and the second sub-housing 120 may be first rotatably connected, and after the first sub-housing 110 and the second sub-housing 120 are properly connected, at least one of the first sub-housing 110 and the second sub-housing 120 is rotated to form the housing 100, thereby reducing difficulty in assembling the housing 100.

In other words, the housing 100 in this embodiment is separated into two parts (the first sub-housing 110 and the second sub-housing 120) in a circumferential direction of the housing 100, and the two parts are rotatably connected. In this way, the first sub-housing 110 and the second sub-housing 120 can rotate around a rotating connection point to open or close the housing 100, thereby reducing difficulty in opening and closing the housing 100.

When the first sub-housing 110 and the second sub-housing 120 rotate to completely open the inside of the housing 100, in one aspect, this may facilitate assembly of the mover assembly 220 and the stator assembly 210, and in another aspect, this may further facilitate maintenance of the mover assembly 220 and the stator assembly 210. In addition, this may further prevent the mover assembly 220 and the stator assembly 210 from colliding with the housing 100 to some extent during assembly. When the first sub-housing 110 and the second sub-housing 120 rotate to completely close the inside of the housing 100, the housing 100 may be used to support and protect the mover assembly 220 and the stator assembly 210.

It will be noted that, when the housing 100 is formed as a cylindrical housing, the housing 100 may be separated into the first sub-housing 110 and the second sub-housing 120 in a radial direction of the housing 100 through the foregoing arrangement, to reduce difficulty in assembling the housing 100, and reduce difficulty in fitting between the housing 100 and each of the mover assembly 220 and the stator assembly 210.

In some embodiments, with reference to FIG. 9, FIG. 10, FIG. 11, and FIG. 12, the first sub-housing 110 is provided with a first connecting portion 111 protruding from the first sub-housing 110, the second sub-housing 120 is provided with a second connecting portion 121 protruding from the second sub-housing 120, and the first connecting portion 111 and the second connecting portion 121 are rotatably connected. Herein, this means the following: The first connecting portion 111 is disposed on the first sub-housing 110, and the first connecting portion 111 protrudes from the first sub-housing 110. The second connecting portion 121 is disposed on the second sub-housing 120, and the second connecting portion 121 protrudes from the second sub-housing 120. This helps implement a rotational connection between the first connecting portion 111 and the second connecting portion 121, thereby reducing difficulty in connecting the first connecting portion 111 and the second connecting portion 121.

In addition, after the first connecting portion 111 and the second connecting portion 121 are rotatably connected, the first sub-housing 110 and the second sub-housing 120 can be rotatably connected. In this way, in a process of assembling the second sub-housing 120 and the first sub-housing 110, the second sub-housing 120 and the first sub-housing 110 may be first rotatably connected, and after the second sub-housing 120 and the first sub-housing 110 are properly connected, at least one of the second sub-housing 120 and the first sub-housing 110 is rotated to form the housing 100, thereby reducing difficulty in assembling the housing 100.

In some embodiments, as shown in FIG. 5 and FIG. 6, the electromagnetic actuator 1000 further includes a rotating shaft 140. A shaft hole is provided on each of the first sub-housing 110 and the second sub-housing 120. The rotating shaft 140 is disposed in the shaft hole, so that the first sub-housing 110 and the second sub-housing 120 move relative to each other. Therefore, the first sub-housing 110 and the second sub-housing 120 are rotatably connected, and difficulty in connecting the first sub-housing 110 and the second sub-housing 120 is reduced.

In some embodiments, as shown in FIG. 5 to FIG. 12, the first connecting portion 111 includes a plurality of first connecting lugs 1111, and the plurality of first connecting lugs 1111 are disposed at intervals. The second connecting portion 121 includes a plurality of second connecting lugs 1211, and the plurality of second connecting lugs 1211 are disposed at intervals. The plurality of first connecting lugs 1111 are staggered from the plurality of second connecting lugs 1211. A first connecting hole 1112 is provided on the first connecting lug 1111, a second connecting hole 1212 is provided on the second connecting lug 1211, and the rotating shaft 140 is configured to extend through a plurality of first connecting holes 1112 and a plurality of second connecting holes 1212, so that the rotating shaft 140 is used to implement a rotational connection between the first connecting lugs 1111 and the second connecting lugs 1211, that is, implement a rotational connection between the first sub-housing 110 and the second sub-housing 120.

It will be noted that, the foregoing staggered arrangement will be understood as follows: In a left-right direction shown in FIG. 5, the first connecting lugs 1111 are not aligned with the second connecting lugs 1211, so that the plurality of first connecting lugs 1111 are staggered from the plurality of second connecting lugs 1211. In this way, after the first sub-housing 110 and the second sub-housing 120 are rotatably mated, the first connecting lugs 1111 are aligned with the second connecting lugs 1211 in a front-back direction of the housing 100. The front-back direction described herein intersects with an up-down direction and the left-right direction in FIG. 5, so that the rotating shaft 140 can simultaneously extend through the plurality of first connecting lugs 1111 and the plurality of second connecting lugs 1211, to use the rotating shaft 140 to implement a connection between the plurality of first connecting lugs 1111 and the plurality of second connecting lugs 1211, that is, implement a rotational connection between the first connecting portion 111 and the second connecting portion 121.

The left-right direction shown in FIG. 5 will also be understood as a mating direction of the first sub-housing 110 and the second sub-housing 120. In other words, in a process of mating the first sub-housing 110 and the second sub-housing 120, the plurality of first connecting lugs 1111 are staggered from the plurality of second connecting lugs 1211, so that after the process of mating the first sub-housing 110 and the second sub-housing 120, the first connecting lugs 1111 are aligned with the second connecting lugs 1211 in the front-back direction of the housing 100. It will be understood that in this case, axial holes on the first sub-housing 110 and the second sub-housing 120 are aligned with each other in the front-back direction.

In conclusion, the housing 100 in this embodiment is separated into two parts in the circumferential direction of the housing 100, and the first sub-housing 110 and the second sub-housing 120 are connected through fitting between the rotating shaft 140, the first connecting portion 111, and the second connecting portion 121, so that the first sub-housing 110 and the second sub-housing 120 can rotate around the rotating shaft 140 to open or close the housing 100, and the inside of the housing 100 can be completely opened. This facilitates positioning, mounting, fastening, and maintenance of the mover assembly 220 and the stator assembly 210 in the housing 100, and compared with providing an opening at an end part of the housing 100, this may further prevent the mover assembly 220 and the stator assembly 210 from colliding with the housing 100 during assembly.

In some embodiments, as shown in FIG. 6, in an axial direction of the housing 100, an end part of the first sub-housing 110 is rotatably connected to an end part of the second sub-housing 120. In other words, an axial end of the first sub-housing 110 is rotatably connected to an axial end of the second sub-housing 120, to implement a rotational fit between the first sub-housing 110 and the second sub-housing 120, thereby reducing difficulty in assembling the first sub-housing 110 and the second sub-housing 120.

In some embodiments, as shown in FIG. 9, FIG. 10, FIG. 11, and FIG. 12, the first connecting portion 111 is disposed at the axial end of the first sub-housing 110, and the second connecting portion 121 is disposed at the axial end of the second sub-housing 120. In this way, after the first connecting portion 111 and the second connecting portion 121 are rotatably connected, a rotational fit between the first sub-housing 110 and the second sub-housing 120 can be implemented, and the end part of the first sub-housing 110 is rotatably connected to the end part of the second sub-housing 120.

According to the foregoing arrangement, in a process of assembling the housing 100, one end of the first sub-housing 110 may be first rotatably connected to one end of the second sub-housing 120, after the two ends are properly connected, the mover assembly 220 and the stator assembly 210 are assembled between the first sub-housing 110 and the second sub-housing 120 (as shown in FIG. 6), and then the other end of the first sub-housing 110 and the other end of the second sub-housing 120 are driven to rotate toward each other, to implement a fitting connection between the first sub-housing 110 and the second sub-housing 120.

In some other embodiments, as shown in FIG. 8, in the circumferential direction of the housing 100, one side of the first sub-housing 110 is rotatably connected to one side of the second sub-housing 120. In other words, it is not limited that the end part of the first sub-housing 110 is rotatably connected to the end part of the second sub-housing 120, and one side of the first sub-housing 110 may alternatively be rotatably connected to one side of the second sub-housing 120 in the circumferential direction of the housing 100. Herein, a rotational fit between the first sub-housing 110 and the second sub-housing 120 may also be implemented, thereby reducing difficulty in assembling the first sub-housing 110 and the second sub-housing 120.

In some embodiments, as shown in FIG. 8, the first connecting portion 111 is disposed on a side of the first sub-housing 110 in the circumferential direction, and the second connecting portion 121 is disposed on a side of the second sub-housing 120 in the circumferential direction. In this way, after the first connecting portion 111 and the second connecting portion 121 are rotatably connected, a rotational fit between the first sub-housing 110 and the second sub-housing 120 can be implemented, and one side of the first sub-housing 110 is rotatably connected to one side of the second sub-housing 120.

According to the foregoing arrangement, as shown in FIG. 8, in a process of assembling the housing 100, one side of the first sub-housing 110 in the circumferential direction may be first rotatably connected to one side of the second sub-housing 120 in the circumferential direction, and after the two sides are properly connected, the mover assembly 220 and the stator assembly 210 are assembled between the first sub-housing 110 and the second sub-housing 120, and then the other side of the first sub-housing 110 in the circumferential direction and the other side of the second sub-housing 120 in the circumferential direction are driven to rotate toward each other, to implement a fitting connection between the first sub-housing 110 and the second sub-housing 120.

In some embodiments, the first sub-housing 110 detachably fits with the second sub-housing 120. In other words, the first sub-housing 110 and the second sub-housing 120 are not only rotatably connected, but also detachably fit with each other. In this way, a fixed connection between the first sub-housing 110 and the second sub-housing 120 can be implemented, so that a relative location between the first sub-housing 110 and the second sub-housing 120 is stable, thereby ensuring location stability of the housing 100. Therefore, the housing 100 is used to support and protect the mover assembly 220 and the stator assembly 210, to prolong service life of the mover assembly 220 and the stator assembly 210, and improve location stability of the mover assembly 220 and the stator assembly 210.

In addition, the first sub-housing 110 and the second sub-housing 120 are disposed to detachably fit with each other, to further reduce difficulty in assembling and disassembling the first sub-housing 110 and the second sub-housing 120, thereby reducing difficulty in assembling and disassembling the housing 100, and facilitating maintenance of the mover assembly 220 and the stator assembly 210.

In some embodiments, as shown in FIG. 6, one of the first sub-housing 110 and the second sub-housing 120 is provided with a third connecting portion 112, and the other is provided with a fourth connecting portion 122 directly facing the third connecting portion 112. A first fastener 150 connects the third connecting portion 112 and the fourth connecting portion 122, so that the first sub-housing 110 and the second sub-housing 120 are detachable. This means the following: When the third connecting portion 112 is disposed on the first sub-housing 110, the fourth connecting portion 122 is disposed on the second sub-housing 120; or when the third connecting portion 112 is disposed on the second sub-housing 120, the fourth connecting portion 122 is disposed on the first sub-housing 110. In this way, when the first fastener 150 connects the third connecting portion 112 and the fourth connecting portion 122, a detachable fit between the first sub-housing 110 and the second sub-housing 120 can be implemented. While a fixed connection between the first sub-housing 110 and the second sub-housing 120 is implemented, a relative location between the first sub-housing 110 and the second sub-housing 120 can be stable, thereby ensuring location stability of the housing 100 and reducing difficulty in assembling the housing 100.

In some embodiments, with reference to FIG. 9, FIG. 10, and FIG. 12, a third connecting hole 1121 is provided on the third connecting portion 112, a fourth connecting hole 1221 is provided on the fourth connecting portion 122, and the first fastener 150 connects the third connecting hole 1121 and the fourth connecting hole 1221, thereby implementing a fixed connection between the third connecting portion 112 and the fourth connecting portion 122.

Optionally, the first fastener 150 may be a fastening bolt, a fastening screw, or a rivet.

Optionally, as shown in FIG. 5, FIG. 6, and FIG. 8, a plurality of third connecting portions 112 are disposed on the first sub-housing 110, and the plurality of third connecting portions 112 are respectively located on a sidewall and an end wall of the first sub-housing 110. A plurality of fourth connecting portions 122 directly facing the third connecting portions 112 are disposed on the second sub-housing 120. In this way, when the first fastener 150 connects the third connecting portions 112 and the fourth connecting portions 122, both sidewalls and end walls of the first sub-housing 110 and the second sub-housing 120 may detachably fit with each other, to improve connection strength between the first sub-housing 110 and the second sub-housing 120, so that a relative location between the first sub-housing 110 and the second sub-housing 120 is stable.

In some embodiments, as shown in FIG. 7, the housing 100 is provided with a first clearance through-hole 160, the first clearance through-hole 160 communicates with the accommodating cavity 130, the first clearance through-hole 160 is adapted to provide clearance for the central rod 300, and the cylindrical bearing 170 is disposed in the first clearance through-hole 160. The first clearance through-hole 160 that avoids the central rod 300 and communicates with the accommodating cavity 130 is provided to ensure that the central rod 300 can extend into the accommodating cavity 130 through the first clearance through-hole 160. The cylindrical bearing 170 is disposed in the first clearance through-hole 160, so that when the central rod 300 performs an activity relative to the accommodating cavity 130, the central rod 300 may be guided by the bearing 170, to ensure location accuracy of the central rod 300 during the activity, and further prevent the central rod 300 from being in contact with a hole wall of the first clearance through-hole 160 during the activity, thereby avoiding interference between the central rod 300 and the hole wall of the first clearance through-hole 160. Therefore, the central rod 300 can accurately perform the activity relative to the accommodating cavity 130.

In addition, providing the bearing 170 is more advantageous to ensure that an air gap between the permanent magnet and the coil is kept within a proper design range, thereby ensuring structural stability of a system, and improving a capability of the system in resisting lateral magnetic attraction.

It will be noted that, because the first clearance through-hole 160 is formed on the housing 100, in a process of processing the first clearance through-hole 160, technical problems of low smoothness of the hole wall of the first clearance through-hole 160 and poor location precision of the first clearance through-hole 160 are prone to occur. In this case, if the central rod 300 directly fits with the first clearance through-hole 160, a problem of interference between the central rod 300 and the first clearance through-hole 160 during the activity is prone to occur. Therefore, in this embodiment, the cylindrical bearing 170 is disposed in the first clearance through-hole 160, so that while the central rod 300 is guided by the bearing 170, interference between the central rod 300 and the hole wall of the first clearance through-hole 160 during the activity can be further avoided, thereby ensuring location accuracy of the central rod 300 during the activity.

It will be further noted that the activity performed by the central rod 300 relative to the accommodating cavity 130 may be movement, or may be rotation.

Optionally, the bearing 170 is detachably disposed in the first clearance through-hole 160, which facilitates separate processing of the bearing 170, to ensure structural precision of the bearing 170, thereby ensuring guide performance of the bearing 170.

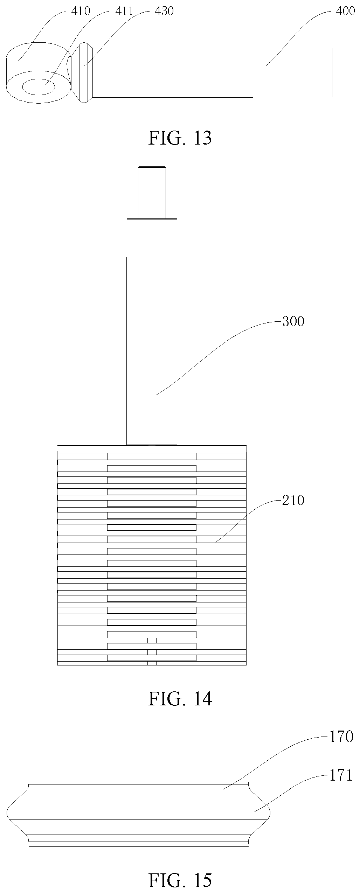

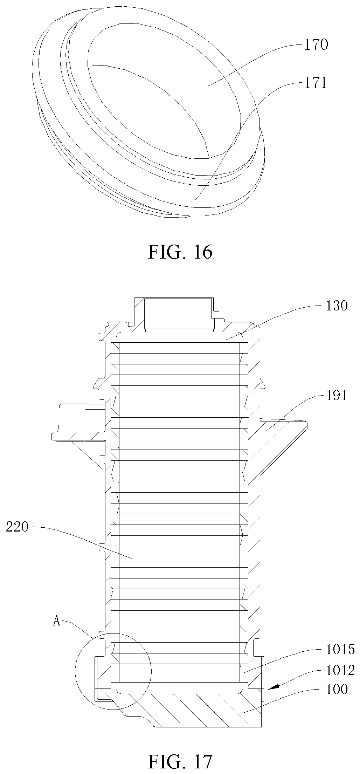

In some embodiments, as shown in FIG. 15 and FIG. 16, a protrusion portion 171 is disposed on an outer periphery of the bearing 170, and the protrusion portion 171 is in a fitted connection in the first clearance through-hole 160, to implement a fitted connection between the bearing 170 and the first clearance through-hole 160, thereby facilitating guidance of the central rod 300 by the bearing 170. In this way, the bearing 170 has a simple structure and is easy to mount, and no additional mounting or fastening structure is required to fasten the bearing 170.

In some embodiments, as shown in FIG. 6 and FIG. 14, the stator assembly 210 is disposed on the central rod 300. In this way, when the central rod 300 extends into the accommodating cavity 130, the stator assembly 210 can be disposed in the accommodating cavity 130, so that the stator assembly 210 can fit with the mover assembly 220, thereby ensuring working performance of the electromagnetic actuator 1000.

In addition, providing the stator assembly 210 on the central rod 300 and providing the mover assembly 220 on the housing 100 may further form an electromagnetic solution with a permanent magnet disposed externally and a coil assembly disposed internally, so that in a constraint condition with limited space, a larger air gap diameter can be obtained, thereby providing larger active thrust.

It will be noted that the housing 100 in this embodiment is separated into the first sub-housing 110 and the second sub-housing 120 in the circumferential direction of the housing 100. When the housing 100 is used on the electromagnetic actuator 1000, the stator assembly 210 needs to be divided into two parts when the stator assembly 210 is disposed on the first sub-housing 110 and the second sub-housing 120, and consequently, a magnetic induction line cannot be generated. Therefore, when the housing 100 is used on the electromagnetic actuator 1000, the stator assembly 210 is disposed on the central rod 300, and the mover assembly 220 is disposed on the first sub-housing 110 and the second sub-housing 120 and is divided into two parts. When the housing 100 is used on a rotating motor, because a direction of the stator assembly 210 is different, the stator assembly 210 may be disposed on the first sub-housing 110 and the second sub-housing 120 and be divided into two parts, or may be disposed on the central rod 300.

In some embodiments, with reference to FIG. 6, FIG. 9, and FIG. 11, the first sub-housing 110 is provided with a first clearance groove 113, the second sub-housing 120 is provided with a second clearance groove 123, and the first clearance groove 113 fits with the second clearance groove 123 to define the first clearance through-hole 160. In this way, the first clearance through-hole 160 communicating with the accommodating cavity 130 is formed on the housing 100. In addition, the difficulty in forming the first clearance through-hole 160 can be reduced, and the difficulty of fitting between the bearing 170, the central rod 300, and the first clearance through-hole 160 can be reduced, thereby improving assembly efficiency of the housing 100.

In addition, the foregoing arrangement may further facilitate assembly of the stator assembly 210 on the central rod 300 in the accommodating cavity 130.

In conclusion, it will be understood as follows: after the housing 100 is separated into the first sub-housing 110 and the second sub-housing 120 in the circumferential direction of the housing 100, a mid-plane of the housing 100 is a plane that passes through an axis of the bearing 170.

It will be noted that, for a cylindrical motor housing, the mid-plane may evenly divide the cylindrical motor housing into two symmetrical parts. For a motor housing of another shape (for example, a square or a pentagonal), the mid-plane may divide the housing 100 into two parts that are asymmetrical.

In other words, when the housing 100 is formed as a cylindrical motor housing, the first sub-housing 110 and the second sub-housing 120 are generally structurally symmetrical; or when the housing 100 is formed as a motor housing of another shape, the first sub-housing 110 and the second sub-housing 120 are generally structurally asymmetrical.

In some embodiments, as shown in FIG. 6 and FIG. 7, the housing 100 further includes the guide rod 400, and the other of the mover assembly 220 and the stator assembly 210 fits with the guide rod 400. Therefore, the other of the mover assembly 220 and the stator assembly 210 is prevented from being offset during movement, that is, it is ensured that the other of the mover assembly 220 and the stator assembly 210 can perform relative movement in a predetermined direction, thereby ensuring accuracy of movement of the other of the mover assembly 220 and the stator assembly 210. In this way, it can be ensured to some extent that a relative axial distance between the housing 100 and the other of the mover assembly 220 and the stator assembly 210 remains unchanged during mutual movement.

In some embodiments, as shown in FIG. 7, a guide hole 310 is provided at an end of the central rod 300 that is in the accommodating cavity 130, and the guide rod 400 movably fits with the guide hole 310, to guide a movement direction of the central rod 300 by the guide rod 400, thereby ensuring accuracy of movement of the central rod 300.

In some embodiments, as shown in FIG. 7, the guide rod 400 is disposed on the rotating shaft 140. Herein, this means the following: When the end part of the first sub-housing 110 is rotatably connected to the end part of the second sub-housing 120, the guide rod 400 is disposed on the rotating shaft 140, to implement a fixed connection between an end part of the guide rod 400 and the housing 100, and reduce difficulty of fitting between the guide rod 400 and the housing 100, thereby facilitating support of the guide rod 400 by the housing 100, and improving location stability of the guide rod 400.

In some embodiments, with reference to FIG. 7 and FIG. 13, a through-hole 411 is provided on the guide rod 400, and the rotating shaft 140 extends through the through-hole 411. Therefore, the guide rod 400 is disposed on the rotating shaft 140.

In some embodiments, as shown in FIG. 13, the end part of the guide rod 400 is provided with a mounting boss 410, the through-hole 411 is provided on the mounting boss 410, and the rotating shaft 140 extends through the through-hole 411, to implement a fitted connection between the rotating shaft 140 and the guide rod 400.

In conclusion, the first sub-housing 110, the second sub-housing 120, and the guide rod 400 in this embodiment are connected together through the rotating shaft 140, and the three may rotate relative to each other around the rotating shaft 140. During specific assembly of the housing 100, first, the rotating shaft 140 sequentially passes through the plurality of first connecting lugs 1111, the plurality of second connecting lugs 1211, and the end part of the guide rod 400, to implement a rotational fit between the first sub-housing 110, the second sub-housing 120, and the guide rod 400. Then, the bearing 170 is sleeved on the central rod 300, and the central rod 300 is sleeved on the guide rod 400. Next, the guide rod 400, the bearing 170, and the central rod 300 are rotated around the rotating shaft 140, so that the three approach one of the first sub-housing 110 or the second sub-housing 120, and it is ensured that the bearing 170 is fitted in the third clearance groove 114 or the fourth clearance groove 124. Afterwards, the other of the first sub-housing 110 or the second sub-housing 120 is controlled to rotate around the rotating shaft 140, so that the first sub-housing 110 is attached to the second sub-housing 120. Finally, the first sub-housing 110 and the second sub-housing 120 are connected through the first fastener 150, to implement a fixed connection between the first sub-housing 110 and the second sub-housing 120. In the foregoing connection process, the stator assembly 210 on the central rod 300 can be completely prevented from being in contact with the mover assembly 220 on the first sub-housing 110 and the second sub-housing 120, thereby avoiding damage to the mover assembly 220 and the stator assembly 210, and prolonging service life of the mover assembly 220 and the stator assembly 210.

In addition, according to the foregoing arrangement, the guide rod 400 and the housing 100 may further form a separated detachable design. Without losing coaxiality between the guide rod 400 and the housing 100, this is more helpful to mount and fasten the mover assembly 220 on an inner peripheral surface of the housing 100, and also facilitates separate processing of the guide rod 400, thereby ensuring smoothness of a surface of the guide rod 400, and ensuring guide performance of the guide rod 400.

In some embodiments, as shown in FIG. 6, FIG. 7, and FIG. 8, at least a partial structure of the guide rod 400 extends out of the accommodating cavity 130, and the through-hole 411 is provided on the partial structure of the guide rod 400 that extends out of the accommodating cavity 130. In other words, the end part of the guide rod 400 extends out of the first sub-housing 110 and the second sub-housing 120, and the end part of the guide rod 400 is connected to the first sub-housing 110 and the second sub-housing 120, to implement a fixed connection between the guide rod 400 and the housing 100, thereby facilitating support of the guide rod 400 by the housing 100, improving location stability of the guide rod 400. Therefore, working performance of the guide rod 400 is ensured, thereby facilitating guidance of the movement direction of the guide central rod 300 by the guide rod 400.

In addition, the end part of the guide rod 400 extends out of the first sub-housing 110 and the second sub-housing 120, so that the guide rod 400 and the housing 100 can be connected on outer side of the housing 100, to reduce difficulty in connecting the guide rod 400 and the housing 100, that is, reduce difficulty in fitting with the guide rod 400.

In some embodiments, as shown in FIG. 7, the housing 100 is provided with a second clearance through-hole 161. The second clearance through-hole 161 communicates with the accommodating cavity 130. The second clearance through-hole 161 is configured to provide clearance for the guide rod 400, so that the end part of the guide rod 400 can extend out of the first sub-housing 110 and the second sub-housing 120 and be connected to the first sub-housing 110 and the second sub-housing 120, thereby reducing difficulty in connecting the guide rod 400 and the housing 100.

Optionally, with reference to FIG. 6, FIG. 8, FIG. 10, and FIG. 12, the first sub-housing 110 is provided with a third clearance groove 114, the second sub-housing 120 is provided with a fourth clearance groove 124, and the third clearance groove 114 fits with the fourth clearance groove 124 to define the second clearance through-hole 161. In this way, the second clearance through-hole 161 communicating with the accommodating cavity 130 is formed on the housing 100. In addition, difficulty in forming the second clearance through-hole 161 can be reduced, and difficulty of fitting between the guide rod 400 and the second clearance through-hole 161 can be reduced, thereby improving assembly efficiency of the housing 100.

Optionally, as shown in FIG. 7 and FIG. 13, a guide protrusion 430 is disposed on the guide rod 400, and the guide protrusion 430 is in a fitted connection in the second clearance through-hole 161, to implement a fitted connection between the guide rod 400 and the second clearance through-hole 161, and position the guide rod 400, thereby ensuring location stability of the guide rod 400.

In some other embodiments, as shown in FIG. 8, in the circumferential direction of the housing 100, one side of the first sub-housing 110 is rotatably connected to one side of the second sub-housing 120, and the end part of the guide rod 400 extends to sides of axial end parts of the first sub-housing 110 and the second sub-housing 120 and are connected to the first sub-housing 110 and the second sub-housing 120. Herein, this means the following: when one side of the first sub-housing 110 is rotatably connected to one side of the second sub-housing 120, the end part of the guide rod 400 is connected to the axial end parts of the first sub-housing 110 and the second sub-housing 120. In this way, the first sub-housing 110 and the second sub-housing 120 are rotatably connected, and it can be further ensured that the guide rod 400 can effectively fit with the central rod 300, thereby facilitating guidance of the movement direction of the central rod 300 by the guide rod 400.

In some embodiments, as shown in FIG. 8, in the circumferential direction of the housing 100, one side of the first sub-housing 110 is rotatably connected to one side of the second sub-housing 120. A mounting plate 420 is disposed at the end part of the guide rod 400, a fifth connecting hole 421 is provided on the mounting plate 420, a sixth connecting hole 180 directly facing the fifth connecting hole 421 is provided on each of the first sub-housing 110 and the second sub-housing 120, and a second fastener connects the fifth connecting hole 421 and the sixth connecting hole 180, so that the guide rod 400 is fixedly connected to the first sub-housing 110 and the second sub-housing 120, thereby facilitating support of the guide rod 400 by the housing 100, improving location stability of the guide rod 400, and ensuring working performance of the guide rod 400.

Optionally, the second fastener may be a fastening bolt, a fastening screw, or a rivet.

In conclusion, the first sub-housing 110 and the second sub-housing 120 in this embodiment are connected together through the rotating shaft 140, and both the first sub-housing 110 and the second sub-housing 120 may rotate relative to each other around the rotating shaft 140. During specific assembly of the housing 100, first, the rotating shaft 140 sequentially passes through the plurality of first connecting lugs 1111 and the plurality of second connecting lugs 1211, to implement a rotational fit between the first sub-housing 110 and the second sub-housing 120. Then, the central rod 300 is disposed in one of the first sub-housing 110 and the second sub-housing 120, the bearing 170 is sleeved on the central rod 300, and the central rod 300 is sleeved on the guide rod 400. Next, the other of the first sub-housing 110 and the second sub-housing 120 is rotated around the rotating shaft 140, so that the other of the first sub-housing 110 and the second sub-housing 120 approaches one of the first sub-housing 110 or the second sub-housing 120, and it is ensured that the bearing 170 is fitted in the third clearance groove 114 or the fourth clearance groove 124, so that the first sub-housing 110 is attached to the second sub-housing 120. Finally, the first sub-housing 110 and the second sub-housing 120 are connected through the first fastener 150, and the first sub-housing 110 and the second sub-housing 120 are connected to the guide rod 400 through the second fastener, to implement a fixed connection between the first sub-housing 110 and the second sub-housing 120. In the foregoing connection process, the stator assembly 210 on the central rod 300 can be completely prevented from being in contact with the mover assembly 220 on the first sub-housing 110 and the second sub-housing 120, thereby avoiding damage to the mover assembly 220 and the stator assembly 210, and prolonging service life of the mover assembly 220 and the stator assembly 210.

In some embodiments, the electromagnetic actuator 1000 in this embodiment is formed as a cylindrical linear motor. A structure of the cylindrical linear motor is relatively closed, and has good sealing and no unilateral magnetic pull force, to ensure working performance of the electromagnetic actuator 1000.

It will be noted that when the electromagnetic actuator 1000 is formed as a cylindrical linear motor, both the first sub-housing 110 and the second sub-housing 120 of the housing 100 are formed as a cylindrical shape, so that the first sub-housing 110 fits with the second sub-housing 120 to form a complete cylindrical motor housing.

In some embodiments, as shown in FIG. 7, the spring 600 is disposed on the electromagnetic actuator 1000, and the spring 600 is configured to provide a partial damping force and withstand partial vibration impact, to improve working performance of the electromagnetic actuator 1000, thereby ensuring comfort of the vehicle 20000.

Optionally, as shown in FIG. 7, the upper support 500 and the mounting seat 191 are further disposed on the electromagnetic actuator 1000. The upper support 500 is connected to a side of the central rod 300 that is away from the accommodating cavity 130, and the mounting seat 191 is connected to an outer peripheral wall of the housing 100. Accommodation space for accommodating the spring 600 is formed between the upper support 500 and the mounting seat 191. The spring 600 is placed in the accommodation space, so that the upper support 500 fits with the mounting seat 191 to fasten the spring 600. In this way, when the electromagnetic actuator 1000 is applied to a suspension system 10000 of the vehicle 20000, the spring 600 is used to cushion and absorb vibration when the vehicle 20000 is excited by a road surface and the central rod 300 and the housing 100 move relative to each other. In addition, the spring 600 may further play a damping role, to improve a vibration damping effect of the electromagnetic actuator 1000, thereby improving comfort of the vehicle 20000.

In some embodiments, as shown in FIG. 7, the spring 600 is disposed between the upper support 500 and the mounting seat 191, an upper end of the spring 600 abuts against the upper support 500, and a lower end of the spring 600 abuts against the mounting seat 191. In this way, the spring 600 may be compressed or stretched during relative movement between the central rod 300 and the housing 100, to provide a partial damping force and withstand partial vibration impact by using the spring 600, thereby improving comfort of the vehicle 20000.

In some embodiments, as shown in FIG. 7, a bushing 700 is disposed on the side of the central rod 300 that is away from the accommodating cavity 130, and the bushing 700 is connected to the upper support 500. A buffer block 800 is disposed on each of surfaces on opposite sides of the upper support 500 and the mounting seat 191, and the spring 600 is disposed between the two buffer blocks 800.

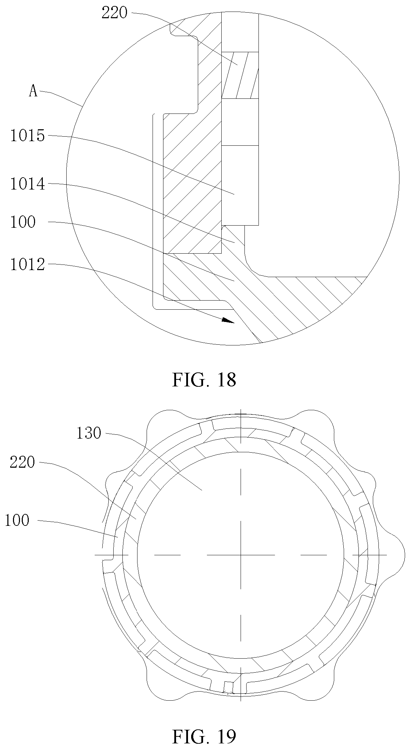

In some embodiments, with reference to FIG. 17, FIG. 18, FIG. 19, and FIG. 20, the mover assembly 220 is connected to the housing 100, an elastic limiting member 1015 is disposed between the housing 100 and the stator assembly 210, and the elastic limiting member 1015 separately abuts against the housing 100 and the stator assembly 210. In this way, it is ensured that the electromagnetic actuator 1000 can cushion vibration of the stator assembly 210 during running, thereby prolonging the service life of the stator assembly 210, and reducing noise generated by the electromagnetic actuator 1000 during working.

In some embodiments, the elastic limiting member 1015 is formed as a spring 600 and/or a cushioning pad. Herein, this means the following: The elastic limiting member 1015 is formed as a spring 600, or the elastic limiting member 1015 is formed as a cushioning pad, or the elastic limiting member 1015 is formed as a spring 600 and a cushioning pad, so that the elastic limiting member 1015 is used to cushion vibration of the stator assembly 210, thereby prolonging service life of the stator assembly 210, and reducing noise generated by the electromagnetic actuator 1000 during working.

It will be noted that a specific implementation form of the elastic limiting member 1015 in this embodiment includes but is not limited to an elastic member form such as a rubber pad, a polyurethane pad, a coil spring, a leaf spring, or a helical spring. A quantity and a layering configuration of elastic limiting members 1015 are also not limited in this embodiment. For example, using a plurality of layers of cushioning pads or arranging a plurality of springs in a circumferential direction falls within an embodiment scope that can be implemented in this embodiment.

In some embodiments, as shown in FIG. 20, the elastic limiting member 1015 is a coil spring, and the coil spring is disposed between the housing 100 and the stator assembly 210. In actual use, to cushion movement of the stator assembly 210, it is required to ensure that the coil spring is in a compressed state after assembly is completed. Therefore, a compression amount of the coil spring may be ensured by press-fitting the end cover 1012.

In some embodiments, with reference to FIG. 17, FIG. 10, and FIG. 20, the stator assembly 210 is located inside the housing 100, and is distributed along an internal radial circumference of the housing 100. The elastic limiting member 1015 is located on a lower part of the stator assembly 210 and an upper side of the end cover 1012.

The stator assembly 210 includes a plurality of layers of magnet assemblies, and a layer of magnet forms a complete circular ring. All layers of magnets are bonded to an inner wall of the housing 100. At a bottom of the lowest layer of magnet, the elastic limiting member 1015 is provided, and a lower end of the elastic limiting member 1015 is connected to a top of a stepped portion of the end cover 1012. Because the elastic limiting member 1015 has specific elasticity, it is ensured that the elastic limiting member 1015 can cushion vibration of the magnets during running of the electromagnetic actuator 1000.

It will be noted that a size of the elastic limiting member 1015 is not fixed, and may be adjusted based on a size of the electromagnetic actuator 1000, thereby providing an advantage of high adaptability.

In addition, the elastic limiting member 1015 in this embodiment may integrate a function of a sealing module, and plays a role in sealing a gap between the end cover 1012 and the housing 100.

In a specific example, during assembly, adhesive is first coated on an outer surface of the stator assembly 210. Then, the stator assembly 210 is assembled layer by layer into the inside of the housing 100 in the axial direction of the electromagnetic actuator 1000. After assembly of the lowest layer of stator assembly 210 is completed, the elastic limiting member 1015 is assembled. Finally, the end cover 1012 is assembled. When the elastic limiting member 1015 is a coil spring, a preload may be applied to the coil spring.

It will be further noted that the preload of the coil spring in this embodiment should not be excessive, to avoid an excessive pressure on the magnet. In an implementation process, the preload may be controlled by a height of the extension portion 1014 on the end cover 1012.

In some embodiments, two adjacent sub-housings 101 in the plurality of sub-housings 101 may be rotatably connected. Herein, this means the following: Regardless of whether the plurality of sub-housings 101 are disposed opposite to each other in the circumferential direction of the housing 100 or disposed opposite to each other in the axial direction of the housing 100, two adjacent sub-housings 101 are rotatably connected, to reduce difficulty in assembling the housing 100, reduce difficulty in assembling the mover assembly 220 and the stator assembly 210, and prevent, to some extent, the mover assembly 220 and the stator assembly 210 from colliding with the housing 100 during assembly.

In some embodiments, the plurality of sub-housings 101 may be detachably connected. In this way, the plurality of sub-housings 101 can be fixedly connected, so that relative locations of the plurality of sub-housings 101 are stable, thereby ensuring location stability of the housing 100. Therefore, the housing 100 is used to support and protect the mover assembly 220 and the stator assembly 210, to prolong service life of the mover assembly 220 and the stator assembly 210, and improve location stability of the mover assembly 220 and the stator assembly 210.

In addition, the plurality of sub-housings 101 are disposed detachably fit with each other, to further reduce difficulty in assembling and disassembling the plurality of sub-housings 101, thereby reducing difficulty in assembling and disassembling the housing 100, and facilitate maintenance of the mover assembly 220 and the stator assembly 210.

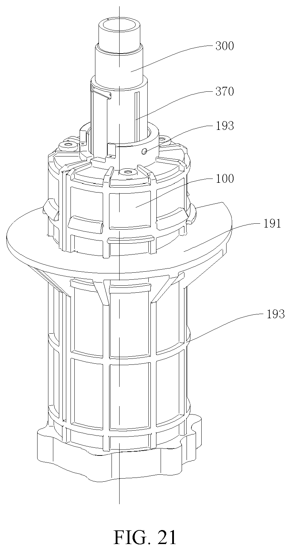

In some embodiments, with reference to FIG. 21 to FIG. 25, the central rod 300 is provided with a first anti-rotation portion 370, and the housing 100 is provided with a second anti-rotation portion. The first anti-rotation portion 370 fits with the second anti-rotation portion to limit rotation freedom of the central rod 300. In this way, relatively large rotation between the central rod 300 and the housing 100 is avoided, to ensure that the central rod 300 and the housing 100 can effectively move relative to each other, thereby ensuring working performance of the electromagnetic actuator 1000.

In some embodiments, with reference to FIG. 21 to FIG. 25, the first anti-rotation portion 370 is a long slot extending in an axial direction of the central rod 300, and the second anti-rotation portion is fastened to the housing 100 and extends into the first anti-rotation portion 370. In this way, rotation freedom of the central rod 300 is limited through fitting between the first anti-rotation portion 370 and the second anti-rotation portion, so that relative rotation between the central rod 300 and the housing 100 is avoided, thereby ensuring working performance of the electromagnetic actuator 1000.

In some embodiments, as shown in FIG. 21, an anti-rotation hole 193 is provided on the housing 100, the second anti-rotation portion is an anti-rotation post. The anti-rotation post passes through the anti-rotation hole 193 to extend into the first anti-rotation portion 370, to implement fitting between the first anti-rotation portion 370 and the second anti-rotation portion, thereby limiting rotation freedom of the central rod 300.

In some embodiments, the anti-rotation post is fastened to the anti-rotation hole 193, to ensure location stability of the anti-rotation post, so that rotation freedom of the central rod 300 is limited through fitting between the first anti-rotation portion 370 and the second anti-rotation portion.

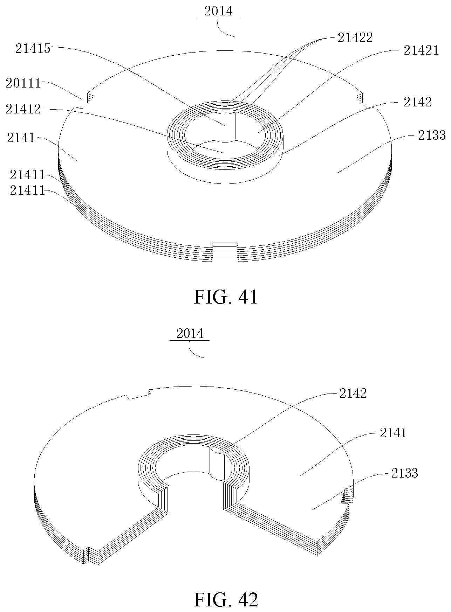

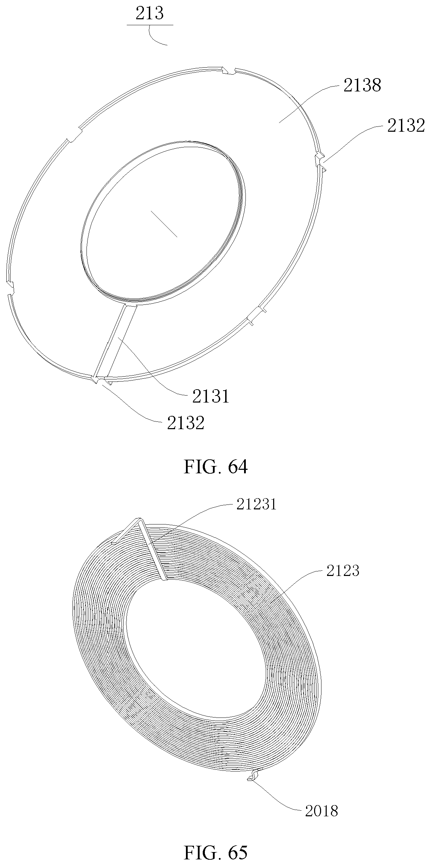

In some embodiments, with reference to FIG. 41 to FIG. 48, the core assembly 211 includes a plurality of stator cores 2014, and the stator cores 2014 are arranged in the axial direction of the central rod 300. The stator core 2014 includes a stator tooth portion 2141 and a stator yoke portion 2142. The stator tooth portion 2141 includes a plurality of first laminations 21411 stacked in the axial direction of the central rod 300. The stator yoke portion 2142 is formed as a ring shape and is disposed on the stator tooth portion 2141. At least a part of the stator yoke portion 2142 is located on one side of the stator tooth portion 2141, so that a winding groove 2133 is formed between the stator tooth portion 2141 and the stator yoke portion 2142. The winding assembly 212 includes a plurality of phases of windings, and coils 2123 (for a specific structure of the coil 2123, referring to FIG. 65) of the windings are all placed in the winding groove 2133. In this way, the winding assembly 212 is disposed on the core assembly 211, to ensure working performance of the stator assembly 210, and reduce difficulty in assembling the stator assembly 210.

It will be noted that the stator tooth portion 2141 is disposed to include a plurality of first laminations 21411 stacked in the axial direction of the central rod 300, so that compared with a structure in which the stator tooth portion 2141 is disposed as an integral conductor, the plurality of first laminations 21411 can effectively reduce an eddy current loss in the stator tooth portion 2141, thereby improving thrust and efficiency of the electromagnetic actuator 1000.

In some embodiments, the winding groove 2133 is formed on an axial side of the stator tooth portion 2141 and is located on a radial outer periphery of the stator yoke portion 2142, to facilitate placement of the winding coil 2123 in the winding groove 2133.

In some embodiments, with reference to FIG. 41 to FIG. 48, the stator yoke portion 2142 is disposed on the axial side of the stator tooth portion 2141, so that the winding groove 2133 is formed between the stator tooth portion 2141 and the stator yoke portion 2142, to facilitate placement of the winding coil 2123 in the winding groove 2133, and reduce difficulty of fitting between the winding assembly 212 and the core assembly 211, thereby ensuring working performance of the stator assembly 210.

In some embodiments, with reference to FIG. 41 to FIG. 46, the stator yoke portion 2142 includes a plurality of stacked second laminations 21422, and the plurality of second laminations 21422 are stacked in a radial direction of the central rod 300, to effectively reduce an eddy current loss in the stator tooth portion 2141.

In other words, the plurality of first laminations 21411 of the stator tooth portion 2141 are stacked in the axial direction of the central rod 300, the plurality of second laminations 21422 of the stator yoke portion 2142 are stacked in the radial direction of the central rod 300, and the axially laminated tooth portion and the radially laminated yoke portions can significantly reduce an eddy current loss in the stator tooth portion 2141.

In some embodiments, as shown in FIG. 41 and FIG. 42, the stator tooth portion 2141 and the stator yoke portion 2142 are integrally formed by stamping and laminating integrated silicon steel sheets. The integrated stamping structure can also ensure thrust and efficiency of the electromagnetic actuator 1000, and weaken a thrust fluctuation of the electromagnetic actuator 1000.

In addition, the integrated stamping structure has advantages of less structural interfaces, less adhesive, high assembly precision, and no impact on thrust and efficiency of the electromagnetic actuator 1000.

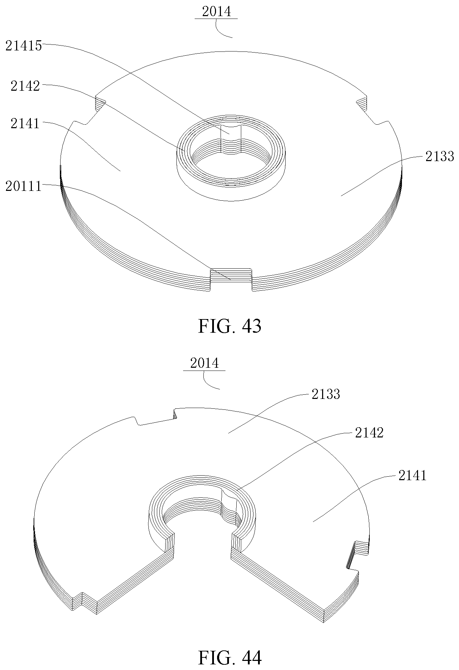

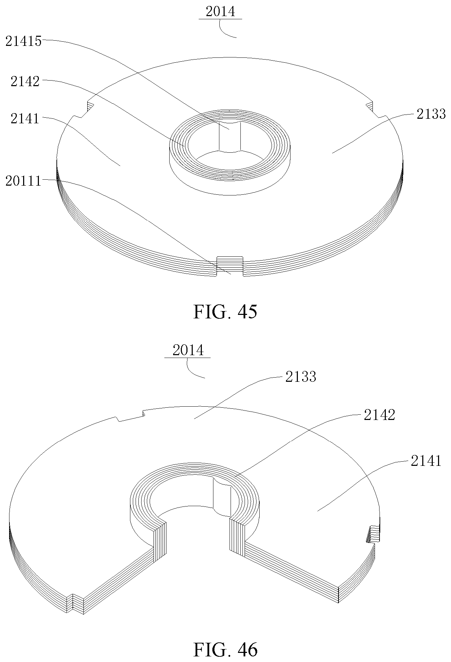

Certainly, in some other embodiments, with reference to FIG. 44 and FIG. 45, the stator yoke portion 2142 may alternatively be fastened to the stator tooth portion 2141 to form the stator core 2014. In other words, the stator core 2014 may alternatively be formed by fastening an independent stator yoke portion 2142 and an independent stator tooth portion 2141.

In some embodiments, the stator yoke portion 2142 is connected to the stator tooth portion 2141, so that a relative location between the stator yoke portion 2142 and the stator tooth portion 2141 is stable, thereby ensuring working performance of the stator core 2014.

In some embodiments, the stator yoke portion 2142 and the stator tooth portion 2141 are reinforcely connected through laser welding.

It will be noted that the foregoing method of assembling the stator yoke portion 2142 and the stator tooth portion 2141 enables the stator core 2014 to have advantages such as separate lamination and process maturity, and the stator core 2014 is applicable to a complex structure of the core assembly 211.

In some other embodiments, with reference to FIG. 45 and FIG. 46, the stator yoke portion 2142 is axially inserted and fastened in the axially laminated stator tooth portion 2141. In this way, the stator core 2014 can also be formed by fastening an independent stator yoke portion 2142 and an independent stator tooth portion 2141.

In some embodiments, the stator yoke portion 2142 is inserted into the stator tooth portion 2141 and is reinforcely connected to the stator tooth portion 2141 through laser welding, which further ensures a secure connection between the stator yoke portion 2142 and the stator tooth portion 2141 while ensuring specific assembly precision.

In addition, in addition to greatly reducing an eddy current loss in the core assembly 211, the foregoing assembly method may further improve mounting precision, reduce impact on thrust and efficiency of a linear motor, and weaken a thrust fluctuation.

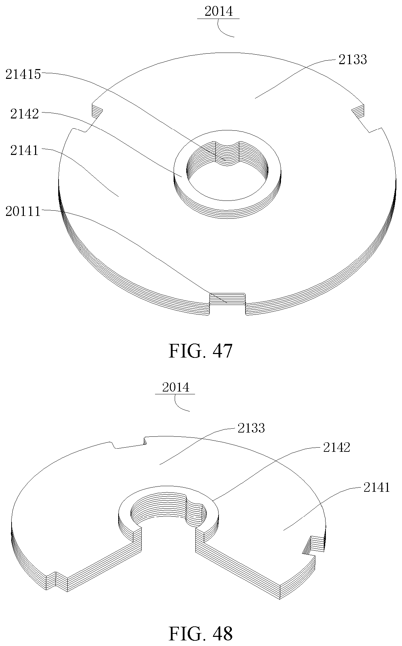

In some embodiments, with reference to FIG. 47 and FIG. 48, the stator yoke portion 2142 includes a plurality of stacked second laminations 21422, and the plurality of second laminations 21422 are stacked in the axial direction of the central rod 300. In other words, the plurality of second laminations 21422 are not limited to being stacked in the radial direction of the central rod 300, the plurality of second laminations 21422 may alternatively be stacked in the axial direction of the central rod 300. Because a process of axially stamping and laminating silicon steel sheets is very mature, process feasibility of this technical solution is high.

In conclusion, the stator core 2014 is formed by fastening axially laminated silicon steel sheets to axially laminated silicon steel sheets.

In some embodiments, the stator yoke portion 2142 and the stator tooth portion 2141 are connected through laser welding.

In the foregoing fitting method, the stator yoke portion 2142 and the stator tooth portion 2141 can be separately laminated, so that axial mounting precision is high, thrust and efficiency of a linear motor are not affected, and a thrust fluctuation is weakened.

In some embodiments, with reference to FIG. 41 to FIG. 46, the stator yoke portion 2142 is a winding member, and the winding member is wound in a circumferential direction of the central rod 300. It will be noted that the winding member herein means the following: The stator yoke portion 2142 is formed by helically winding an entire silicon steel sheet around the axis, which achieves a function of reducing an eddy current loss in the stator tooth portion 2141 equivalent to a function achieved by axially laminating silicon steel sheets. In other words, more eddy current losses in the stator yoke portion 2142 may be reduced.

In some embodiments, with reference to FIG. 41 to FIG. 46, a first central hole 21412 is formed on the stator tooth portion 2141, and the stator yoke portion 2142 is located in the first central hole 21412. In this way, the stator yoke portion 2142 is disposed on the stator tooth portion 2141, which reduces difficulty of fitting between the stator tooth portion 2141 and the stator yoke portion 2142.

In some embodiments, with reference to FIG. 41 to FIG. 46, a second central hole 21421 is formed on the stator yoke portion 2142, and both the first central hole 21412 and the second central hole 21421 are formed as mounting holes of the stator core 2014 and the central rod 300. In this way, it is convenient to assemble the stator core 2014 on the central rod 300, to implement a fitted connection between the stator core 2014 and the central rod 300.

In some embodiments, with reference to FIG. 41 to FIG. 48, a positioning protrusion 21415 fitting with the central rod 300 is formed on at least one of the stator yoke portion 2142 and the stator tooth portion 2141. In this way, during assembly, the stator yoke portion 2142 and the stator tooth portion 2141 can form an interference fit with the central rod 300, to ensure connection strength and relative location stability between the core assembly 211 and the central rod 300, prevent the core assembly 211 from rotating circumferentially on the structure of the central rod 300 during movement, improve precision of assembling the stator yoke portion 2142 and the central rod 300, and reduce impact on thrust and efficiency of a linear motor while significantly reducing an eddy current loss.

In some embodiments, with reference to FIG. 41 to FIG. 48, a positioning protrusion 21415 fitting with the central rod 300 is formed on each of the stator yoke portion 2142 and the stator tooth portion 2141, so that the stator yoke portion 2142 and the stator tooth portion 2141 can form a close fit with the central rod 300.

In some embodiments, with reference to FIG. 41 to FIG. 48, a recess 20111 is formed on the stator tooth portion 2141, and is used for cross-phase connection between the coils 2123.

In addition, a positioning protrusion 21415 fitting with the central rod 300 is formed on each of the stator yoke portion 2142 and the stator tooth portion 2141, to further ensure alignment of recesses 20111, thereby reducing difficulty of lead-out of the coil 2123.

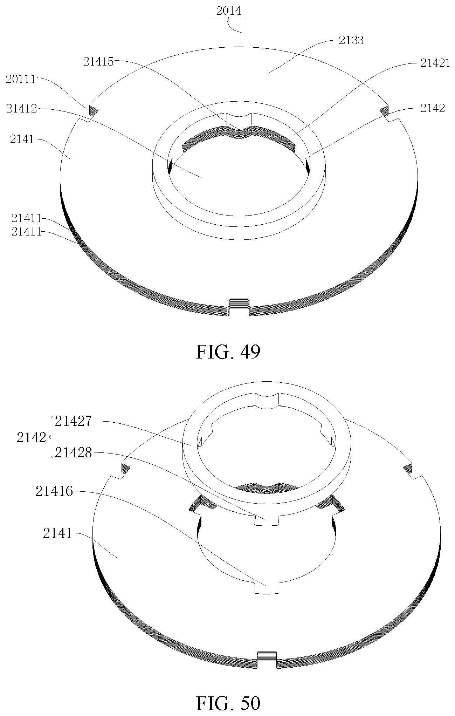

In some embodiments, with reference to FIG. 49 to FIG. 53, the stator yoke portion 2142 is formed as an integrated member. In other words, the stator yoke portion 2142 is not limited to being formed as a winding member, and may alternatively be formed as an integrated member, to reduce difficulty in forming the stator yoke portion 2142.

In some embodiments, with reference to FIG. 49 to FIG. 53, the stator yoke portion 2142 includes a body 21427 and an insertion portion 21428, and the insertion portion 21428 is formed on a side of the body 21427 in the axial direction of the central rod 300. In this way, the stator yoke portion 2142 and the stator tooth portion 2141 are fixedly connected through the insertion portion 21428, and difficulty in connecting the stator yoke portion 2142 and the stator tooth portion 2141 is reduced.

In some embodiments, with reference to FIG. 49 to FIG. 53, the stator tooth portion 2141 is formed by axially laminating silicon steel sheets, and the stator yoke portion 2142 is formed by machining a solid material. The material of the stator yoke portion 2142 is a soft magnetic material. A positioning protrusion 21415 fitting with the central rod 300 is formed on each of the stator yoke portion 2142 and the stator tooth portion 2141. A recess 20111 is formed on the stator tooth portion 2141, and is used for cross-phase connection between the coils 2123.

In some embodiments, with reference to FIG. 49, FIG. 50, and FIG. 51, the insertion portion 21428 is a boss formed on the body 21427, and a first connecting structure 21416 is formed on the stator tooth portion 2141. The first connecting structure 21416 can be formed as a dovetail groove. The boss is inserted into the dovetail groove to be fastened to the stator tooth portion 2141. In addition, laser welding is used to reinforce tooth-yoke connection strength between the stator yoke portion 2142 and the stator tooth portion 2141, to fixedly connect the stator yoke portion 2142 and the stator tooth portion 2141.

In addition, the foregoing structure further enables the stator tooth portion 2141 to greatly reduce an eddy current loss in the core assembly 211, and also ensures thrust and efficiency of a linear motor.

In some embodiments, the same trapezoidal punch is used to form, through stamping, the first connecting structure 21416 formed as a dovetail groove, so that the groove of the first connecting structure 21416 is wider when being closer to an outer edge of the stator tooth portion 2141. In this way, when the insertion portion 21428 is inserted into the first connecting structure 21416, because an opening width of the dovetail groove is less than a bottom width of the dovetail groove, it can be ensured that the insertion portion 21428 cannot slide out of the first connecting structure 21416, thereby reinforcing fastening strength between the stator yoke portion 2142 and the stator tooth portion 2141.

In some embodiments, two opposite ends at a bottom of the dovetail groove are chamfered toward a direction away from the inside of the dovetail groove. The chamfers are formed by using a punch with a chamfer. Using the punch with a chamfer can prolong service life of the punch. In addition, providing the chamfers on the dovetail groove can further avoid interference between the insertion portion 21428 and the first connecting structure 21416 during assembly, thereby ensuring that the insertion portion 21428 can be normally inserted into the first connecting structure 21416 in the axial direction and fasten the stator yoke portion 2142 and the stator tooth portion 2141.

In addition, when the insertion portion 21428 is inserted into the first connecting structure 21416, because a chamfer is formed on each of a side surface of the insertion portion 21428 and a bottom end surface of the body 21427, the bottom end surface of the body 21427 cannot be attached to an end surface of the stator tooth portion 2141. Therefore, in this embodiment, an inclined surface inclined toward a center line of the insertion portion 2142 is formed between the bottom end surface of the body 21427 and the side surface of the insertion portion 21428. In this way, when there is a chamfer on each of the side surface of the insertion portion 21428 and the bottom end surface of the body 21427, it can be ensured that the stator yoke portion 2142 is attached to the stator tooth portion 2141, thereby ensuring structural reliability.

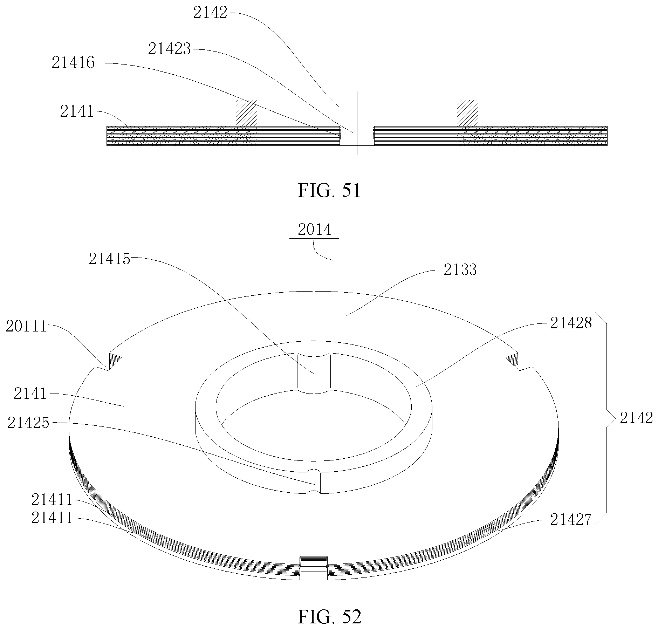

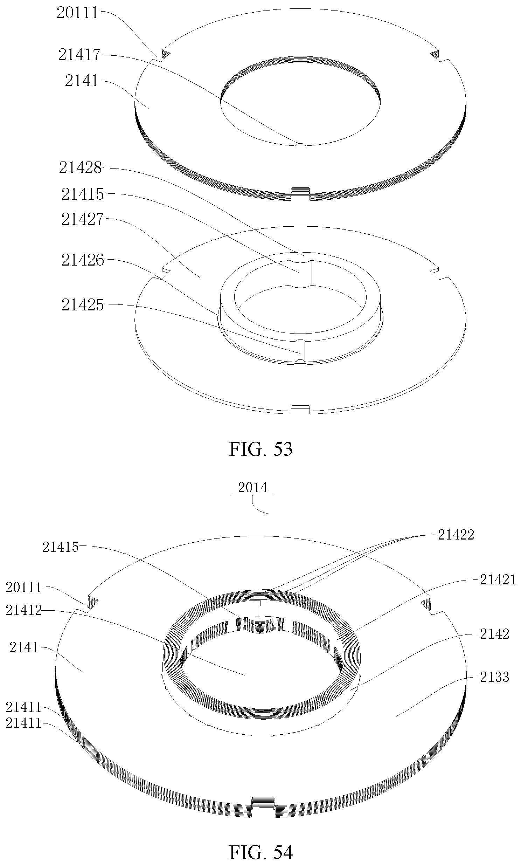

In some embodiments, with reference to FIG. 52 and FIG. 53, the stator yoke portion 2142 includes a body 21427 and an insertion portion 21428. The body 21427 is disposed on an axial side of the plurality of first laminations 21411. A plane size of the body 21427 is equal to an inner and outer diameter of the first laminations 21411. The insertion portion 21428 is inserted into the first central hole 21412. In this way, the stator yoke portion 2142 and the stator tooth portion 2141 can also be fixedly connected.

Optionally, with reference to FIG. 52 and FIG. 53, a second anti-rotation protrusion 21417 is disposed on the stator tooth portion 2141, and an anti-rotation groove 21425 is provided on the stator yoke portion 2142. The second anti-rotation protrusion 21417 is fitted in the anti-rotation groove 21425, to implement a fastened fit between the stator tooth portion 2141 and the stator yoke portion 2142, thereby preventing rotation of the stator tooth portion 2141, ensuring alignment of recesses 20111, and reducing difficulty of lead-out of the coil 2123.

In some embodiments, after the stator yoke portion 2142 and the stator tooth portion 2141 are connected through fitting between the second anti-rotation protrusion 21417 and the anti-rotation groove 21425, laser welding is used to reinforce connection strength between the stator yoke portion 2142 and the stator tooth portion 2141.

In some embodiments, with reference to FIG. 52 and FIG. 53, a first boss structure 21426 is disposed at a junction between the body 21427 and the insertion portion 21428, to prevent the junction between the body 21427 and the insertion portion 21428 from being broken, and further reinforce mechanical strength at the junction.

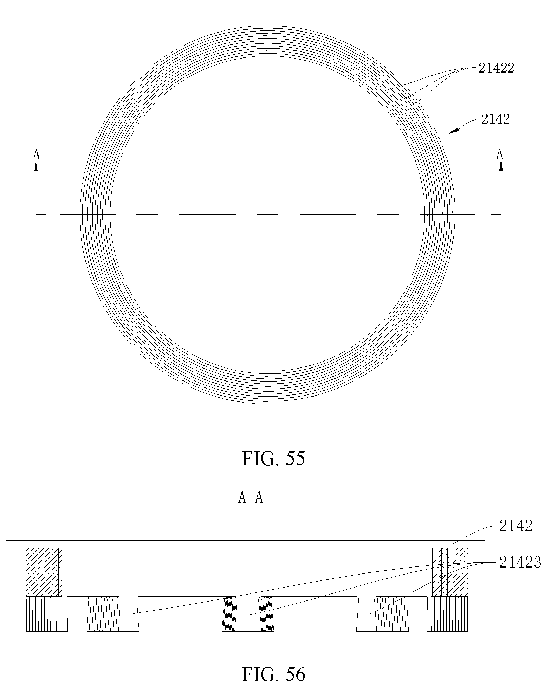

In some embodiments, with reference to FIG. 54 to FIG. 58, a first connecting structure 21416 and a second connecting structure 21423 are respectively formed on the stator yoke portion 2142 and the stator tooth portion 2141, and the first connecting structure 21416 fits with the second connecting structure 21423, to implement a fitted connection between the stator yoke portion 2142 and the stator tooth portion 2141.

In some embodiments, with reference to FIG. 54 to FIG. 58, the first connecting structure 21416 fits with the second connecting structure 21423 through insertion. In this way, the stator yoke portion 2142 fits with the stator tooth portion 2141 through insertion, to reduce difficulty in fastening the stator yoke portion 2142 and the stator tooth portion 2141, and ensure fastening quality, so that a relative location between the stator yoke portion 2142 and the stator tooth portion 2141 is stable.

In some embodiments, with reference to FIG. 54 to FIG. 58, a plurality of second connecting structures 21423 are disposed below the stator yoke portion 2142, the second connecting structures 21423 are formed as post structures, and a thickness of the post is equal to a thickness of the stator tooth portion 2141. A plurality of first connecting structures 21416 that fit with the post structures are disposed on the stator tooth portion 2141, and the first connecting structures 21416 are formed as dovetail grooves. The post structures are inserted into dovetail grooves at corresponding locations of the stator tooth portion 2141, to fixedly connect the stator yoke portion 2142 and the stator tooth portion 2141.

It will be noted that, because the coil 2123 surrounds the stator yoke portion 2142 and is wound on the stator tooth portion 2141, when the electromagnetic actuator 1000 runs, a magnetic force line mainly moves in a radial direction in the stator tooth portion 2141 and an axial direction in the stator yoke portion 2142. The stator tooth portion 2141 may reduce more eddy current losses generated in the tooth portion by using axially laminated silicon steel sheets, and the stator yoke portion 2142 reduces an eddy current loss in the stator yoke portion 2142 by using circumferentially wound silicon steel sheets.

In some embodiments, the stator yoke portion 2142 is formed by using a process of stamping and then winding. During stamping, the same punch is used for posts, and the punch is in a trapezoid shape, because if a square punch is used, assembly interference is formed at a junction between the post structure and the stator yoke portion 2142 and in a local region of the stator tooth portion 2141. In addition, if a chamfer is not designed, service life of the punch is greatly shortened, causing increased costs.

Therefore, in this embodiment, the same trapezoidal punch with a chamfer is used to process the second connecting structures 21423, which can reduce process costs and meet a process assembly requirement.

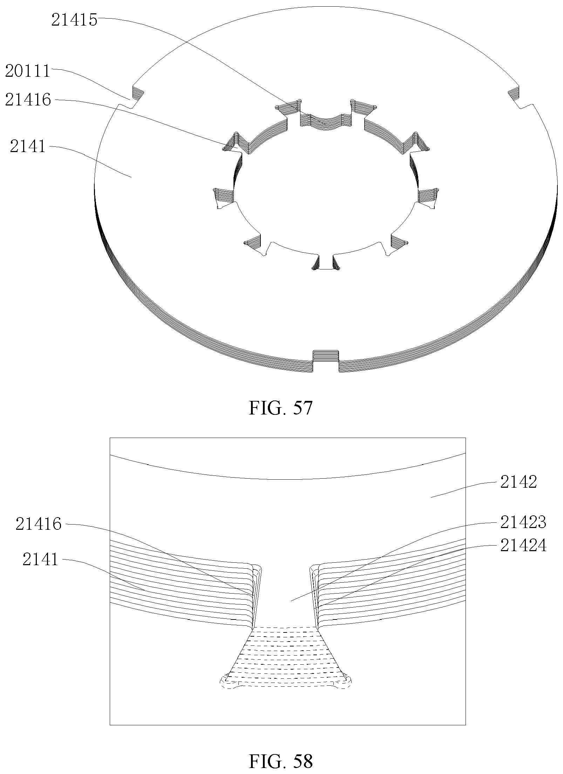

In addition, during fitting between the second connecting structure 21423 and the first connecting structure 21416, when the second connecting structure 21423 is inserted into the dovetail groove formed on the stator tooth portion 214, because a chamfer is formed on each of a side surface of the second connecting structure 21423 and a bottom end surface of the stator yoke portion 2142, a risk that the bottom end surface of the stator yoke portion 2142 cannot be attached to an end surface of the stator tooth portion 2141 is generated. By using a trapezoidal punch, an inclined surface 21424 (as shown in FIG. 58) inclined toward a center line of the second connecting structure 21423 may be formed on the bottom end surface of the stator yoke portion 2142 and the side surface of the second connecting structure 21423. In this way, when there is a chamfer on each of the second connecting structure 21423 and the bottom end surface of the stator yoke portion 2142, it can be ensured that the stator yoke portion 2142 can be attached to the stator tooth portion 2141, thereby ensuring structural structure.

It will be further noted that, the same punch is used for the second connecting structures 21423 during stamping, a width of the wound second connecting structure 21423 varies in a radial direction, and the width of the second connecting structure 21423 is wider when the second connecting structure 21423 is closer to a radial outer edge of the stator yoke portion 2142, so that the stator yoke portion 2142 is formed as a shape of a dovetail trapezoid.

In some embodiments, as shown in FIG. 57, a plurality of first connecting structures 21416 formed as dovetail grooves are formed on fixed locations of the stator tooth portion 2141 through stamping. When the second connecting structure 21423 is inserted into the first connecting structure 21416, because a groove width of the dovetail groove is less than a bottom width of the dovetail groove, it can be ensured that the second connecting structure 21423 cannot slide out of the first connecting structure 21416, thereby reinforcing fastening strength between the stator yoke portion 2142 and the stator tooth portion 2141.

In some embodiments, as shown in FIG. 57, a chamfer is disposed on an inner corner of the groove of the first connecting structure 21416. If a structure fitting with the chamfer is disposed on the second connecting structure 21423, interference between the stator yoke portion 2142 and the stator tooth portion 2141 is avoided during mounting, to ensure that the second connecting structure 21423 on the stator yoke portion 2142 can be normally inserted into the first connecting structure 21416 on the stator tooth portion 2141, thereby fixedly connecting the stator yoke portion 2142 and the stator tooth portion 2141.

In conclusion, in this embodiment, the design in which the stator yoke portion 2142 and the stator tooth portion 2141 engage with the post structures of the second connecting structures 21423 and the dovetail groove structures of the first connecting structures 21416 enables the helically wound stator yoke portion 2142 to be mechanically connected to the axially laminated stator tooth portion 2141. In addition, laser welding is used to reinforce connection strength between the stator yoke portion 2142 and the stator tooth portion 2141.

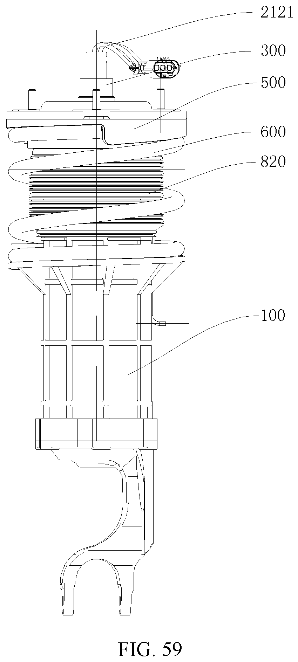

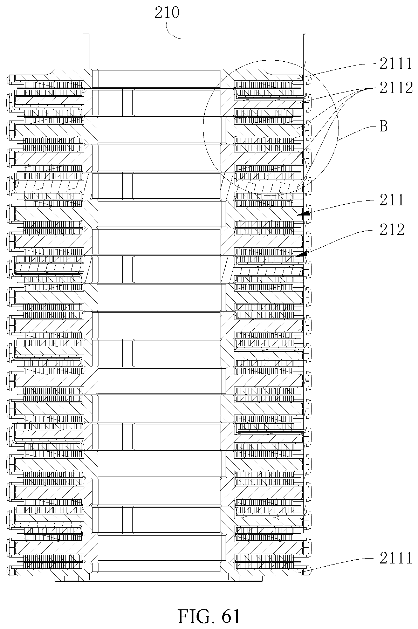

In some embodiments, with reference to FIG. 59 to FIG. 66, the core assembly 211 includes a first-type core 2111 and a second-type core 2112. In the axial direction of the central rod 300, there are a plurality of second-type cores 2112, and both ends of each of the plurality of second-type cores 2112 are provided with a first-type core 2111. An end surface of the first-type core 2111 that faces the second-type core 2112 is provided with a coil 2123, and end surfaces on both sides of the second-type core 2112 are provided with a coil 2123. Quantities of phases of coils 2123 on both sides of the second-type core 2112 are the same. In this way, a fitted connection between the core assembly 211 and the winding assembly 212 is implemented, and difficulty in connecting phases of coils 2123 is reduced.

In some embodiments, coils 2123 at both ends of each second-type core 2112 are connected in series, and in-phase coils 2123 disposed at intervals in the axial direction of the central rod 300 are welded through a connection wire 2121. In this way, in-phase coils 2123 are welded, thereby ensuring performance of the winding assembly 212.

In some embodiments, with reference to FIG. 59 to FIG. 66, in this embodiment, the core assembly 211 is cleverly designed to include the first-type core 2111 and the second-type core 2112. Coils 2123 on the same second-type core 2112 are in-phase coils, and the coils 2123 on the same second-type core 2112 are wired through welding. In this way, the design comprehensively outperforms a conventional design in terms of a spatial arrangement, production efficiency, a processing difficulty, maintenance convenience, structural complexity, component consistency, and the like.

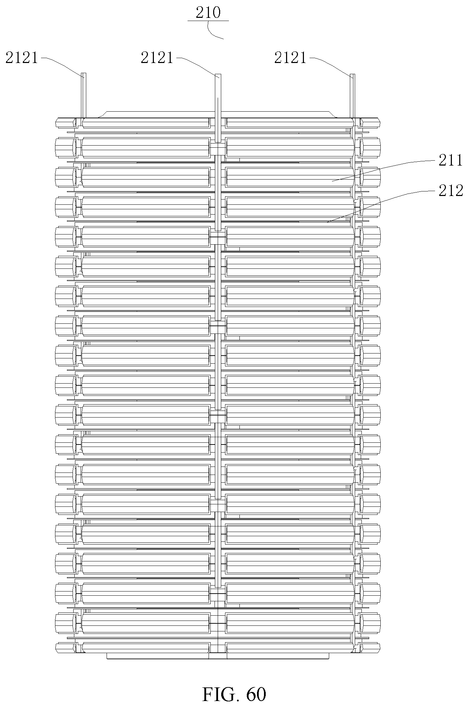

With reference to FIG. 60, FIG. 61, and FIG. 62, the stator assembly 210 in this embodiment mainly includes connection wires 2121, the core assembly 211, an insulating bobbin 213, coils 2123, and insulating paper 2122. The connection wires 2121 are respectively of three phases: A, B, and C. The coil uses a flat wire to increase space utilization. The connection wire 2121 passes through a recess 20111 formed on a surface of the core assembly 211 and a wire-through groove 2132 formed on a surface of the insulating bobbin 213, and is bent and led out at a termination part of the coil 2123. The first-type core 2111 is provided with the coil 2123 on only one side.

Optionally, an axial middle part of the stator assembly 210 is formed by assembling the second-type core 2112, the insulating bobbin 213, and the coil 2123, and an end part of the stator assembly 210 is formed by assembling the first-type core 2111, the coil 2123, and the insulating bobbin 213. The coil 2123 on the first-type core 2111 is an A-phase coil 2123.

In a specific example, a sequence of composition on the stator assembly 210 is sequentially an A-phase coil 2123, a B-phase coil 2123, and a C-phase coil 2123 from a start end part. Two adjacent different phases of coils 2123 are separated by the insulating paper 2122, and in-phase coils 2123 are connected in series. Double-sided coils inside the stator assembly 210 are also connected in series. When the coils 2123 are wired, a lead-out wire of the coil 2123 is welded to the bent connection wire 2121 at the termination part of the coil 2123, thereby implementing line connection and reducing wiring error.

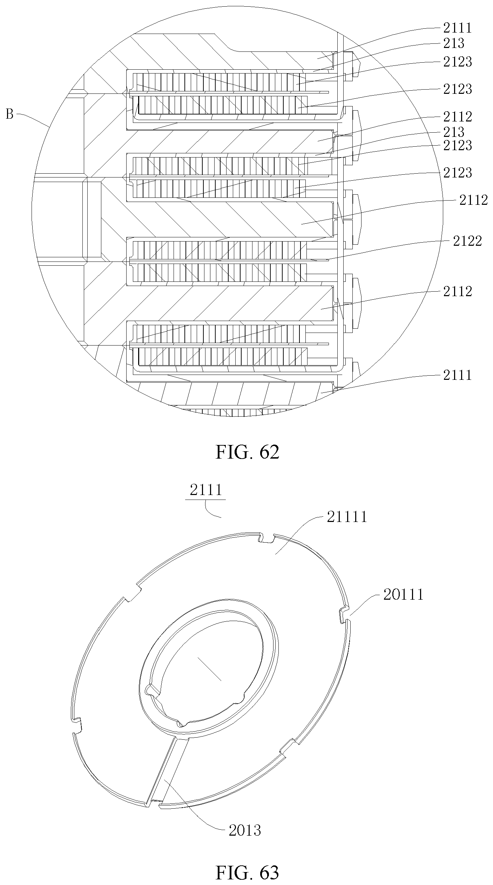

In some embodiments, with reference to FIG. 63, FIG. 64, and FIG. 65, the first-type core 2111 is provided with a first annular groove 21111, a wire arrangement groove 2013, and a recess 20111. A structure of the insulating bobbin 213 is similar to a structure of the first-type core 2111. The insulating bobbin 213 is provided with a second annular groove 2138, a lead channel 2131, and a wire-through groove 2132. The insulating bobbin 213 is nested in the first annular groove 21111. The coil 2123 is provided with a lead-out wire 21231 and a first lead-out end 2018. During processing of the coil 2123, the lead-out wire 21231 is bent at a right angle and wound from the inside outward, and is bent twice at the termination part of the coil 2123 to form the first lead-out end 2018. During assembly, the coil 2123 is nested in the first annular groove 21111, and the lead-out wire 21231 passes through the wire arrangement groove 2013 and the lead channel 2131 to extend to an outer side of the first-type core 2111, to be wired and powered on. This configuration provides a simple structure, consistent processing methods, simple processing process, few operation steps, and large operation space, thereby helping reducing costs and improving production efficiency.

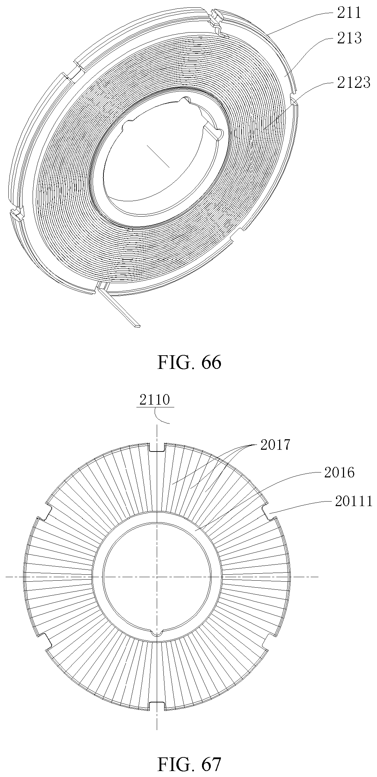

In some embodiments, as shown in FIG. 66, the insulating bobbin 213 and the coil 2123 are also disposed on the second-type core 2112. Both sides of the second-type core 2112 each have a first annular groove 21111, a wire arrangement groove 2013, and a recess 20111. The insulating bobbin 213 is nested in the first annular groove 21111, and in-phase coils 2123 are nested on the insulating bobbin 213. Two wire arrangement grooves 2013 are spaced 180° apart, and the coil 2123 on one side is connected, at a welding point, in series to the first lead-out end 2018 of the coil 2123 on the other side through the first lead-out end 2018. In this way, components have the same structure, the structure is simple, and production and processing efficiency is high, thereby facilitating mass production and cost control.

In addition, the coil 2123 is disposed on both end surfaces of the second-type core 2112, and space utilization is high.

In some embodiments, there are two bending configurations of the lead of the coil 2123 based on different opening directions of the lead channel 2131 of the insulating bobbin 213. For example, the lead-out wire 21231 is bent out from above the coil 2123, or the lead-out wire 21231 is bent out from below the coil 2123, where winding configurations of the coil 2123 are the same, that is, wounding from the inside outward, so that the winding configuration is simple.

In some embodiments, in-phase coils 2123 are also connected in series, and welding is still used at connection point. This offers good operability, and a simple process, thereby facilitating production and processing. In addition, the welding point is outside, making it more intuitive during assembly and welding, which helps avoid a wiring error and improve production efficiency. Moreover, this configuration provides large operation space, so that an operation is convenient, thereby reducing working time.

In conclusion, the core assembly 211 in this embodiment is formed by stacking independent modules. The module units are separated by the insulating paper 2122. Basic components of each module are a core, an insulating bobbin 213, and a coil 2123. A processing process of each component is simple, structures are basically the same, and complexity of the structure is low, which facilitates assembly and mass production and processing, thereby reducing costs and working time, and improving production efficiency.

In some embodiments, with reference to FIG. 67 to FIG. 71, the core assembly 211 in this embodiment is mainly applied to a linear motor assembly of an electromagnetic suspension. The core assembly 211 belongs to a stator assembly. In one aspect, the core assembly 211 provides support for the coil 2123, the insulating bobbin 213, and the like. In another aspect, the core assembly 211 provides a path for a magnetic field generated by the winding assembly 212, and withstands an interaction force generated between the magnetic field and power magnetic steel. A plurality of core assemblies 211 and the winding assembly 212 can be stacked and fastened in the axial direction to form the stator assembly 210.

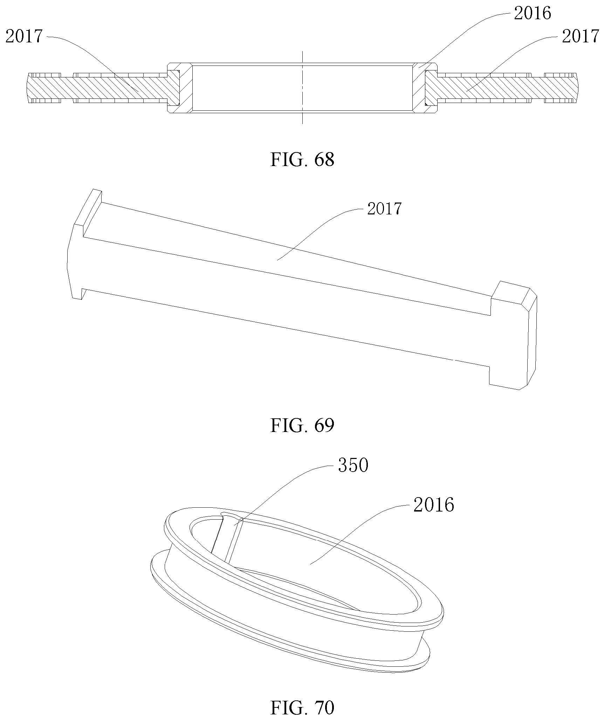

In some embodiments, with reference to FIG. 67 and FIG. 68, the core assembly 211 includes a third-type core 2110. The third-type core 2110 includes a support frame 2016 and a support core 2017. A plurality of support cores 2017 are assembled and stacked in the circumferential direction to form a circular core. The circular core and the support frame 2016 form the laminated third-type core 2110.

In some embodiments, with reference to FIG. 68, FIG. 69, and FIG. 70, a protrusion structure is disposed at an inner end of the support core 2017, and a support groove is disposed on an outer cylindrical surface of the support frame 2016. The support groove fits with the protrusion structure of the support core 2017 to limit and support a root of the support core 2017, to ensure structural stability of the third-type core 2110.

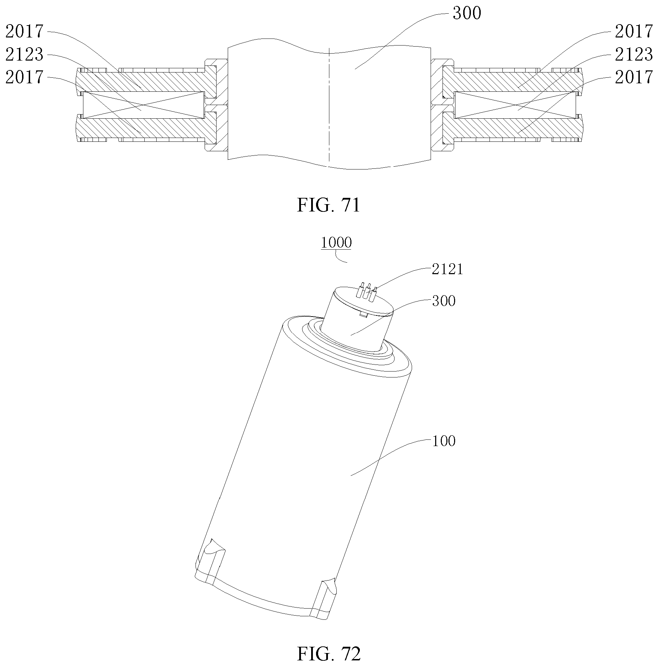

It will be noted that, as shown in FIG. 71, because the coil 2123 and the support core 2017 are stacked in the axial direction, the support frame 2016 is further configured to bear weights of the support core 2017, the coil 2123, and the like. Providing the support groove on the outer cylindrical surface of the support frame 2016 may further avoid that the weights are directly borne by the third-type core 2110, thereby improving reliability of the third-type core 2110.

In some embodiments, the support frame 2016 may be designed as an integrated structure, or may be designed as split upper and lower structures, which are then connected through a fastener or the like.

In a specific example, the support frame 2016 uses an integrated design solution to reduce difficulty in forming the support frame 2016, and improve structural strength of the support frame 2016.

In some embodiments, as shown in FIG. 67, a recess 20111 may be provided at an outer end of the support core 2017 based on a requirement, and is used for connecting different coils 2123.

Locations, shapes, and a quantity of recesses 20111 may be adjusted based on a requirement. Shapes of recesses 20111 of the same third-type core 2110 are recommended to be unified, thereby reducing specifications of the support core 2017.

In some embodiments, as shown in FIG. 69, the support core 2017 is fan-shaped, with an inner side being thinner and an outer side being thicker. In addition, a thickness of the support core 2017 needs to be as small as possible, provided that the support core 2017 meets process and use requirements or other requirements. A shape of a single support core 2017 may be adjusted based on a requirement, for example, provided with a recess 20111, but a fitting relationship between circumferential support cores 2017 needs to be met, and a requirement on a shape or the like of the third-type core 2110 needs to be met. In addition, specifications of the support core 2017 should be minimized, to facilitate production and assembly.

In some embodiments, the support core 2017 uses a magnetically conductive material, and uses a material with high resistivity as far as possible. An insulating material is disposed on a left side and a right side in a circumferential lamination direction, for example, coating paint. In addition, an adhesive substance needs to be coated. Different support cores 2017 are reliably connected through the adhesive substance. A thickness of a coating material should be as small as possible while a requirement is met, thereby reducing occupation of space, and avoiding an excessive reduction in magnetic permeability of the third-type core 2110.

In some embodiments, if the adhesive substance meets an insulation requirement, an insulating material no longer needs to be coated.

In some embodiments, as shown in FIG. 70, the support frame 2016 is ring-shaped, uses a magnetically conductive material, and uses a material with high resistivity as far as possible. A thickness of the support frame 2016 should be as small as possible, provided that process and use requirements or the like are met.

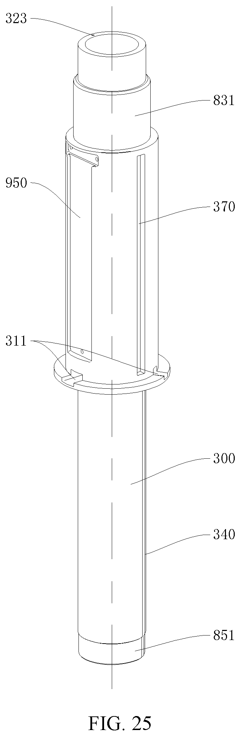

In some embodiments, as shown in FIG. 70, a second positioning portion 350 is disposed on an inner cylindrical surface of the support frame 2016, and a first positioning portion 340 (for a specific structure of the first positioning portion 340, referring to FIG. 25) is disposed on the central rod 300. The first positioning portion 340 fits with the second positioning portion 350 so that the central rod 300 and the support frame 2016 are relatively stationary, to implement circumferential limiting on the third-type core 2110 and the central rod 300, thereby avoiding rotation of the third-type core 2110 around the central rod 300, and ensuring working performance of the third-type core 2110.

In some embodiments, the first positioning portion 340 is formed as a recess provided on an outer peripheral wall of the central rod 300, and the second positioning portion 350 is a positioning groove. An anti-rotation rod 360 is disposed between the first positioning portion 340 and the second positioning portion 350, to limit locations of the central rod 300 and the support frame 2016, so that the central rod 300 and the support frame 2016 are relatively stationary, and difficulty in limiting the central rod 300 and the support frame 2016 is reduced.

Optionally, shapes and a quantity of second positioning portions 350 may be set based on a requirement.

In some embodiments, as shown in FIG. 71, third-type cores 2110 are stacked in the axial direction of the stator central rod, and the coil 2123 is placed between the third-type cores 2110. After the electromagnetic actuator 1000 is powered on, the coil 2123 generates a magnetic field when energized. If a current changes, the magnetic field changes accordingly. This change causes an induction current, that is, an eddy current, to be generated inside the third-type core 2110. The eddy current causes a heat loss, which reduces working efficiency of the electromagnetic actuator 1000. The third-type core 2110 is divided into several support cores 2017 in the circumferential direction and the support cores 2017 are designed to be insulated from each other, so that an original relatively long eddy current circuit can be interrupted, and the eddy current can only pass through a relatively small cross-sectional area in a long circuit of each support core 2017, which increases resistance on an eddy current path, and reduces the eddy current to increase an eddy current loss. In addition, use of a material with higher resistivity is also intended to increase the resistance on the eddy current path.

In some embodiments, the support frame 2 is of a continuous structure in the circumferential direction, which causes an eddy current loss. Therefore, a thickness of the support frame 2 should be as small as possible.

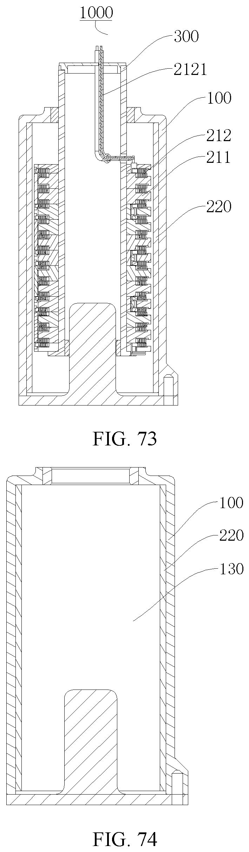

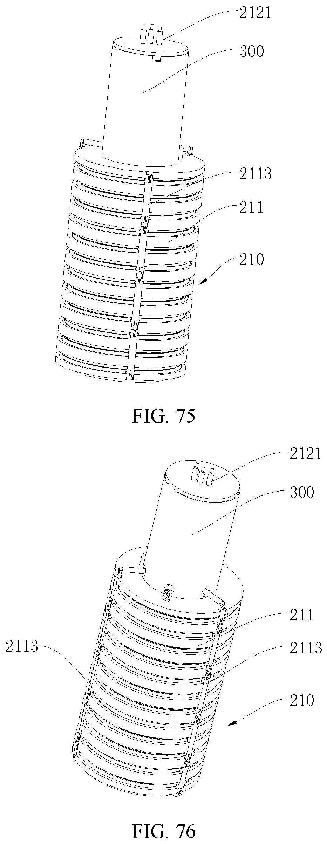

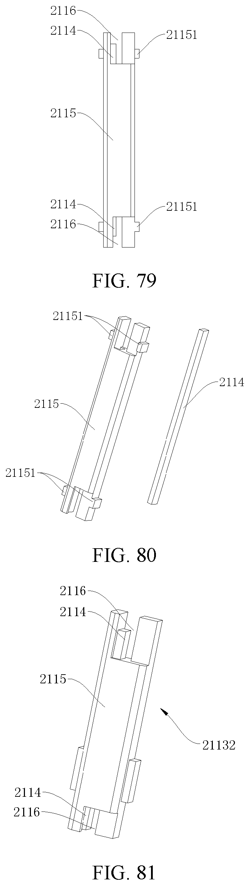

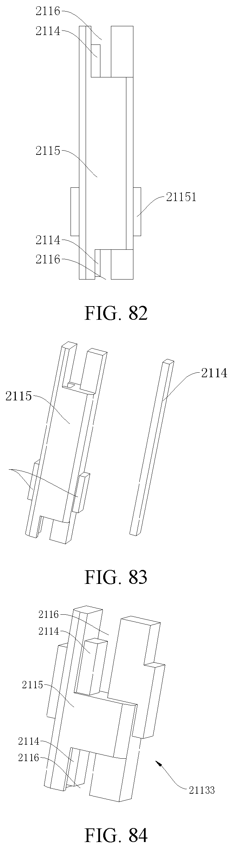

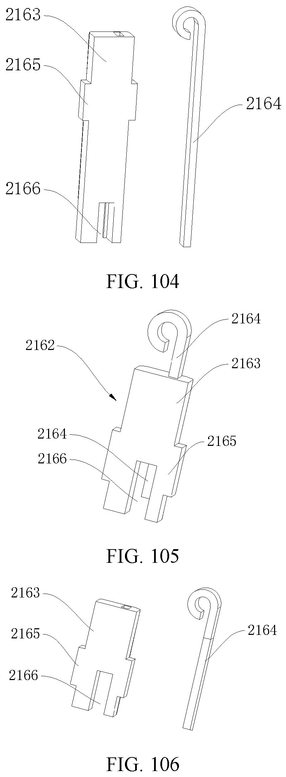

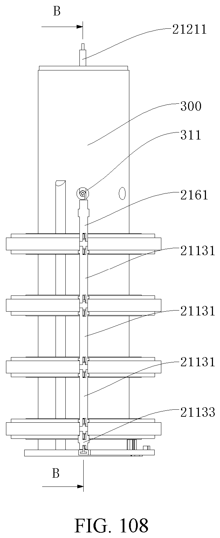

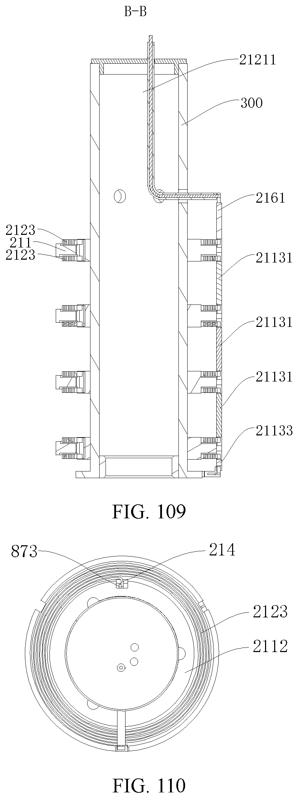

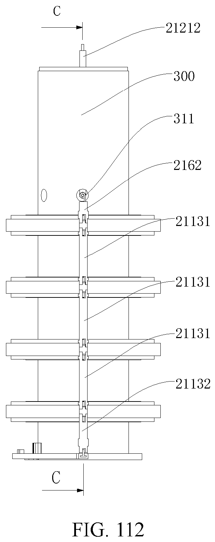

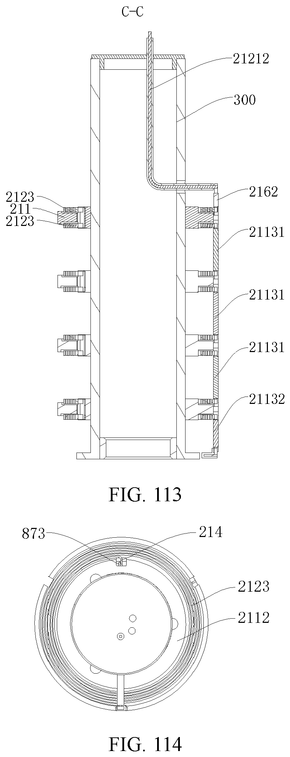

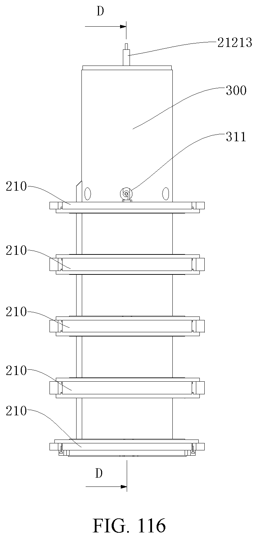

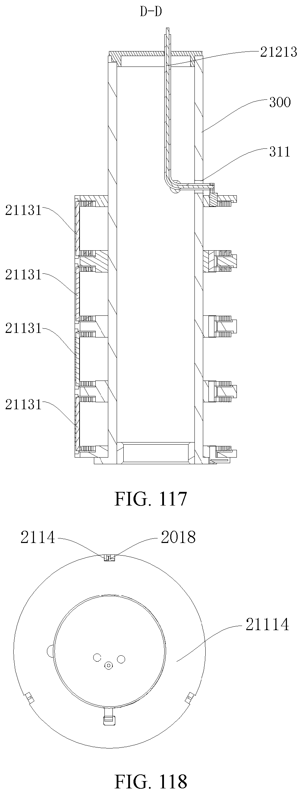

In some embodiments, with reference to FIG. 72 to FIG. 118, the electromagnetic actuator 1000 further includes a wiring assembly 2113, and in-phase coils 2123 disposed at intervals in the axial direction of the central rod 300 are electrically connected by using the wiring assembly 2113. In this way, in-phase coils 2123 are electrically connected, and difficulty in electrically connecting the in-phase coils 2123 is reduced.

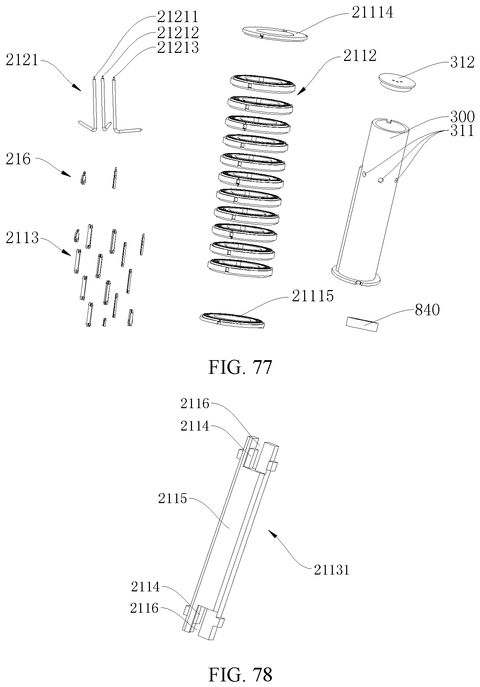

In some embodiments, with reference to FIG. 77 to FIG. 86, the wiring assembly 2113 includes a conducting member 2114 and an insulating layer 2115. The insulating layer 2115 wraps the conducting member 2114, and each of two ends of the conducting member 2114 is provided with a limiting member 2116 configured to position and electrically connect to the coil 2123. In other words, the limiting member 2116 is configured to position the coil 2123 and electrically connect to the coil 2123, to electrically connect in-phase coils 2123 and ensure location stability of the coil 2123.

In addition, the insulating layer 2115 is disposed to wrap the conducting member 2114, so that service life of the conducting member 2114 can be prolonged, and use safety of the conducting member 2114 can be further improved.

In some embodiments, with reference to FIG. 78 to FIG. 86, the limiting member 2116 is formed in a wire-clamping groove disposed on the conducting member 2114, so that the limiting member 2116 is used to position the coil 2123 and electrically connect to the coil 2123, to electrically connect in-phase coils 2123, and reduce difficulty in electrically connecting the in-phase coils 2123.

It will be noted that the main innovation point of this embodiment is a winding wiring configuration applied to the electromagnetic actuator 1000, and the winding wiring configuration is novel, simple, efficient, and reliable.

With reference to FIG. 72 to FIG. 77, the electromagnetic actuator 1000 in this embodiment includes a mover assembly and a stator assembly. The mover assembly and the stator assembly may linearly move relative to each other. The stator assembly includes components such as a central rod 300, a guide bearing 840, a sealing cover 312, a first core unit 21114, a plurality of second-type cores 2112, a second core unit 21115, a wiring assembly 2113, a lead-out assembly 216, and a connection wire 2121. The first core unit 21114, the plurality of second-type cores 2112, the second core unit 21115, and the like are all sleeved on an outer side of the central rod 300. The guide bearing 840 is assembled inside the central rod 300, and the sealing cover 312 is assembled on a top of the central rod 300, which respectively provide a limiting function and a sealing function.

In some embodiments, as shown in FIG. 77, the connection wire 2121 includes a first-phase lead 21211, a second-phase lead 21212, and a third-phase lead 21213. There are three wire outlets 311 on an upper part of the central rod 300. The first-phase lead 21211, the second-phase lead 21212, and the third-phase lead 21213 respectively pass through the three wire outlets 311, to facilitate connection between the connection wire 2121 and the coil 2123.

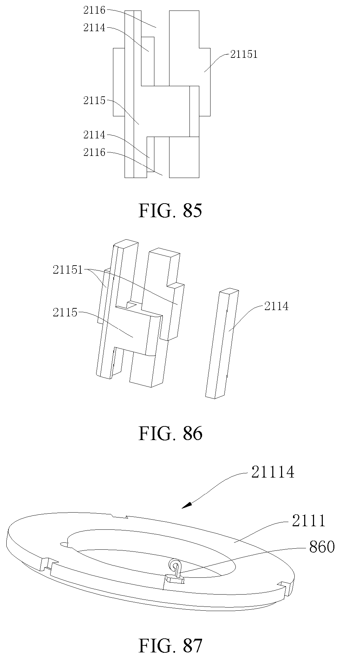

In some embodiments, as shown in FIG. 87 to FIG. 92, the first core unit 21114 includes a first-type core 2111, a coil 2123, and an inner lead-out apparatus 860. The coil 2123 is sleeved on the first-type core 2111, and the coil 2123 is a multi-layer ring wound by a conducting wire. A radial outer-side terminal is bent outward in an annular winding direction to form a first lead-out end 2018, and a radial inner terminal is bent inward in the annular winding direction to form a second lead-out end 214. The inner lead-out apparatus 860 is embedded in the inside of the first-type core 2111 and is connected to the second lead-out end 214 of the coil 2123, to implement an in-phase electrical connection.

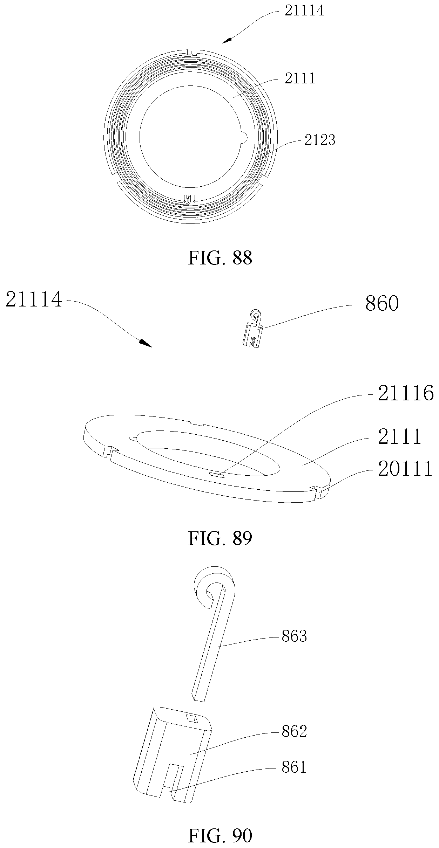

In some embodiments, as shown in FIG. 89, a first internal mounting hole 21116 for assembling the inner lead-out apparatus 860 is disposed inside the first-type core 2111, to embed the inner lead-out apparatus 860 into the inside of the first-type core 2111.

In some embodiments, an outer layer of the coil 2123 is provided with an insulating enamel coating to protect the coil 2123.

It will be noted that, bending directions of the first lead-out end 2018 and the second lead-out end 214 are the same as the winding direction of the coil 2123, and the bending is very smooth, and does not cause any damage to another feature of the coil 2123. Therefore, enamel coatings of the first lead-out end 2018 and the second lead-out end 214 may be peeled off, to connect the inner lead-out apparatus 860 and the second lead-out end 214.

In some embodiments, as shown in FIG. 89 and FIG. 90, the inner lead-out apparatus 860 includes a first insulating member 862 and a first conducting wire 863, and there is a first assembling member 861 between bottoms of the first insulating member 862 and the first conducting wire 863. In the first core unit 21114, the second lead-out end 214 of the coil 2123 is clamped to the first assembling member 861 of the inner lead-out apparatus 860 and is connected to the first conducting wire 863, and a top of the first conducting wire 863 is connected to the third-phase lead 21213, to connect the coil 2123 and the third-phase lead 21213, thereby reducing difficulty in connecting the coil 2123 and the third-phase lead 21213.

In some embodiments, as shown in FIG. 89, a plurality of recesses 20111 are provided on an outer side of the first-type core 2111, and the first lead-out end 2018 of the coil 2123 is located in one of the recesses 20111, to reduce difficulty in connecting the first lead-out end 2018.

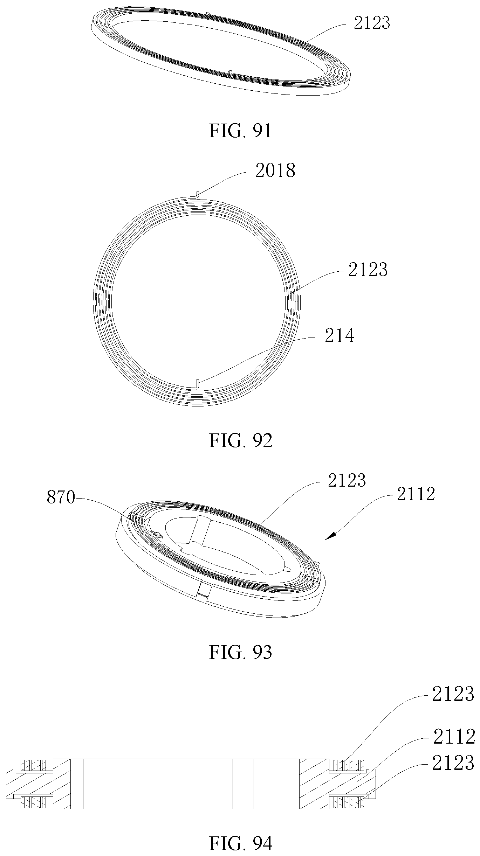

In some embodiments, as shown in FIG. 93, FIG. 94, and FIG. 95, the second-type core 2112 includes a second-type core 2112, two coils 2123, and an inner wiring apparatus 870. The two coils 2123 are respectively sleeved on two sides of the second-type core 2112, and the inner wiring apparatus 870 is embedded in the inside of the second-type core 2112, to electrically connect the inner wiring apparatus 870 and the coil 2123.

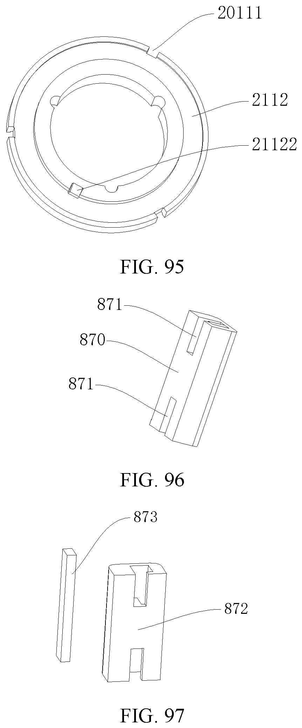

In some embodiments, as shown in FIG. 95, a second internal mounting hole 21122 for assembling the inner wiring apparatus 870 is disposed inside the second-type core 2112, to embed the inner wiring apparatus 870 into the inside of the second-type core 2112.

In some embodiments, as shown in FIG. 96 and FIG. 97, the inner wiring apparatus 870 includes a second insulating member 872 and a second conducting wire 873. Two second assembling members 871 are formed between the second insulating member 872 and the second conducting wire 873. In the second-type core 2112, second lead-out ends 214 of upper and lower coils 2123 are respectively clamped in the two assembling members 871 of the inner wiring apparatus 870 and is connected to the second conducting wire 873, so that two coils 2123 on the same second-type core 2112 can be electrically connected by using the inner wiring apparatus 870, thereby forming a conductive path.

In some embodiments, as shown in FIG. 95, a plurality of recesses 20111 are disposed on an outer side of the second-type core 2112, and first lead-out ends 2018 of both coils 2123 are located in one of the recesses 20111, to reduce difficulty in connecting the first lead-out end 2018.

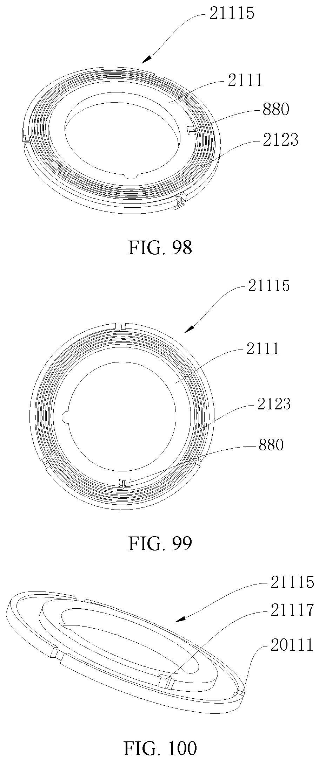

In some embodiments, as shown in FIG. 98, FIG. 99, and FIG. 100, the second core unit 21115 includes a first-type core 2111, a coil 2123, and a bottom wiring apparatus 880. The coil 2123 is sleeved on an upper part of the first-type core 2111, and the bottom wiring apparatus 880 is located at a lower part of the first-type core 2111. A third internal mounting hole 21117 is provided in the first-type core 2111, and three recesses 20111 are provided on an outer side of the first-type core 2111.

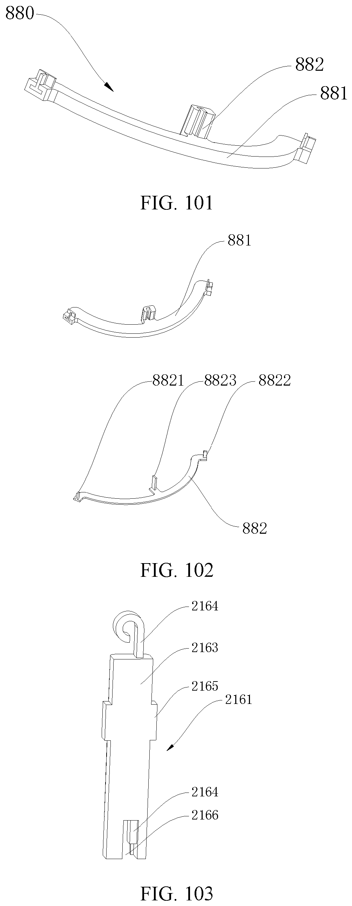

In some embodiments, as shown in FIG. 101 and FIG. 102, the bottom wiring apparatus 880 includes a third insulating member 881 and a third conducting wire 882, and the third conducting wire 882 is provided with a first-phase terminal 8821, a second-phase terminal 8822, and a third-phase terminal 8823. In the second core unit 21115, the third-phase terminal 8823 is embedded into the third internal mounting hole 21117 inside the first-type core 2111 and is connected to the second lead-out end 214 of the coil 2123, and the first-phase terminal 8821 and the second-phase terminal 8822 are respectively located in two recesses 20111 on the outer side of the first-type core 2111.

In some embodiments, with reference to FIG. 78 to FIG. 86, the wiring assembly 2113 includes a long wiring assembly 21131, a medium wiring assembly 21132, and a short wiring assembly 21133. The long wiring assembly 21131, the medium wiring assembly 21132, and the short wiring assembly 21133 have the same function and similar features. A length of the long wiring assembly 21131 is greater than a length of the medium wiring assembly 21132, and the length of the medium wiring assembly 21132 is greater than a length of the short wiring assembly 21133.

In some embodiments, with reference to FIG. 78, FIG. 79, and FIG. 80, a first limiting feature 21151 is further disposed on the insulating layer 2115 of the wiring assembly 2113, to facilitate positioning of the wiring assembly 2113.

In some embodiments, with reference to FIG. 103 to FIG. 106, the lead-out assembly 216 includes a long lead-out assembly 2161 and a short lead-out assembly 2162. The long lead-out assembly 2161 and the short lead-out assembly 2162 have the same wiring apparatus function and similar features. A length of the long lead-out assembly 2161 is greater than a length of the short lead-out assembly 2162.

In some embodiments, with reference to FIG. 103 to FIG. 106, the long lead-out assembly 2161 and the short lead-out assembly 2162 each include a fourth insulating member 2163 and a fourth conducting wire 2164. A wire-clamping recess 2166 is formed at bottoms of the fourth insulating member 2163 and the fourth conducting wire 2164, and the recess 2166 is configured to connect to the coil 2123.

In some embodiments, with reference to FIG. 103 to FIG. 106, a second limiting feature 2165 is disposed on the fourth insulating member 2163, to facilitate positioning of the wiring assembly 216.

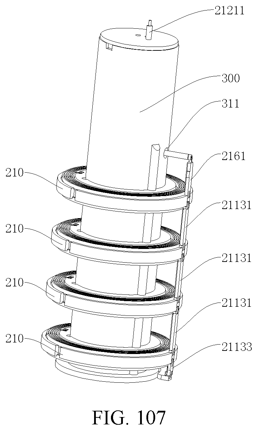

In some embodiments, with reference to FIG. 107 to FIG. 110, a plurality of second-type cores 2112, a plurality of long wiring assemblies 21131 and short wiring assemblies 21133, and a long lead-out assembly 2161 form a first-phase structure of the stator assembly 210. In the first-phase structure, first lead-out ends 2018 of coils 2123 of each second-type core 2112 are located in the same direction when viewed from top to bottom. The first lead-out end 2018 of an upper coil 2123 of a first-layer second-type core 2112 is connected to the first-phase lead 21211 through the fourth conducting wire 2161 of the long lead-out assembly 2161, thereby forming a first-phase winding lead-out structure. The first lead-out end 2018 of a lower coil 2123 of the first-layer second-type core 2112 is vertically connected to the first lead-out end 2018 of an upper coil 2123 of a second-layer second-type core 2112 through a conducting member 2114 of a first long wiring assembly 21131. The first lead-out end 2018 of a lower coil 2123 of the second-layer second-type core 2112 is vertically connected to the first lead-out end 2018 of an upper coil 2123 of a third-layer second-type core 2112 through a conducting member 2114 of a second long wiring assembly 21131, and so on, until the first lead-out end 2018 of a lower coil 2123 of a last-layer second-type core 2112 is connected to the first-phase terminal 8821 of the bottom wiring apparatus 880. In this way, the first-phase structure of the stator assembly 210 is formed.

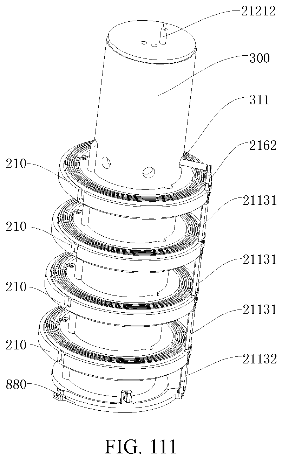

In some embodiments, with reference to FIG. 111 to FIG. 114, a plurality of second-type cores 2112, a plurality of long wiring assemblies 21131 and medium wiring assemblies 21132, and a short lead-out assembly 2162 form a second-phase structure of the stator assembly 210. In the second-phase structure, first lead-out ends 2018 of coils 2123 of each second-type core 2112 are located in the same direction when viewed from top to bottom. In addition, the second-phase structure is staggered from the first-phase structure, and is similar to the first-phase structure in the following: The first lead-out end 2018 of an upper coil 2123 of a first-layer second-type core 2112 is connected to the second-phase lead 21212 through the fourth conducting wire 2164 of the short lead-out assembly 2162, thereby forming a second-phase winding lead-out structure. The first lead-out end 2018 of a lower coil 2123 of the first-layer second-type core 2112 is vertically connected to the first lead-out end 2018 of an upper coil 2123 of a second-layer second-type core 2112 through a conducting member 2114 of a first long wiring assembly 21131. The first lead-out end 2018 of a lower coil 2123 of the second-layer second-type core 2112 is vertically connected to the first lead-out end 2018 of an upper coil 2123 of a third-layer second-type core 2112 through a conducting member 2114 of a second long wiring assembly 21131, and so on, until the first lead-out end 2018 of a lower coil 2123 of a last-layer second-type core 2112 is connected to the second-phase terminal 8822 of the bottom wiring apparatus 880. In this way, the second-phase structure of the stator assembly 210 is formed.

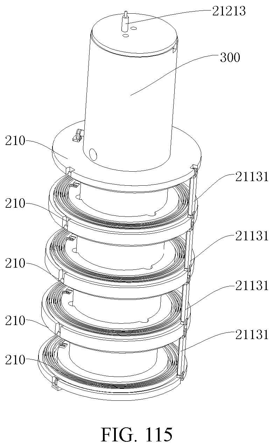

In some embodiments, with reference to FIG. 115 to FIG. 118, a first core unit 21114, a plurality of second-type cores 2112, a second core unit 21115, and a plurality of long wiring assemblies 21131 form a third-phase structure of the stator assembly 210. In the third-phase structure, first lead-out ends 2018 of coils 2123 are located in the same direction when viewed from top to bottom. In addition, the third-phase structure is staggered from the first-phase structure and the second-phase structure. In the third-phase structure, the first core unit 21114 is located in a first layer, and the second lead-out end 214 of the coil 2123 of the first core unit 21114 is connected to the third-phase lead 21213 through the inner lead-out apparatus 860, thereby forming a third-phase winding outlet structure. A second layer to a second to last layer each include the second-type core 2112, and a last layer is the second core unit 21115. The first lead-out end 2018 of a lower coil 2123 of the first-layer second-type core 2112 is vertically connected to the first lead-out end 2018 of an upper coil 2123 of the second-layer second-type core 2112 through a conducting member 2114 of a first long wiring assembly 21131. The first lead-out end 2018 of a lower coil 2123 of the second-layer second-type core 2112 is vertically connected to the first lead-out end 2018 of an upper coil 2123 of the third-layer second-type core 2112 through a conducting member 2114 of a second long wiring assembly 21131, and so on, until the first lead-out end 2018 of a lower coil 2123 of the last-layer second-type core 2112 is vertically connected to the first lead-out end 2018 of the coil 2123 of the bottom second core unit 21115 through a conducting member 2114 of the long wiring assembly 21131. The third-phase terminal 8823 of the bottom wiring apparatus 880 has been connected to the second lead-out end 214 of the coil 2123. In this way, the third-phase structure of the stator assembly 210 is formed.

In conclusion, outer edges of the wiring assembly 2113 and the lead-out assembly 216 in this embodiment do not exceed an outer boundary of the core assembly 211. In addition, the wiring assembly 2113 and the lead-out assembly 216 each have a limiting feature, and may be positioned during assembly.

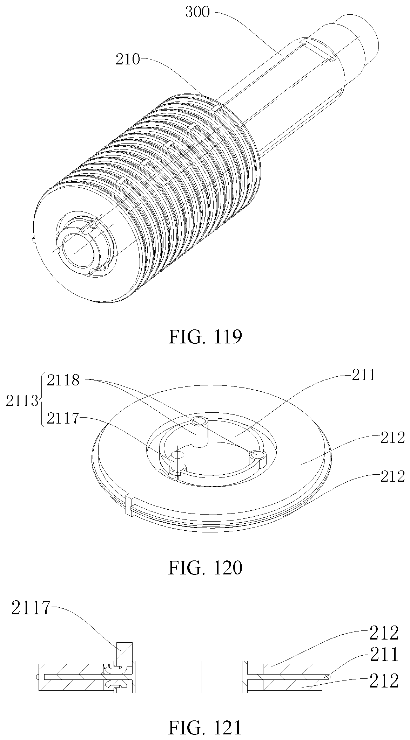

In some embodiments, with reference to FIG. 119 to FIG. 122, the wiring assembly 2113 includes a first terminal 2117 and a second terminal 2118. The first terminal 2117 and the second terminal 2118, which are plug-fitted with each other. Both the first terminal 2117 and the second terminal 2118 are disposed on the core assembly 211 and are electrically connected to the coil 2123. In other words, the wiring assembly 2113 is not limited to being formed in a configuration in the foregoing embodiment. The wiring assembly 2113 may alternatively include the first terminal 2117 and the second terminal 2118. The first terminal 2117 and the second terminal 2118 are disposed on the core assembly 211 and are electrically connected to the coil 2123. In this way, after the first terminal 2117 and the second terminal 2118 are connected to an external component, the coil 2123 can be electrically connected to an external structure member, thereby reducing difficulty in connecting the coil 2123.

In some embodiments, one of the first terminal 2117 and the second terminal 2118 is a jack, and the other is a plug. The jack is plug-fitted with the plug. This facilitates an electrical connection between the coil 2123 and the external structure member, thereby reducing difficulty in connecting the coil 2123.

It will be noted that a lead-out structure in this embodiment refers to a related structure designed for leading the winding assembly 212 out from the inside to the outside of the electromagnetic actuator 1000.

The stator assembly 210 is a part of a stator portion of the electromagnetic actuator 1000. The stator portion is on an inner side of the entire structure, and includes a connection wire 2121, a wire-through channel 330, a central rod 300, a first limiting member 380, a winding assembly 212, a core assembly 211, a guide bearing 840, and a limiting nut 850. The winding assembly 212 and the core assembly 211 form the stator assembly 210 (for a specific structure of the electromagnetic actuator 1000, referring to FIG. 22).

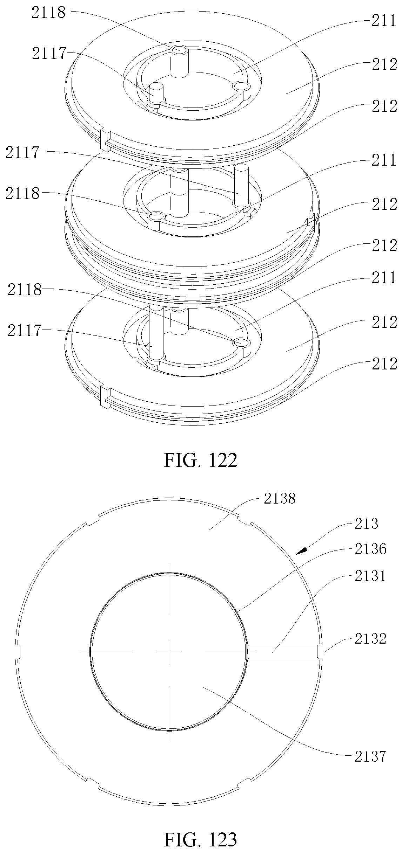

In some embodiments, with reference to FIG. 119, FIG. 120, and FIG. 121, both the winding assembly 212 and the core assembly 211 are annular, and the winding assembly 212 is assembled on each of upper and lower surfaces of the core assembly 211, and the stator assembly 210 is formed by stacking several winding assemblies 212 and several core assembly 211 in layer by layer (as shown in FIG. 122). After stacking is completed, the stator assembly 210 is sleeved on the central rod 300 and is finally cylindrical.

In some embodiments, three recesses 20111 are evenly disposed on an upper circumference of the core assembly 211, and the three recesses 20111 respectively correspond to three phases of wires of a motor. Three second terminals 2118 are disposed on the core assembly 211, and a winding wire of the winding assembly 212 passes through one of the second terminals 2118 and is formed as a first terminal 2117, to implement that the first terminal 2117 is on the core assembly 211. However, the other two second terminals 2118 are of a through-type. Correspondingly, on the other surface, one second terminal 2118 is led out, and the other two wire outlets are of a through-type. The first terminals 2117 on the two surfaces of the core assembly 211 are respectively formed as a protruding male member and a recessed female member in fitting.

In some embodiments, the winding assembly 212 and the core assembly 211 are sequentially stacked according to three phases A, B, and C, that is, in-phase winding assemblies 212 are not adjacent to each other. Therefore, as shown in FIG. 122, the first terminal 2117 on one surface of the core assembly 211 needs to pass through a plurality of core assemblies 211 assembled with winding assemblies 212 of another phase, to be connected to a core assembly 211 assembled with in-phase winding assemblies 212. Therefore, the first terminal 2117 is relatively long.

It will be noted that, in this embodiment, in-phase winding assemblies 212 are connected by using the first terminal 2117, so that an in-phase winding connection does not need to be performed through welding, and is secure and reliable. In addition, the first terminal 2117 passes through the inner side of the core assembly 211 without affecting relative movement between the stator assembly 210 and the mover assembly 220. This prevents movement between the stator assembly 210 and the mover assembly 220 from damaging a winding wire, thereby ensuring performance of the coil 2123.

In some embodiments, the connection wire 2121 passes into a top of the wire-through channel 330 and exits from a bottom of the wire-through channel 330. Three pipe outlets are disposed below the wire-through channel 330. There are three wire outlets 311 on the central rod 300. The three pipe outlets of the wire-through channel 330, the three wire outlets on the central rod 300, and three second terminals 2118 on the core assembly 211 are in one-to-one correspondence. During assembly, the wire-through channel 330 is disposed on the central rod 300, and the connection wire 2121 separately passes through the wire-through channel 330 and passes through the wire outlet 311 of the central rod 300.

According to the foregoing arrangement, a lead wire is fastened in the entire process, and the central rod 300 plays a role in fastening and protecting assembled wires, which well resolves a problem of risk of extrusion and scratch herein in the conventional technologies. In addition, the first limiting member 380 is sleeved on the upper part of the central rod 300, and the first limiting member 380 and the outlets of the central rod 300 jointly fasten the connection wire 2121. Moreover, the first limiting member 380 is made of a rubber material, and can cushion impact of a surrounding component on the connection wire 2121 in an extreme condition, thereby protecting the connection wire 2121, and ensuring reliability of an electrical system.

In conclusion, a lead-out structure of the electromagnetic actuator 1000 in this embodiment uses a relative relationship between peripheral components to intelligently resolve a problem of difficult lead-out, and has advantages of safety, reliability, convenience of assembly and disassembly, a compact space design, and the like.

In some embodiments, with reference to FIG. 60, FIG. 61, and FIG. 62, an insulating bobbin 213 is disposed between the core assembly 211 and the winding assembly 212, a lead channel 2131 is disposed on an axial end surface of the insulating bobbin 213, and the lead channel 2131 extends in the radial direction of the core assembly 211. The insulating bobbin 213 is disposed between the core assembly 211 and the winding assembly 212, to implement insulation fitting between the core assembly 211 and the winding assembly 212, thereby ensuring performance of the stator assembly 210.

In addition, the lead channel 2131 extending in the radial direction of the core assembly 211 is disposed on the axial end surface of the insulating bobbin 213, so that the lead-out wire 21231 of the coil 2123 is led out to the outer side of the core assembly 211, thereby facilitating wiring and powering on of the coil 2123.

In some embodiments, with reference to FIG. 123 to FIG. 127, a plurality of wire-through grooves 2132 provided at uniform intervals are provided on an outer peripheral wall of the insulating bobbin 213, and at least one wire-through groove 2132 is connected to the lead channel 2131. In this way, it is convenient to lead out the connection wire 2121 for connecting coils 2123.

It will be noted that, the insulating bobbin 213 in this embodiment is provided, so that the core assembly 211, the winding assembly 212, and the insulating bobbin 213 all can be formed as independent components, which reduces difficulty in designing the core assembly 211, the winding assembly 212, and the insulating bobbin 213. In addition, the insulating bobbin 213 in this embodiment has advantages of a low processing difficulty, convenient maintenance, a simple structure, and high consistency in both arrangement space and production efficiency.

In some embodiments, with reference to FIG. 123 to FIG. 127, the insulating bobbin 213 mainly includes a lead channel 2131, a second annular groove 2138, and a wire-through groove 2132.

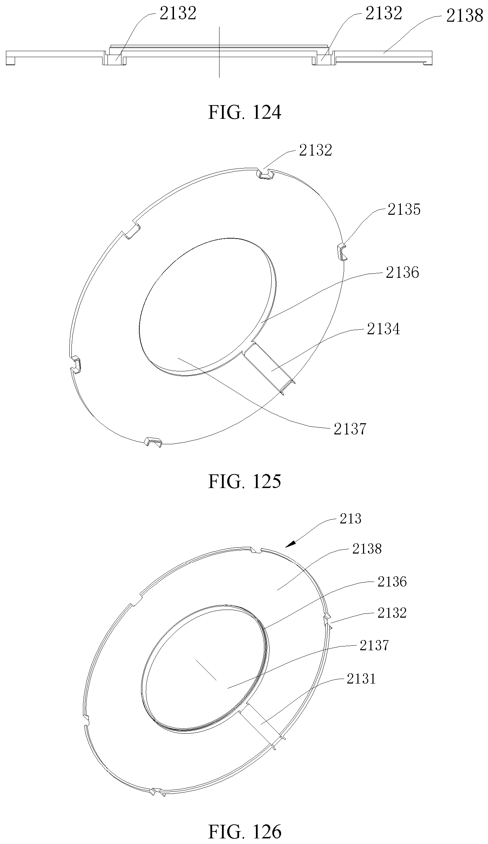

In some embodiments, with reference to FIG. 123 and FIG. 126, six wire-through grooves 2132 are provided on an outer periphery of the insulating bobbin 213 in a circumferential direction of the insulating bobbin 213. Locations of the six wire-through grooves 2132 are evenly distributed, that is, two grooves are spaced 60° apart from each other. The second annular groove 2138 is provided on a surface of the insulating bobbin 213. Winding space is formed between second annular grooves 2138, and between an inner sidewall 2136 of the second annular groove 2138 and an outer sidewall of the second annular groove 2138. The winding space is used to assemble the coil 2123.

In some embodiments, a second boss structure 2134 formed by the lead channel 2131 and an insulating portion 2135 formed by the wire-through groove 2132 are disposed on an opposite side that is of the insulating bobbin 213 and on which the second annular groove 2138 is provided. The second boss structure 2134 and the insulating portion 2135 are mainly configured to be nested with a structural member on the core assembly 211, thereby greatly improving space utilization and reducing a volume occupied by the components. Therefore, a volume of an entire structure can be reduced, and fitting strength between the insulating bobbin 213 and the core assembly 211 can be ensured.

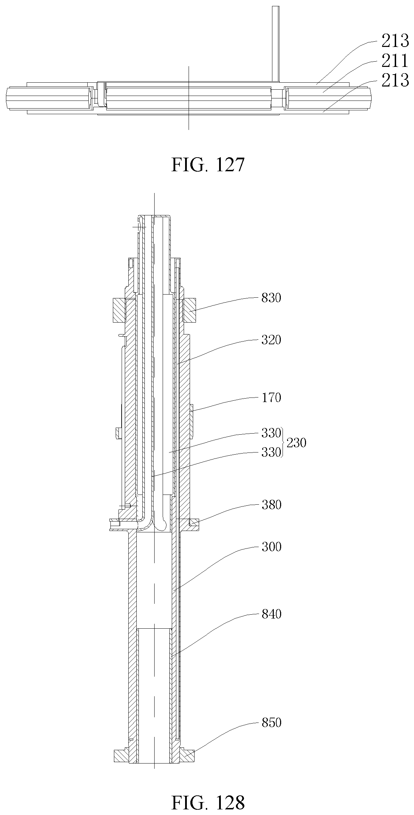

According to the foregoing arrangement, during use, the core assembly 211, the winding assembly 212, and the insulating bobbin 213 are assembled and combined into a separate module (as shown in FIG. 127). The insulating bobbin 213 is nested in the first annular groove 21111 on the surface of the core assembly 211, the second boss structure 2134 of the insulating bobbin 213 is combined with the wire arrangement groove 2013 in the first annular groove 21111, and the insulating portion 2135 formed by the wire-through groove 2132 is aligned with the recess 20111 in the circumferential direction of the core assembly 211. In this way, there is larger operation space when the coils 2123 are wired in series on the outside of the core assembly 211, which facilitates subsequent welding between the coils 2123 and facilitates operation.

It will be noted that in some embodiments, the stator assembly 210 is formed by stacking modules, and the module is formed by assembling the core assembly 211, the winding assembly 212, and the insulating bobbin 213. The winding assembly 212 and the insulating bobbin 213 exist on only one side of a module at an end part of the stator assembly 210. The winding assembly 212 and the insulating bobbin 213 are disposed on both ends of the core assembly 211 of a module in an axial middle part of the stator assembly 210. When a three-phase power supply is connected, coils 2123 of winding assemblies 212 of the same module are of the same phase, and a lead-in location and a lead-out location of the coil 2123 are spaced 180° apart. A lead wire of the coil 2123 passes through the lead channel 2131 on the insulating bobbin 213, and then passes through the wire-through groove 2132 to extend to an outer periphery of the core assembly 211. Series wiring in the module is performed at a portion where wire-through grooves 2132 of the insulating bobbins 213 on two sides are connected, and wiring is performed through welding. Performing wiring at the wire-passing groove 2132 provides relatively large operation space.

In addition, the lead channel 2131 is disposed on the surface of the insulating bobbin 213, so that a structure of the insulating bobbin 213 is unique. In this way, assembly and wiring errors can be effectively avoided, and production efficiency is improved.

In some embodiments, when a three-phase power supply is connected, not only winding coils need to be wired in series inside the module, but also modules connected to in-phase power supplies also need to be wired in series. An interval angle between lead wires, as well as an interval angle between a lead-in end and a lead-out end, are both multiples of 60°. Therefore, six evenly distributed wire-through grooves 2132 are disposed on the periphery in the circumference direction of the insulating bobbin 213, which improves generality and utilization of the components, greatly improves production efficiency, and reduces costs, thereby facilitating mass production.

In some embodiments, an assembly hole 2137 is provided at a center of the insulating bobbin 213, to facilitate assembly and fitting between the insulating bobbin 213 and the core assembly 211. In an axial direction of the assembly hole 2137, an outer edge of the insulating bobbin 213 protrudes from the first annular groove 21111, and an inner edge of the insulation fastening 213 protrudes from the first annular groove 21111, to implement insulation between a coil winding and a stator core.

In some embodiments, the inner sidewall 2136 is disposed around an outer periphery of the assembly hole 2137, to form a hollow cylinder of a specific wall thickness between the assembly hole 2137 of the insulating bobbin 213 and the second annular groove 2138.

In some embodiments, a stepped limiting platform is disposed on a surface of the hollow cylinder, two adjacent coils 2123 of different phases are separated from each other by the insulating paper 2122, and the insulating paper 2122 is nested on the hollow cylinder having a relatively thin wall. This facilitates fastening of the insulating paper 2122, and provides a compact structure and high material utilization.

In some embodiments, a first limiting structure is disposed on the central rod 300, a limiting portion is disposed on the core assembly 211, and the limiting portion fits with the first limiting structure to limit rotation of the core assembly 211 relative to the central rod 300. In this way, location stability of the core assembly 211 is improved, and a relative action can be effectively generated between the central rod 300 and the housing 100 under coupling fitting between the mover assembly 220 and the stator assembly 210, thereby ensuring working performance of the electromagnetic actuator 1000.

In some embodiments, the limiting portion on the core assembly 211 will be understood as the positioning protrusion 21415 in the foregoing.

In some embodiments, a cylindrical pin is disposed between the core assembly 211 and the central rod 300 to limit rotation of the core assembly 211 relative to the central rod 300.

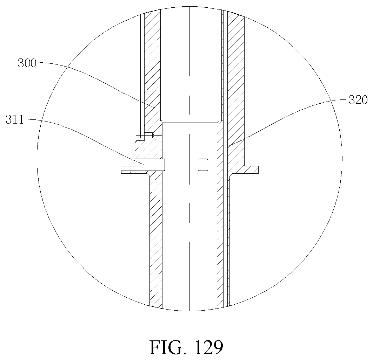

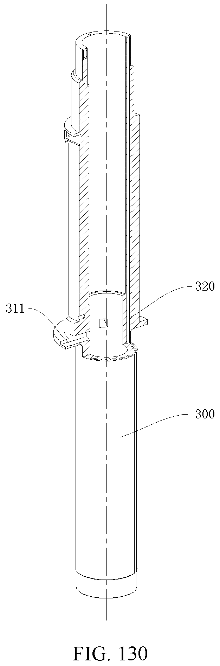

In some embodiments, with reference to FIG. 128 to FIG. 131, the central rod 300 is provided with a first positioning portion 340 (for a specific structure of the first positioning portion 340, referring to FIG. 25), the core assembly 211 is provided with a second positioning portion 350, and the first positioning portion 340 fits with the second positioning portion 350, so that the central rod 300 and the core assembly 211 are relatively stationary. In this way, the core assembly 211 and the central rod 300 are circumferentially limited, to avoid rotation of the core assembly 211 around the central rod 300, thereby ensuring working performance of the core assembly 211.

In some embodiments, with reference to FIG. 128 to FIG. 131, the first positioning portion 340 is formed as a recess provided on the outer peripheral wall of the central rod 300, and the second positioning portion 350 is formed as a recess provided on the core assembly 211. An anti-rotation rod 360 is disposed between the first positioning portion 340 and the second positioning portion 350, to limit locations of the central rod 300 and the core assembly 211, so that the central rod 300 and the core assembly 211 are relatively stationary, difficulty in limiting the central rod 300 and the core assembly 211 is reduced, and it is ensured that lead-out of the coil 2123 is consistent with a designed state.

It will be noted that, according to the foregoing arrangement, the following problem may be further avoided: When the central rod 300 fits with the tower top, the core assembly 211 rotates around a central axis of the central rod 300 together with the assembly nut 830, and cannot be tightened.

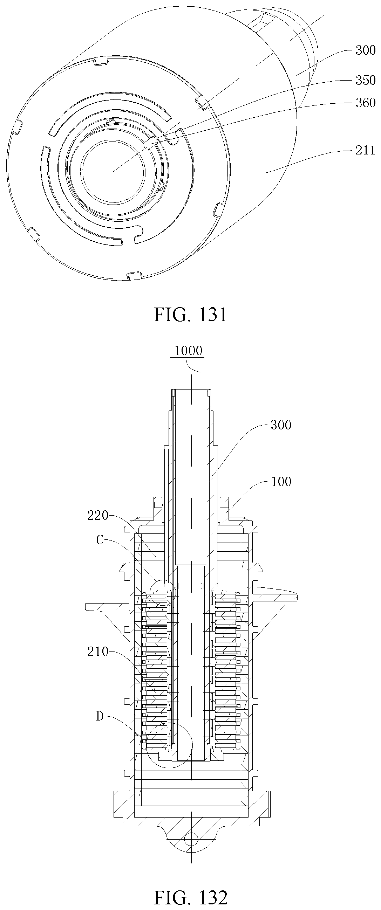

In some embodiments, with reference to FIG. 132 to FIG. 136, the electromagnetic actuator 1000 further includes a first limiting member 380 and a second limiting member 390. The first limiting member 380 and the second limiting member 390 are disposed on the central rod 300 at intervals in the axial direction of the central rod 300. The first limiting member 380 and the second limiting member 390 separately abut against the core assembly 211 to limit axial displacement of the core assembly 211. In this way, the core assembly 211 is prevented from moving relative to the central rod 300 in the axial direction of the central rod 300, so that the core assembly 211 is more securely disposed on the central rod 300, and a magnetic core 211 is prevented from falling off from the central rod 300, thereby ensuring stable reliable mounting of the core assembly 211 on the central rod 300.

In some embodiments, with reference to FIG. 132 to FIG. 136, the first limiting member 380 and the second limiting member 390 are separately adapted to abut against an inner wall of the housing 100 to limit a movement range of the housing 100. Herein, this means the following: During movement of the housing 100, the first limiting member 380 and the second limiting member 390 may separately abut against the inner wall of the housing 100, to limit the movement range of the housing 100 and ensure location stability of the housing 100 in movement, thereby ensuring working performance of the electromagnetic actuator 1000.

In some embodiments, with reference to FIG. 132 to FIG. 136, one of the first limiting member 380 and the second limiting member 390 is integrated with the central rod 300, and the other is separated from the central rod 300. Such integration can reduce a quantity of components of the electromagnetic actuator 1000, and reduce complexity of a structure of the electromagnetic actuator 1000.

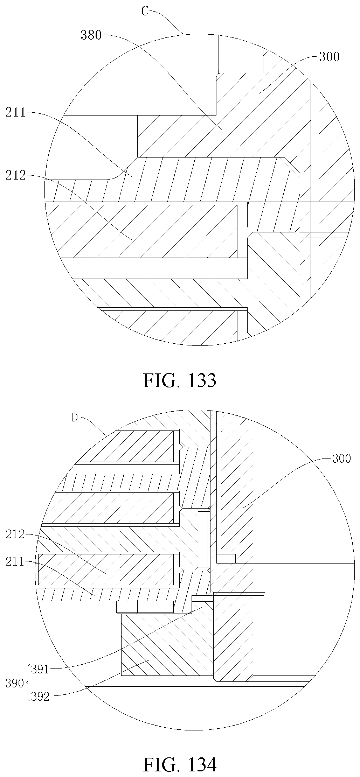

In some embodiments, with reference to FIG. 132 and FIG. 133, the first limiting member 380 and the central rod 300 are formed as an integrated part. Because a relative location between the first limiting member 380 and the central rod 300 remains unchanged, when the core assembly 211 is sleeved on the central rod 300, it is convenient to implement fitting between the first limiting member 380 and the core assembly 211, to limit a location of the core assembly 211 in the axial direction of the central rod 300 by using the first limiting member 380.

In some embodiments, with reference to FIG. 132 and FIG. 133, the central rod 300 is provided with a protrusion portion protruding outward radially to define the first limiting member 380, so that the first limiting member 380 and the central rod 300 are formed as an integrated part, and a connection between the first limiting member 380 and the central rod 300 is omitted.

In some embodiments, the other of the first limiting member 380 and the second limiting member 390 is threadedly fitted with the central rod 300. Herein, this means the following: When one of the first limiting member 380 and the second limiting member 390 is integrated with the central rod 300, the other of the first limiting member 380 and the second limiting member 390 is threadedly fitted with the central rod 300, to fixedly connect the other of the first limiting member 380 and the second limiting member 390 to the central rod 300, and ensure location stability of the other of the first limiting member 380 and the second limiting member 390, so that first limiting member 380 fits with the second limiting member 390 to limit axial displacement of the core assembly 211.

In some embodiments, the second limiting member 390 is formed as a threaded member, and the threaded member is threadedly fitted with the central rod 3000, so that the second limiting member 390 can be detachably disposed on the central rod 300.

In some embodiments, with reference to FIG. 132 and FIG. 134, the other of the first limiting member 380 and the second limiting member 390 includes a first portion 391 and a second portion 392, and the first portion 391 fits with the central rod 300. In the radial direction of the central rod 300, the second portion 392 is located on a radial outer side of the first portion 391. In the axial direction of the central rod 300, an axial length of the first portion 391 is greater than an axial length of the second portion 392. One part of the second portion 392 abuts against the core assembly 211, and the other part is spaced apart from the core assembly 211. The axial length of the first portion 391 is set to be greater than the axial length of the second portion 392, to increase an area in which the first portion 391 fits with the central rod 300, so that the other of the first limiting member 380 and the second limiting member 390 can be securely disposed on the central rod 300. Because the core assembly 211 includes a lead-out groove and a wire harness, setting the axial length of the first portion 391 to be greater than the axial length of the second portion 392 further makes the axial length of the second portion 392 relative small, to provide clearance for the wire harness.

In addition, the second portion 392 is located on the radial outer side of the first portion 391, so that one part of the second portion 392 abuts against the core assembly 211, and axial displacement of the core assembly 211 is limited by the other of the first limiting member 380 and the second limiting member 390.

In addition, the other part of the second portion 392 is spaced apart from the core assembly 211, to facilitate heat dissipation of the core assembly 211, so that a gap exists between the other part of the second portion 392 and the core assembly 211, thereby avoiding stress concentration.

It will be understood herein that the inner side and the outer side are described with respect to the axis of the central rod 300. The first portion 391 is closer to the central rod 300, and the second portion 392 is farther from the central rod 300. Therefore, in the radial direction of the central rod 300, the second portion 392 is located on the radial outer side of the first portion 391.

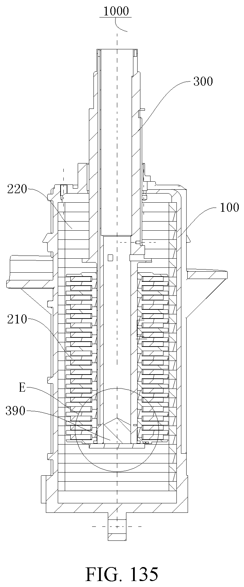

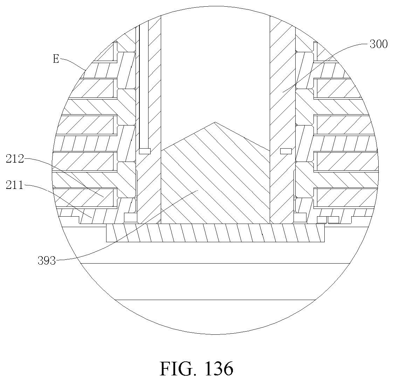

In some embodiments, with reference to FIG. 135 and FIG. 136, the other of the first limiting member 380 and the second limiting member 390 is mounted to an end part of the central rod 300 and a part thereof extends into the central rod 300, so that the other of the first limiting member 380 and the second limiting member 390 is detachably disposed in the central rod 300. In this way, the core assembly 211 is sleeved on the central rod 300 in the axial direction of the central rod 300, and then at least one of the first limiting member 380 and the second limiting member 390 is mounted on the central rod 300, to limit displacement of the core assembly 211 in the axial direction of the central rod 300 after the core assembly 211 is properly mounted.

In some embodiments, the second portion 392 of the other of the first limiting member 380 and the second limiting member 390 is formed as a mounting structure with a cushioning member. In this way, while the other of the first limiting member 380 and the second limiting member 390 is fastened to the central rod 300, the other of the first limiting member 380 and the second limiting member 390 can further achieve a cushioning effect.

In some embodiments, the first limiting member 380 and the second limiting member 390 are made of a rubber material, so that the first limiting member 380 and the second limiting member 390 achieve a cushioning effect.

In some embodiments, with reference to FIG. 135 and FIG. 136, the second limiting member 390 is mounted to the end part of the central rod 300 and a part thereof extends into the central rod 300. The second limiting member 390 includes a piston portion 393, and the piston portion 393 is made of an elastic material. When the piston portion 393 extends into the central rod 300, the piston portion 393 is elastically deformed and compressed to be in an interference fit with the inside of the central rod 300, to fasten the piston portion 393 to the central rod 300.

A partial structure of the second limiting member 390 protrudes from the piston portion 393 in the radial direction of the central rod 300, and a partial structure of the second limiting member 390 fits with the core assembly 211, to limit displacement of the core assembly 211 in the axial direction of the central rod 300.

In some embodiments, the first limiting member 380 and the second limiting member 390 are further formed as a limiting assembly of the stator assembly 210, to limit relative displacement of the stator assembly 210.

In some embodiments, during running of the electromagnetic actuator 1000, a relative linear motion may occur between the core assembly 211 and the housing 100. The first limiting member 380 may also play a role in limiting a lower limit of movement of the housing 100, and the second limiting member 390 may also play a role in limiting an upper limit of movement of the housing 100.

In a specific embodiment, the first limiting member 380 plays a role in limiting a crimping depth of the core assembly 211. After crimping is completed, the second limiting member 390 is connected to a bottom of the central rod 300, to prevent the core assembly 211 from falling off downward in the axial direction.

It will be noted that a specific implementation form of the first limiting member 380 and the second limiting member 390 includes but is not limited to a form of a nut, a piston, an integrated step surface, and the like.

In some embodiments, with reference to FIG. 128, FIG. 129, and FIG. 130, at least one cooling chamber 320 for accommodating a cooling medium is disposed in the central rod 300. In this way, the central rod 300 can be filled with the cooling medium, so that heat of the core assembly 211 is dissipated by using the cooling medium, thereby ensuring that the electromagnetic actuator 1000 can run efficiently for a long time, and avoid damage to internal components of the electromagnetic actuator 1000.

In some embodiments, a cooling chamber 320 is formed on an inner wall of the central rod 300. Before assembly, a cooling medium is added from a filling port 323 (for a specific structure of the filling port 323, referring to FIG. 25). Then, the filling port 323 is sealed, so that the cooling chamber 320 becomes a sealed cavity. When the electromagnetic actuator 1000 runs, heat on the core assembly 211 is transmitted to the cooling medium by using the central rod 300, and the cooling medium transmits the heat to the air through heat exchange circulation, thereby ensuring long-term and efficient running of the electromagnetic actuator 1000, and avoiding damage to an internal component.

In addition, no additional components such as a cooling pipe are added in this design, and the entire cooling solution has a compact structure.

In some embodiments, a projection of at least a part of the cooling chamber 320 in the radial direction overlaps with that of the core assembly 211. In this way, at least a part of the cooling chamber 320 can directly face the core assembly 211 in the radial direction, so that the cooling medium in the cooling chamber 320 is used to dissipate heat from the core assembly 211, thereby ensuring that the electromagnetic actuator 1000 can run efficiently for a long time, and avoiding damage to an internal component of the electromagnetic actuator 1000.

In some embodiments, at least a part of the cooling chamber 320 is located outside the accommodating cavity 130. In one aspect, it is convenient to transport the cooling medium toward the cooling chamber 320, and in another aspect, it is also conducive to cooling of the cooling medium, thereby ensuring heat dissipation performance of the cooling medium.

In some embodiments, the electromagnetic actuator 1000 further includes a first cooling tube. The first cooling tube is disposed in the cooling chamber 320, and a first cooling cavity is formed between the first cooling tube and the cooling chamber 320. One of the first cooling cavity and the first cooling tube is adapted to communicate with a first water inlet, and the other is adapted to communicate with a first water outlet (the example is not shown in the figures). In this way, the cooling medium may circulate and flow between the first cooling cavity and the first cooling tube, so that it is convenient to dissipate heat from the core assembly 211 by using the cooling medium, and heat dissipation performance of the cooling medium is ensured.

In some embodiments, the first cooling tube is spaced apart from an inner wall of the cooling chamber 320, so that a connection channel is formed between the first cooling tube and the cooling chamber 320. The connection channel is configured to connect the first cooling cavity to the first cooling tube. In this way, when one of the first cooling cavity and the first cooling tube communicates with the first water inlet and the other communicates with the first water outlet, it can be ensured that the cooling medium between the first water inlet and the first water outlet can sequentially flow through the first cooling cavity and the first cooling tube, which facilitates circulation and flow of the cooling medium, so that it is convenient to dissipate heat from the core assembly 211 by using the cooling medium.

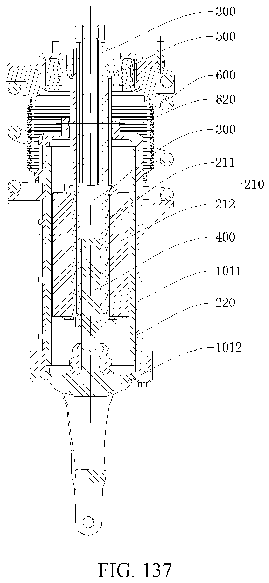

In some embodiments, with reference to FIG. 137 to FIG. 140, the electromagnetic actuator 1000 further includes a second cooling tube 32111 and a third cooling tube 32121. Both the second cooling tube 32111 and the third cooling tube 32121 are disposed in the cooling chamber 320 and communicate with the cooling chamber 320. One of the second cooling tube 32111 and the third cooling tube 32121 is adapted to communicate with a second water inlet 3211, and the other is adapted to communicate with a second water outlet 3212. In this way, the cooling medium can enter the cooling chamber 320 through the second water inlet 3211 and be discharged from the cooling chamber 320 through the second water outlet 3212, which helps circulation and flow of the medium.

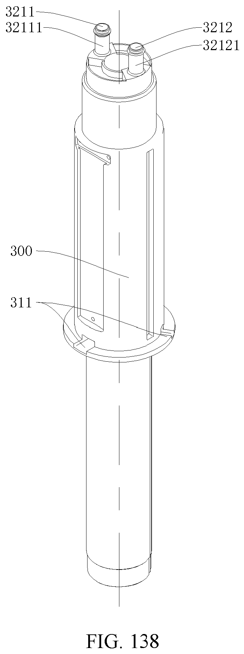

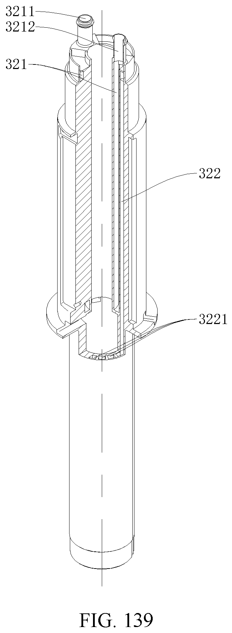

In some embodiments, with reference to FIG. 138 and FIG. 139, the second cooling tube 32111 communicates with the second water inlet 3211, and the third cooling tube 32121 communicates with the second water outlet 3212. In this way, the cooling medium can enter the cooling chamber 320 through the second cooling tube 32111 and be discharged from the cooling chamber 320 through the third cooling tube 32121, which facilitates circulation and flow of the cooling medium.

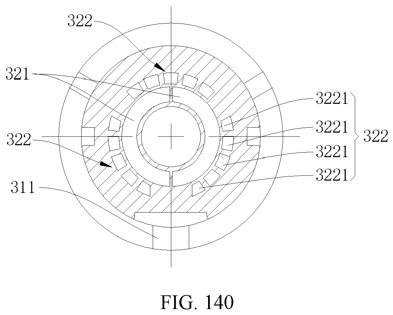

In some embodiments, with reference to FIG. 139 and FIG. 140, there are a plurality of cooling chambers 320, which include a first cooling chamber 321 and a second cooling chamber 322. In the axial direction of the central rod 300, the first cooling chamber 321 is located on one side of the core assembly 211, and at least a part of the second cooling chamber 322 is disposed directly facing the core assembly 211. In this way, a projection of at least a part of the cooling chamber 320 in the radial direction overlaps with that of the core assembly 211, so that the cooling medium in the cooling chamber 320 is used to dissipate heat from the core assembly 211, thereby ensuring that the electromagnetic actuator 1000 can run efficiently for a long time, and avoiding damage to an internal component of the electromagnetic actuator 1000.

According to this unfamiliar arrangement, the first cooling chamber 321 and the second cooling chamber 322 may be used to respectively dissipate heat from different parts of the electromagnetic actuator 1000, and interact with each other, to finally ensure that the electromagnetic actuator 1000 keeps running efficiently. The central rod 300 plays a role in rapid heat conduction and heat dissipation in an entire cooling process.

In some embodiments, the second cooling chamber 322 is formed as a closed chamber and filled with a cooling medium.

In some embodiments, with reference to FIG. 139 and FIG. 140, there are a plurality of second cooling chambers 322, which are disposed at intervals in the circumferential direction of the central rod 300. Each second cooling chamber 322 includes a plurality of sub-chambers 3221 disposed at intervals in the circumferential direction of the central rod 300, thereby ensuring heat dissipation performance of the cooling chamber 320.

In some embodiments, end parts of the plurality of sub-chambers 3221 of each second cooling chamber 322 are in communication in the axial direction of the central rod 300, so that the cooling medium in each second cooling chamber 322 can circulate and flow between the plurality of sub-chambers 3221, thereby ensuring heat dissipation performance of the second cooling chamber 322.

In some embodiments, at least a partial structure of the cooling chamber 320 is formed as a heat pipe, so that the cooling chamber 320 has a heat dissipation capability, to reduce a temperature of the cooling medium, thereby ensuring a cooling effect of the cooling medium.

In some embodiments, a cooling structure 810 (for a specific structure of the cooling structure 810, referring to FIG. 22) is disposed on the central rod 300, and the cooling structure 810 is disposed in a part of the central rod 300 that extends out of the accommodating cavity 130, to reduce a temperature of the cooling medium by using the cooling structure 810, thereby ensuring a cooling effect of the cooling medium.

In some embodiments, the cooling structure 810 includes a radiator, to improve heat dissipation performance of the cooling structure 810, so that a temperature of the cooling medium is reduced by using the cooling structure 810, thereby ensuring a cooling effect of the cooling medium.

In some embodiments, the cooling structure 810 includes a cooling pipeline, and a third water inlet and a third water outlet communicate with the outside are formed on the cooling pipeline. The third water inlet and the third water outlet are configured to transport a cooling medium with a relatively low external temperature to the cooling structure 810, to reduce a temperature of the cooling medium in the cooling structure 810. In this way, heat dissipation performance of the cooling structure 810 can also be ensured, so that the cooling structure 810 can effectively reduce the temperature of the cooling medium, thereby ensuring a cooling effect of the cooling medium.

In some embodiments, as shown in FIG. 137, a guide rod 400 is disposed on the housing 100, and a guide hole 310 is formed on the central rod 300. The guide rod 400 fits with the guide hole 310, to avoid an offset of the housing 100 during movement, that is, ensure that the housing 100 can move in a predetermined direction, thereby ensuring accuracy of movement of the housing 100.

In some embodiments, a cooling cavity is disposed on the guide rod 400, and the cooling cavity is adapted to accommodate coolant. In this way, heat of the core assembly 211 is dissipated by using the coolant, thereby ensuring that the electromagnetic actuator 1000 can run efficiently for a long time, and avoid damage to internal components of the electromagnetic actuator 1000.

In some embodiments, a volume of the cooling cavity is greater than a volume of the coolant. In other words, the coolant does not fill the entire cooling cavity, so that the coolant in the cooling cavity can perform a process of gas-liquid transformation, thereby ensuring cooling performance of the coolant.

In some embodiments, a projection of the cooling cavity in the radial direction at least partially overlaps with that of the core assembly 211. In this way, the cooling cavity can directly face the core assembly 211 in the radial direction, so that the coolant in the cooling cavity is used to dissipate heat from the core assembly 211, thereby ensuring that the electromagnetic actuator 1000 can run efficiently for a long time, and avoid damage to internal components of the electromagnetic actuator 1000.

In some embodiments, the core assembly 211 whose projection overlaps with that of the cooling cavity in the radial direction has a projection partially overlapping with the projection of the cooling chamber 320 in the radial direction. In other words, a part of the core assembly 211 simultaneously directly faces the cooling cavity on the guide rod 400 and the cooling chamber 320 on the central rod 300, to maximize heat dissipation performance of the core assembly 211.

In some embodiments, as shown in FIG. 22, the electromagnetic actuator 1000 further includes a detection module 900. The detection module 900 is configured to detect relative displacement of the housing 100 and the stator assembly 210. In this way, a location of the stator assembly 210 can be accurately determined, to control movement of the stator assembly 210, and ensure accuracy of a position of the stator assembly 210 after movement, thereby improving working performance of the electromagnetic actuator 1000.

In addition, detecting relative displacement of the housing 100 and the stator assembly 210 by using the detection module 900 may further reduce difficulty of location detection of the stator assembly 210 and ensure accuracy of location detection of the stator assembly 210.

In other words, the detection module 900 is disposed on the electromagnetic actuator 1000 in this embodiment, to ensure control precision of a location of the stator assembly 210 in movement, thereby avoiding a technical problem of a control precision defect.

In some embodiments, the detection module 900 may sense signals corresponding to different parts of a detected apparatus and output location signals to a controller through wires, to detect relative displacement of the housing 100 and the stator assembly 210.

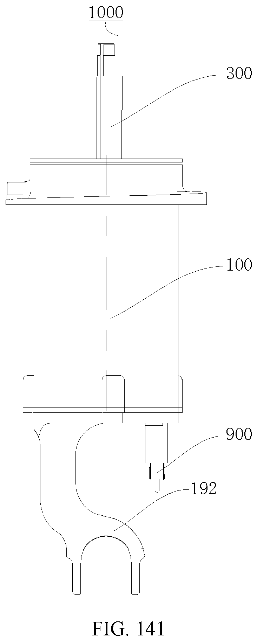

In some embodiments, with reference to FIG. 141 to FIG. 146, the detection module 900 includes a laser sensor 910. The laser sensor 910 is disposed at a top or a bottom of the accommodating cavity 130, so that the laser sensor 910 is used to detect relative displacement of the housing 100 and the stator assembly 210, thereby ensuring accuracy of relative displacement detection of the housing 100 and the stator assembly 210, and reducing difficulty in detecting relative displacement of the housing 100 and the stator assembly 210.

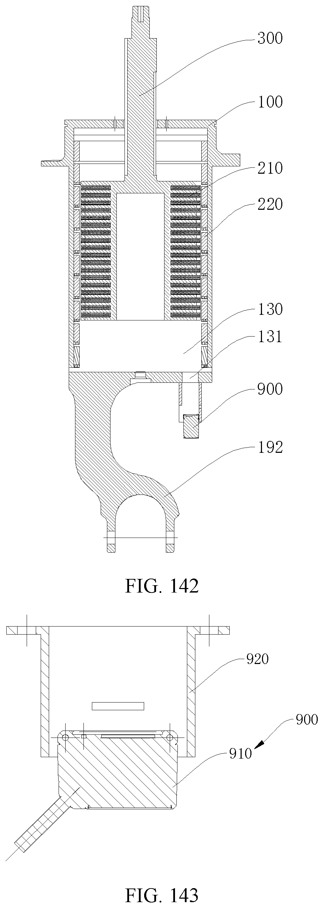

In some embodiments, with reference to FIG. 141 and FIG. 142, the housing 100 is adapted to be fastened to an axle. The electromagnetic actuator 1000 further includes a mounting frame 192. The mounting frame 192 is mounted on an outer side of the housing 100 and is adapted to be connected to the axle and the housing 100. The laser sensor 910 is disposed in the mounting frame 192. A bottom wall of the accommodating cavity 130 is provided with a clearance hole 131 to provide clearance for an optical path of the laser sensor 910. The laser sensor 910 is disposed in the mounting frame 192, so that the laser sensor 910 is disposed in the housing 100, and the housing 100 is used to support the laser sensor 910, to improve location stability of the laser sensor 910. In addition, because the bottom wall of the accommodating cavity 130 is provided with the clearance hole 131 to provide clearance for an optical path of the laser sensor 910, an optical path generated by the laser sensor 910 disposed in the mounting frame 192 can be projected to the accommodating cavity 130, so that the laser sensor 910 is used to detect relative displacement of the housing 100 and the stator assembly 210.

In some embodiments, as shown in FIG. 143, a first sensor mounting frame 920 is disposed at one end of the mounting frame 192, and the laser sensor 910 is disposed in the first sensor mounting frame 920, so that the laser sensor 910 is disposed in the mounting frame 192, and the housing 100 is used to support the laser sensor 910, thereby improving location stability of the laser sensor 910, and reducing difficulty in fastening the laser sensor 910.

The laser sensor 910 may be fastened to the first sensor mounting frame 920 through a bolted connection.

In some embodiments, with reference to FIG. 142 to FIG. 146, in the axial direction of the electromagnetic actuator 1000, the laser sensor 910 directly faces the stator assembly 210. In this way, an optical path generated by the laser sensor 910 can be projected to the stator assembly 210, so that the laser sensor 910 is used to detect relative displacement of the housing 100 and the stator assembly 210.

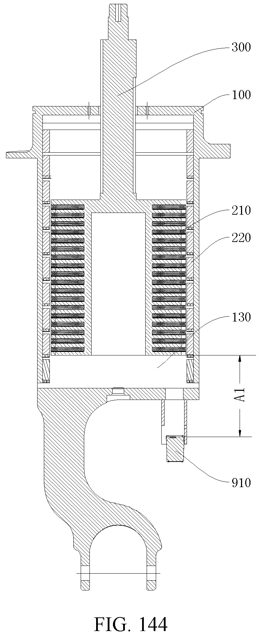

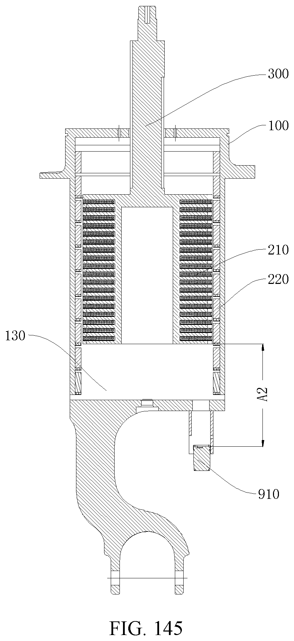

In a specific example, the laser sensor 910 mainly determines a location by sensing reflected light of an object, and outputs a displacement signal of the electromagnetic actuator 1000. A working principle of the laser sensor 910 is as follows: before the electromagnetic actuator 1000 starts, a height of the laser sensor 910 is first calibrated, and a location of the laser sensor 910 is measured. After the housing 100 moves upward relative to the central rod 300 (as shown in FIG. 144), the laser sensor 910 projects a visible light spot on a surface of the stator assembly 210, and light reflected from the light spot is imaged on a photosensitive element in the laser sensor 910 through an optical receiving system. When a distance between the laser sensor 910 and the stator assembly 210 changes, a laser reflection angle also changes correspondingly, so that an imaging location on the photosensitive element in the laser sensor 910 changes, thereby detecting current locations of the laser sensor 910 and the stator assembly 210. When the housing 100 moves downward relative to the central rod 300 (as shown in FIG. 145), the laser sensor 910 detects current locations of the laser sensor 910 and the stator assembly 210 again according to the foregoing method. A change in location values between the two times of consecutive detection is analyzed to obtain relative displacement of the housing 100 and the stator assembly 210, thereby achieving an objective of detecting relative displacement of the housing 100 and the stator assembly 210.

According to the foregoing arrangement, active measurement is formed in this embodiment, and a measurement frequency is high, so that a height parameter of the electromagnetic actuator 1000 can be obtained in real time. Neither low-frequency vibration nor even a stationary state of the vehicle 20000 affects parameter measurement. In other words, information such as a posture of the vehicle 20000 can still be effectively provided when the vehicle 20000 is in the stationary state. Therefore, the laser sensor 910 in this embodiment not only may be used to measure a stroke of the electromagnetic actuator 1000, but also may be used to obtain a motion speed of the electromagnetic actuator 1000 based on a function relationship between a stroke difference and time of the electromagnetic actuator 1000. Using FIG. 144 and FIG. 145 as an example, within time of a reflection receiving period of the laser sensor 910, a location of the housing 100 changes from FIG. 144 to FIG. 145. Based on this, an average speed of the electromagnetic actuator 1000 within time of a laser reflection reception period can be calculated. Because the measurement frequency of the laser sensor 910 is high, this speed can reflect a real-time motion speed of the electromagnetic actuator 1000 to some extent.

In a specific example, loads on different axes of the vehicle 20000 may be preliminarily estimated by comparing initial states of the vehicle 20000. A basic principle is as follows: When the vehicle 20000 starts or the vehicle 20000 is about to move, heights of four wheels of the vehicle 20000 are measured. Because the vehicle 20000 has no relative motion and is not subjected to any road impact in this case, it may be considered that a distance change is generated by load compression damping. Based on this, an empty or full load state of the vehicle 20000 may be determined, and therefore, a more precise reference may be provided for control of the four wheels.

Similarly, a change in different speeds of the electromagnetic actuator 1000 in a laser reflection receiving period may reflect a real-time acceleration of the electromagnetic actuator 1000 to some extent. In theory, a quantity of sensors disposed on the vehicle 20000 may be greatly reduced, thereby achieving an objective of design simplification.

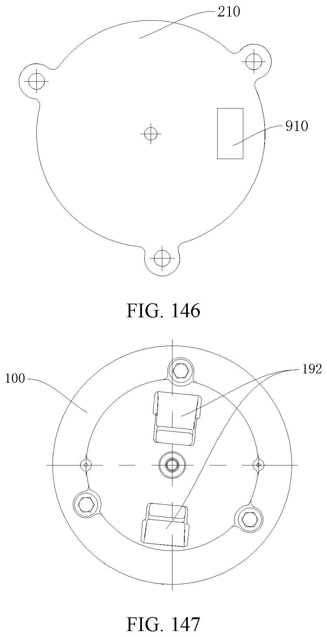

It will be further noted that, in this embodiment, the laser sensor 910 is disposed at a bottom of the electromagnetic actuator 1000, and a detected location is a bottom plane of the stator assembly. Main motion of the housing 100 and the stator assembly 210 is linear motion in which the housing 100 and the stator assembly 210 move upward and downward, but in an actual motion scenario, the housing 100 and the stator assembly 210 further rotate relative to the central rod 300. Therefore, according to the foregoing arrangement, even if the housing 100 and the stator assembly 210 deflect, it can be ensured that a top of the mounting frame 192, the laser sensor 910, and a bottom surface of the stator assembly 210 are kept in parallel (as shown in FIG. 146), to prevent location data detected by the laser sensor 910 from being affected by deflection of the housing 100 and the stator assembly 210.

In addition, because the laser sensor 910 is mounted in the mounting frame 192, the laser sensor 910 may be further prevented from being interfered by a high temperature generated during movement of the electromagnetic actuator 1000, thereby ensuring working performance of the laser sensor 910. In addition, the laser sensor 910 is mounted outside the electromagnetic actuator 1000, which makes it easier to replace and mount the laser sensor 910, and more convenient for after-sales replacement and maintenance.

In conclusion, in this embodiment, the mounting frame 192 is fully utilized, and the laser sensor 910 with relatively high measurement precision is used to compensate for various disadvantages of a conventional sensor. The design comprehensively outperforms a conventional design in terms of arrangement space, measurement precision, measurement content, service life, maintenance convenience, and the like.

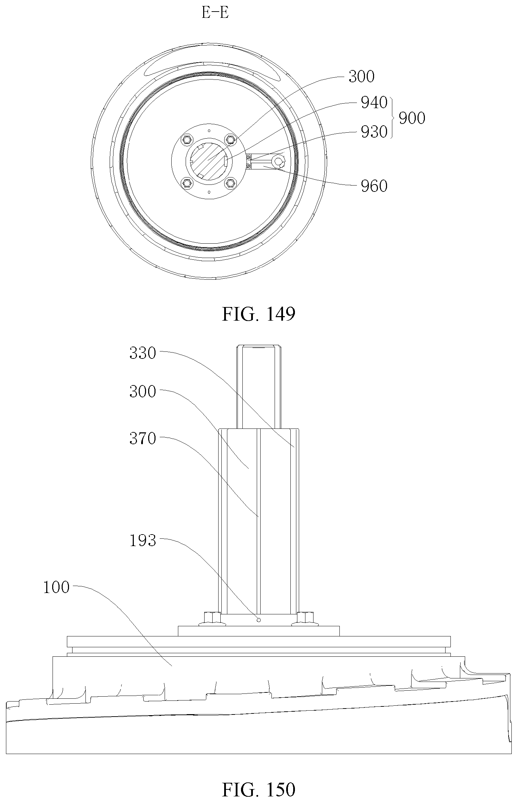

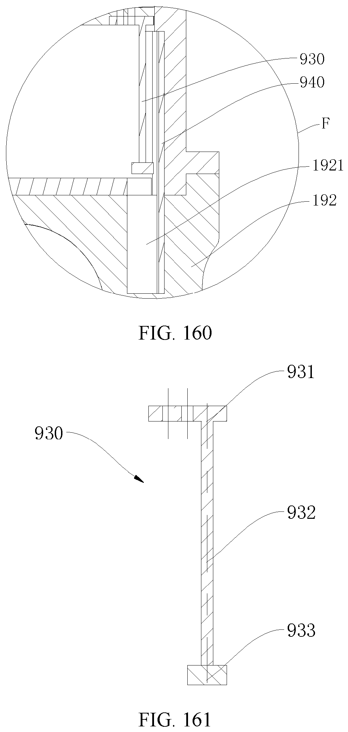

In some embodiments, with reference to FIG. 150 to FIG. 163, the detection module 900 includes a first detection member 930 and a second detection member 940. The second detection member 940 is coupled to the first detection member 930. One of the housing 100 and the central rod 300 is provided with the first detection member 930, and the other is provided with the second detection member 940, so that the second detection member 940 fits with the first detection member 930 to detect relative displacement of the housing 100 and the stator assembly 210, thereby ensuring accuracy of location detection of the stator assembly 210, and reducing difficulty of location detection of the stator assembly 210.

In some embodiments, with reference to FIG. 150 to FIG. 163, the housing 100 is adapted to be fastened to an axle, and the central rod 300 passes through a top wall of the housing 100 to be connected to a vehicle body. The first detection member 930 is disposed on the housing 100, and the second detection member 940 is disposed on the central rod 300. In this way, the housing 100 is used to support the first detection member 930 and the central rod 300 is used to support the second detection member 940, to improve location stability of the first detection member 930 and the second detection member 940, so that the second detection member 940 fits with the first detection member 930 to detect relative displacement of the housing 100 and the stator assembly 210.

In some embodiments, with reference to FIG. 147 to FIG. 150, an assembly groove 950 (for a specific structure of the assembly groove 950, referring to FIG. 25) is provided on the central rod 300, the second detection member 940 is fastened to the assembly groove 950 of the central rod 300. A sensor mounting groove 960 directly facing the assembly groove 950 is disposed on the housing 100, and the first detection member 930 is disposed in the sensor mounting groove 960 to form a complete working environment of a location sensor, so that the second detection member 940 and the first detection member 930 are used to detect relative displacement of the housing 100 and the stator assembly 210.

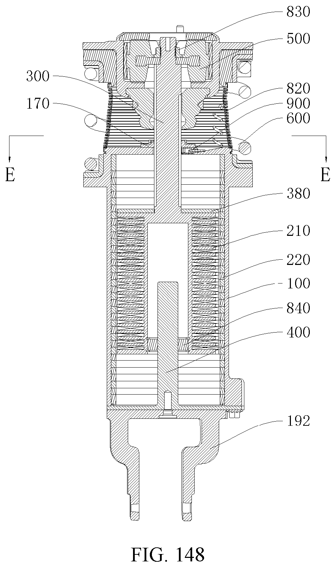

In some embodiments, as shown in FIG. 148, a bearing 170 covers over the first detection member 930, to provide stroke protection and blocking for the first detection member 930, and prevent the first detection member 930 from being extruded when the housing 100 moves upward, thereby ensuring performance of the first detection member 930.

In some embodiments, as shown in FIG. 150, a first anti-rotation portion 370 is disposed on the central rod 300, and an anti-rotation hole 193 is disposed on the housing 100. The anti-rotation post passes through the anti-rotation hole 193 to extend into the first anti-rotation portion 370, to limit rotation freedom of the central rod 300, thereby avoiding relative rotation between the central rod 300 and the housing 100. In this way, the second detection member 940 on the central rod 300 can accurately align with the first detection member 930 on the housing 100, thereby ensuring detection performance of the detection module 900.

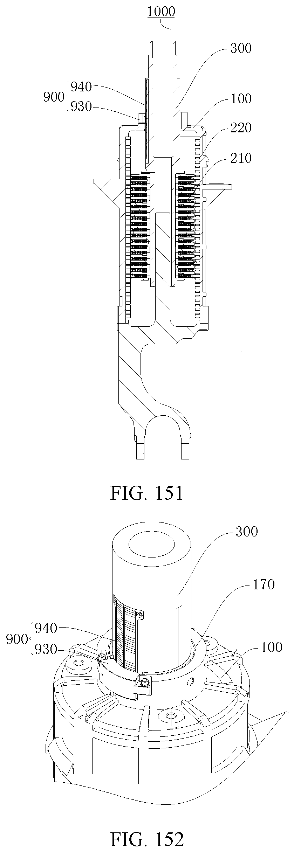

In some embodiments, with reference to FIG. 151 to FIG. 154, the first detection member 930 is disposed on the outer side of the housing 100, to reduce difficulty in mounting the first detection member 930, further facilitate replacement and maintenance of the first detection member 930, thereby reducing difficulty in maintaining the first detection member 930.

In addition, the first detection member 930 is disposed on the outer side of the housing 100, which can further be effectively spaced apart from high-temperature regions of the housing 100. Moreover, the first detection member 930 can perform heat dissipation by using natural wind, thereby fully protecting the first detection member 930, and preventing, to some extent, the first detection member 930 from failing.

In some embodiments, as shown in FIG. 152, a bearing 170 is disposed between the central rod 300 and the housing 100, and a part of a projection of the first detection member 930 in the radial direction that overlaps with that of the housing 100 partially overlaps with a projection of the bearing 170 in the radial direction. In other words, in the radial direction of the housing 100, the first detection member 930 partially overlaps with the bearing 170. In this way, on the premise that an extension length of the central rod 300 is fixed, this can prevent excessive reduction in an extension length of the bearing 170 due to the arrangement of the first detection member 930. In other words, the first detection member 930 partially overlapping with the bearing 170 can ensure the extension length of the bearing 170, thereby ensuring a guiding effect of the bearing 170.

In some embodiments, the bearing 170 is provided with a sensor clearance groove, and the first detection member 930 is disposed in the sensor clearance groove, so that a part of a projection of the first detection member 930 in the radial direction that overlaps with that of the housing 100 can partially overlap with a projection of the bearing 170 in the radial direction. In addition, difficulty in fastening the first detection member 930 can be reduced, and location stability of the first detection member 930 can be improved, thereby enduring working performance of the first detection member 930 to some extent.

In some embodiments, a bearing 170 is disposed between the central rod 300 and the housing 100, and the first detection member 930 is spaced apart from the bearing 170. In other words, it is not limited that a part of the projection of the first detection member 930 in the radial direction that overlaps with that of the housing 100 partially overlaps with the projection of the bearing 170 in the radial direction, the first detection member 930 may alternatively be spaced apart from the bearing 170, so that the first detection member 930 and the bearing 170 are independent of each other, thereby ensuring working performance of the first detection member 930 and the bearing 170.

The "spaced apart" herein will be understood as that the first detection member 930 is spaced apart from the bearing 170 in the axial direction of the central rod 300, so that the first detection member 930 and the bearing 170 are independent of each other.

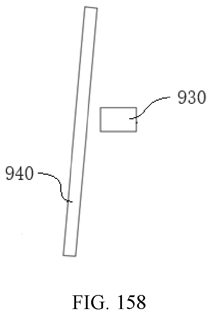

In addition, the bearing 170 is disposed between the central rod 300 and the housing 100 to limit movement of the central rod 300. In this way, the central rod 300 moves along the bearing 170, to avoid that an offset shown in FIG. 158 is prone to occur in the central rod 300 during movement of the vehicle 20000. A larger offset angle generated by the central rod 300 causes a larger impact on detection precision of the first detection member 930 and the second detection member 940, and even causes a failure.

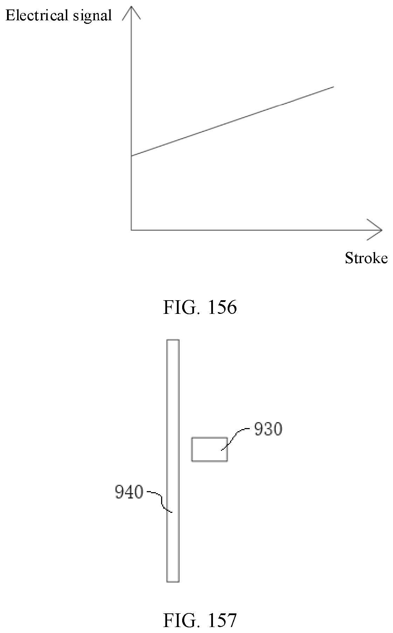

Therefore, the bearing 170 is disposed so that the first detection member 930 is relatively well aligned with the second detection member 940 during movement, and has relatively high detection precision, so that it is ensured that during normal working of the detection module 900, a working surface of the first detection member 930 needs to be parallel to a working surface of the second detection member 940 (as shown in FIG. 157). In this way, it can be ensured that the second detection member 940 can obtain an accurate magnetic field signal, thereby ensuring working performance of the detection module 900.

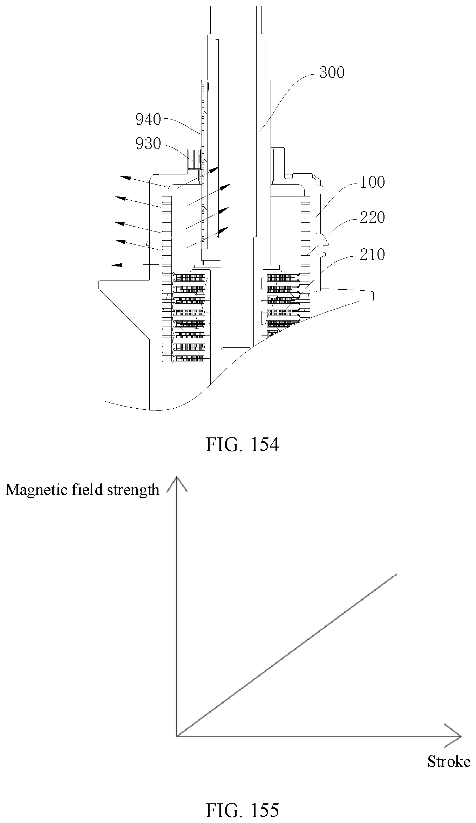

In some embodiments, the first detection member 930 forms a magnetic field sensing element, and the second detection member 940 forms a magnetic field output element. As shown in FIG. 155, the second detection member 940 may obtain displacement in a specific stroke range by sensing a magnetic field of the second detection member 940, and magnetic field signals at any two different locations in a stroke are different, for example, in a linear relationship. As shown in FIG. 156, the first detection member 930 may sense a magnetic field signal sent by the second detection member 940, and then converts the magnetic field signal into an electrical signal, wherein electrical signals at any two different locations in a stroke are different, for example, in a linear relationship. There are many means for conversion herein, for example, a Hall principle. Finally, the sensed electrical signal (or converted into another signal, for example, a digital signal) is transmitted as an output signal, to achieve an objective that the second detection member 940 fits with the first detection member 930 to detect relative displacement of the housing 100 and the stator assembly 210.

In conclusion, it will be understood that the first detection member 930 mainly detects relative displacement of the housing 100 and the stator assembly 210 by identifying a magnetic field signal of the second detection member 940. However, magnetic field strength emitted by the mover assembly 220 and the stator assembly 210 in the electromagnetic actuator 1000 is very high, which easily interferes with detection precision of the first detection member 930, leading to reduction in precision of the detection module 900, or even a failure.

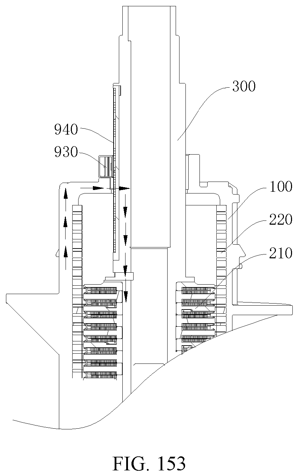

To resolve the foregoing problem, the central rod 300 and the housing 100 may be supported by using a magnetically conductive material. As shown in FIG. 153, magnetic fields generated by the mover assembly 220 and the stator assembly 210 inside the electromagnetic actuator 1000 are distributed along the central rod 300 and the housing 100, and a closed magnetic field circuit is formed, so that magnetic field strength at a location of the second detection member 940 is significantly increased, thereby preventing the magnetic fields generated by the mover assembly 220 and the stator assembly 210 inside the electromagnetic actuator 1000 from forming a divergent pattern as shown in FIG. 154.

In addition, a distance between the detection module 900 and each of the mover assembly 220 and the stator assembly 210 may alternatively be increased to improve magnetic field strength at the location of the second detection member 940, so that magnetic field strength at the location of the second detection member 940 is significantly increased, thereby ensuring detection precision of the detection module 900.

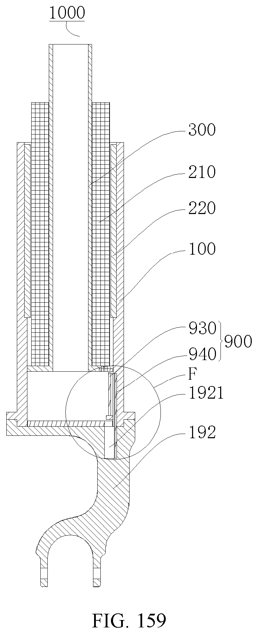

In some embodiments, with reference to FIG. 159 to FIG. 164, a mounting frame 192 is disposed at a bottom of the housing 100, and a clearance channel 1921 communicating with the accommodating cavity 130 is provided in the mounting frame 192. At least a part of the second detection member 940 is located in the clearance channel 1921, and the first detection member 930 may move to the clearance channel 1921 to be coupled to the second detection member 940, so that the second detection member 940 fits with the first detection member 930 to detect relative displacement of the housing 100 and the stator assembly 210, thereby ensuring accuracy of location detection of the stator assembly 210, and reducing difficulty of location detection of the stator assembly 210.

In addition, at least a part of the second detection member 940 is located in the clearance channel 1921, to reduce space reserved for the detection module 900 in the electromagnetic actuator 1000, thereby facilitating a miniaturization design of the electromagnetic actuator 1000.

In some embodiments, with reference to FIG. 159, FIG. 160, and FIG. 161, the first detection member 930 includes a sensor connecting end 931, a connecting rod 932, and a sensing head 933. The first detection member 930 and the central rod 300 are fastened through the sensor connecting end 931, and may be fastened through a bolted connection. A wiring harness of the first detection member 930 is arranged inside the connecting rod 932 and is connected to the sensing head 933. The sensing head 933 can sense magnetic field strength in different regions on the second detection member 940. Relative displacement of the housing 100 and the stator assembly 210 can be determined by analyzing different magnetic field strength sensed by the sensing head 933.

In some embodiments, at least a part of the second detection member 940 is attached to the clearance channel 1921. Herein, an adhesive may be used for bonding and fastening.

In some embodiments, the second detection member 940 is a magnetic scale, and the magnetic scale is an apparatus with a magnetic field. The first detection member 930 is a Hall sensor. The Hall sensor senses a change of a magnetic field on a surface of the magnetic scale to output a displacement signal, to detect relative displacement of the housing 100 and the stator assembly 210.

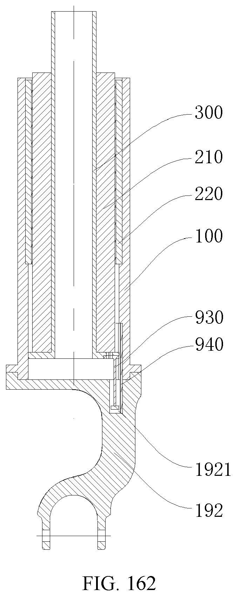

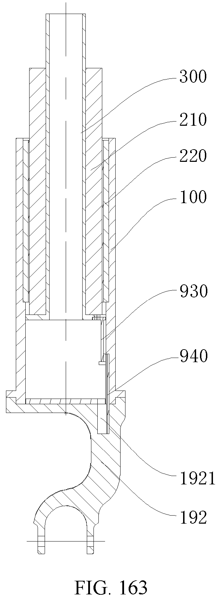

In some embodiments, the mover assembly 220 and the stator assembly 210 each generate a magnetic field. After the housing 100 moves upward, with reference to FIG. 162 and FIG. 163, the second detection member 940 is relatively close to the mover assembly 220 and the stator assembly 210. Therefore, the housing 100, the central rod 300, the connecting rod 932, and the mounting frame 192 all are supported by using a non-magnetically conductive material, for example, an aluminum alloy material. Use of the foregoing material may well shield the magnetic fields around the first detection member 930 and the second detection member 940 that are generated by the mover assembly 220 and the stator assembly 210, thereby ensuring detection precision of the detection module 900.

In some embodiments, coercivity of the second detection member 940 is greater than coercivity of the mover assembly 220, to ensure that the second detection member 940 is not magnetized by the mover assembly 220, thereby ensuring performance of the second detection member 940.

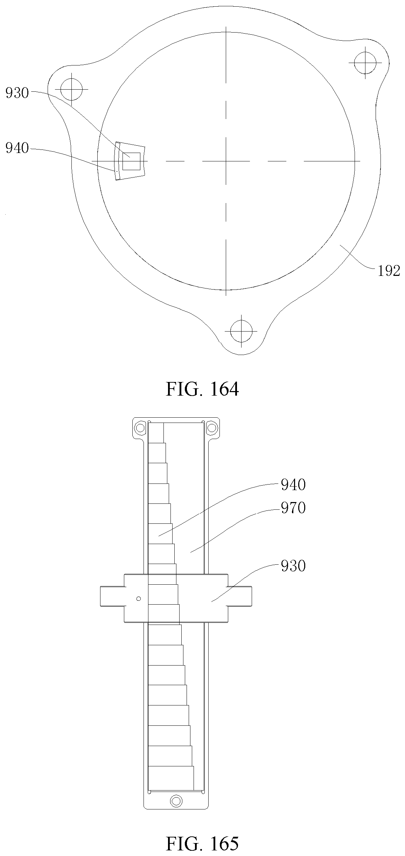

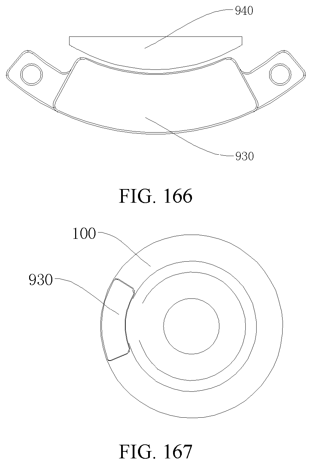

In some embodiments, as shown in FIG. 164 to FIG. 167, the second detection member 940 is formed as an arc shape, to avoid a sensing failure between the second detection member 940 and the first detection member 930 when the mover assembly 220 and the stator assembly 210 rotate relative to each other, and further ensure that the first detection member 930 can stably sense magnetic field strength at different locations on the second detection member 940, thereby ensuring detection precision of the detection module 900.

A radius of the arc shape may be adaptively adjusted based on a radius of the housing 100, and an angle of the arc shape may be determined based on a limit angle of relative rotation between the mover assembly 220 and the stator assembly 210.

In some embodiments, the mounting frame 192 is provided with an arc hole, and the first detection member 930 is disposed in the arc hole, to provide space for upward and downward movement, and rotation of the first detection member 930 in a working state.

In some embodiments, with reference to FIG. 165 to FIG. 167, the detection module 900 includes a second detection member 940, a first detection member 930, and a second sensor mounting frame 970. The second detection member 940 is a sensor magnetic scale, and the first detection member 930 is a sensor read head. The second sensor mounting frame 970 is configured to mount and fasten the sensor magnetic scale, the sensor magnetic scale provides a magnetic field, and the sensor read head is configured to sense magnetic field strength at different locations of the magnetic scale, to detect relative displacement of the housing 100 and the stator assembly 210.

In addition, the second sensor mounting frame 970 is provided, so that the detection module 900 can be fastened more securely, thereby improving location stability of the detection module 900.

The magnetic scale is formed by combining magnetic strips of different sizes at intervals, and uses a single-code-channel structure, so that the second detection member 940 is formed as a coded magnetic scale sensor, and is configured to provide an aperiodic magnetic field, so that the sensor read head senses, at the same moment, that a combined magnetic field in a noncoding region is unique in an entire stroke, thereby determining an absolute location of the first detection member 930, and ensuring detection precision of the detection module 900.

In some embodiments, the second detection member 940 is made of a strong magnetic material such as neodymium iron boron, so that the second detection member 940 has relatively high coercivity, and can adapt to a more complex magnetic field environment, thereby effectively avoiding a demagnetization risk.

In addition, the second detection member 940 is disposed in a single-code-channel structure, which can, compared with a double-code-channel structure, effectively reduce a width of the second sensor mounting frame 970 and a size of the read head of the first detection member 930, and effectively reduce arrangement space of the first detection member 930, so that there are more choices for a placement location of the first detection member 930.

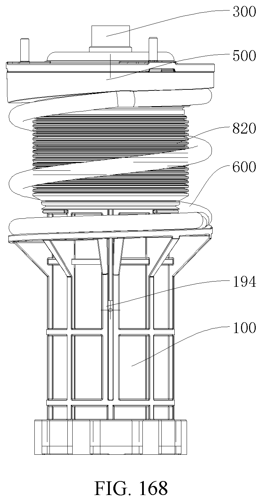

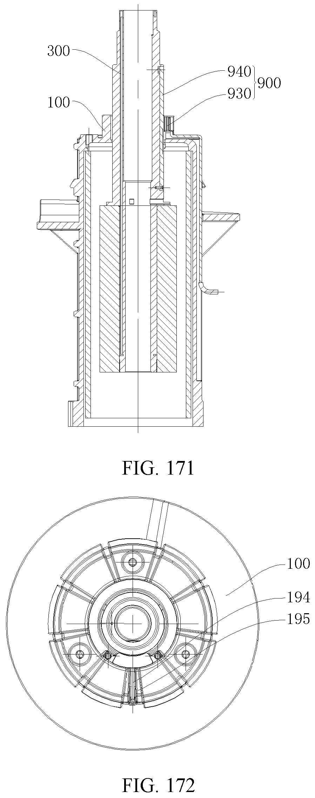

In some embodiments, with reference to FIG. 168 to FIG. 173, an outer peripheral wall of the housing 100 is provided with a wire guide groove 194 for guiding a conducting wire of the detection module 900. A conducting wire electrically connected to the detection module 900 is provided, so that a signal detected by the detection module 900 can be transmitted to a controller through the conducting wire. The controller determines a location of the housing 100 through signal processing, to detect a movement location of the housing 100 by using the detection module 900.

In addition, the wire guide groove 194 for guiding a conducting wire is disposed on the housing 100, to reduce a wire routing difficulty of a conducting wire. In addition, the wire guide groove 194 may be further used to fasten a conducting wire, to ensure location stability of the conducting wire, prevent the conducting wire from being bent along with movement of the housing 100 to affect signal transmission, thereby improving reliability of the electromagnetic actuator 1000. In addition, the wire guide groove 194 may be used to protect a conducting wire, thereby prolonging service life of the conducting wire, improving a use safety of the conducting wire, and improving use reliability of the conducting wire.

It will be noted that a length of the wire guide groove 194 may be set based on an external terminal, and a depth of the wire guide groove 194 may be set based on a radial size of a conducting wire and structural strength of the housing 210. This is not limited herein.

Optionally, the wire guide groove 194 is formed integrally with the housing 100. In other words, the wire guide groove 194 is integrally formed on the housing 100, to reduce difficulty in forming the wire guide groove 194.

In some embodiments, with reference to FIG. 168, FIG. 169, and FIG. 170, a plurality of second reinforcing ribs 195 are disposed on an outer peripheral wall of the housing 100. The wire guide groove 194 is defined between at least two adjacent second reinforcing ribs 195, to reduce difficulty in forming the wire guide groove 194.

In addition, a plurality of second reinforcing ribs 195 are disposed on the outer peripheral wall of the housing 100, so that structural strength of the housing 100 can be further improved, service life of the housing 100 can be further prolonged, and a wall thickness of the housing 100 can be correspondingly reduced, to achieve a lightweight purpose.

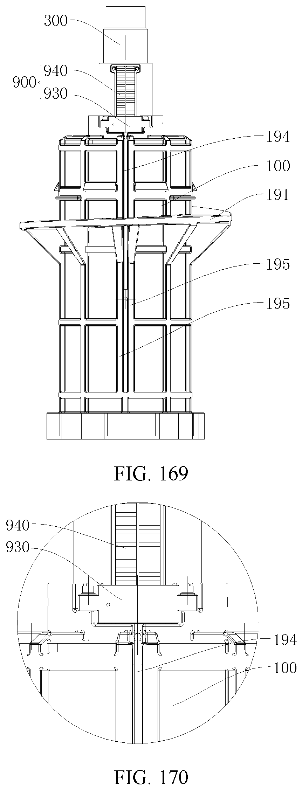

In some embodiments, with reference to FIG. 168 and FIG. 169, a plurality of second reinforcing ribs 195 are disposed on the outer peripheral wall of the housing 100, at least a part of the second reinforcing ribs 195 extends in the radial direction of the housing 100, and at least a part of the second reinforcing ribs 195 extends in the axial direction of the housing 100, so that the housing 100 is provided with a plurality of second reinforcing ribs 195 that are evenly arranged vertically and horizontally. This even arrangement structure feature facilitates processing process design of the housing 100.

The second reinforcing rib 195 extending in the radial direction of the housing 100 is mainly used to reinforce bending rigidity of the housing 100, and the second reinforcing rib 195 extending in the axial direction of the housing 100 is mainly used to reinforce compressive strength of a motor housing 5.

In addition, an oblique reinforcing rib may be further disposed on the outer peripheral wall of the housing 100 to avoid stress concentration.

In some embodiments, with reference to FIG. 168 and FIG. 169, a triangular vertical reinforcing rib is designed at a lower end part of the mounting seat 191. According to a structural stability principle of a triangle, the mounting seat 191 has a more stable structure, and can withstand a larger elastic force of a spring, thereby improving compressive strength of the mounting seat 191.

In some embodiments, a second reinforcing rib 195 extending in the axial direction of the housing 100 is further disposed between two adjacent triangular vertical reinforcing ribs to improve bending rigidity of the mounting seat 191.

In some embodiments, a wire clearance structure is disposed between the mounting seat 191 and the housing 100, so that a conducting wire can pass through the mounting seat 191 and be arranged in the wire guide groove 194.

In some embodiments, the wire guide groove 194 is formed as a heat dissipation structure, to implement heat dissipation on the electromagnetic actuator 1000, thereby ensuring performance of the electromagnetic actuator 1000.

In some embodiments, the second reinforcing rib 195 may be used to expand a heat dissipation area of the housing 100, without requiring additional heat dissipation cavity to assist heat dissipation, thereby reducing redundancy of a mechanism and improving freedom of overall layout design, to achieve a lightweight purpose.

A depth and a width of the second reinforcing rib 195 may be changed according to a diameter of a conducting wire and strength of the housing 100.

The following describes a shock absorption apparatus 5000 according to embodiments of this application.

A shock absorption apparatus 5000 according to an embodiment of this application includes an electromagnetic actuator 1000.

The electromagnetic actuator 1000 is the foregoing electromagnetic actuator 1000. A specific structure of the electromagnetic actuator 1000 is not described herein. The electromagnetic actuator 1000 is adapted to be connected between a vehicle wheel 2000 and a vehicle body.

It will be understood from the foregoing structure that, according to the shock absorption apparatus 5000 in this embodiment of this application, the foregoing electromagnetic actuator 1000 is used to effectively reduce difficulty in assembling the shock absorption apparatus 5000, and ensure working performance of the shock absorption apparatus 5000.

In some embodiments, one of the vehicle wheel 2000 and the vehicle body is adapted to be connected to the other of the mover assembly 220 and the stator assembly 210, and the other of the vehicle wheel 2000 and the vehicle body is adapted to be connected to the housing 100. In this way, the vehicle wheel 2000 and the vehicle body can move relative to each other, to cushion and absorb vibration, thereby ensuring working performance of the shock absorption apparatus 5000, and helping improve comfort of the vehicle 20000.

In some embodiments, the housing 100 is adapted to be connected to the vehicle wheel 2000, and the other of the mover assembly 220 and the stator assembly 210 is adapted to be connected to the vehicle body. In this way, the electromagnetic actuator 1000 is connected between the vehicle wheel 2000 and the vehicle body, and it is convenient to use the electromagnetic actuator 1000 to cushion and absorb vibration, thereby ensuring working performance of the shock absorption apparatus 5000.

In some embodiments, with reference to FIG. 20 to FIG. 26, the shock absorption apparatus 5000 further includes a central rod 300. A partial structure of the central rod 300 extends out of the housing 100, to implement a fixed connection between the central rod 300 and the vehicle body, and reduce difficulty in connecting the central rod 300 and the vehicle body, so that the electromagnetic actuator 1000 can be connected between the vehicle wheel 2000 and the vehicle body, thereby ensuring working performance of the shock absorption apparatus 5000, and helping improve comfort of the vehicle 20000.

In some embodiments, with reference to FIG. 21 and FIG. 22, the stator assembly 210 includes a core assembly 211 and a winding assembly 212. The core assembly 211 is disposed on the central rod 300, the winding assembly 212 is disposed on the core assembly 211, and the mover assembly 220 is connected to the housing 100. In this way, the stator assembly 210 and the mover assembly 220 can move relative to each other, so that the shock absorption apparatus 5000 is used to cushion impact transmitted by a road surface, and isolate noise input by the road surface and the vehicle wheel 2000, thereby ensuring comfort of the vehicle 20000.

In some embodiments, the central rod 300 is adapted to be connected to the vehicle body by an upper support 500, to connect the shock absorption apparatus 5000 and the vehicle body, and reduce difficulty in connecting the shock absorption apparatus 5000 and the vehicle body.

In some embodiments, the upper support 500 is adapted for integration with the vehicle body, to connect the shock absorption apparatus 5000 and the vehicle body, and reduce difficulty in connecting the shock absorption apparatus 5000 and the vehicle body.

In some embodiments, as shown in FIG. 7, a mounting seat 191 is formed on the housing 100, and the shock absorption apparatus 5000 further includes a spring 600. One end of the spring 600 is adapted to be connected to the mounting seat 191, and the other end of the spring 600 is adapted to be connected to the vehicle body. The spring 600 is configured to provide a partial damping force and withstand partial vibration impact, to improve working performance of the shock absorption apparatus 5000, thereby ensuring comfort of the vehicle 20000.

In some embodiments, the spring 600 includes at least one of an air spring and a coil spring, to ensure working performance of the spring 600, and ensure that the spring 600 can effectively provide a partial damping force and withstand partial vibration impact.

In some embodiments, as shown in FIG. 22, the housing 100 has an end cover 1012, a mounting frame 192 is disposed on the end cover 1012, the mounting frame 192 is adapted to be connected to the vehicle wheel 2000, and the mounting frame 192 is formed integrally with the end cover 1012. In this way, the electromagnetic actuator 1000 and the vehicle wheel 2000 are connected, that is, the shock absorption apparatus 5000 and the vehicle wheel 2000 are connected, and difficulty in connecting the shock absorption apparatus 5000 and the vehicle wheel 2000 is reduced, so that the shock absorption apparatus 5000 is used to cushion impact transmitted by a road surface, and isolate noise input by the road surface and a tire, thereby ensuring comfort of the vehicle 20000.

In some embodiments, a clearance structure for providing clearance for a steering shaft is formed on the mounting frame 192, so that the mounting frame 192 can effectively be spaced apart from the steering shaft, and ensure performance of the steering shaft.

In some embodiments, the shock absorption apparatus 5000 further includes a shock absorber. The shock absorber is disposed in parallel to the electromagnetic actuator 1000, to maximize a vibration damping effect of the shock absorption apparatus 5000.

The following describes a suspension system 10000 according to embodiments of this application with reference to the accompanying drawings of the specification.

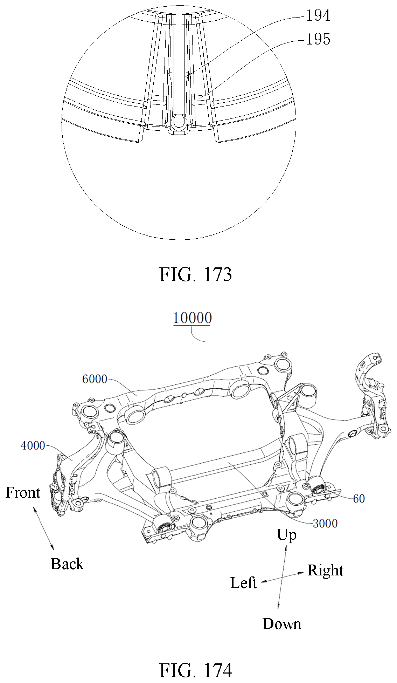

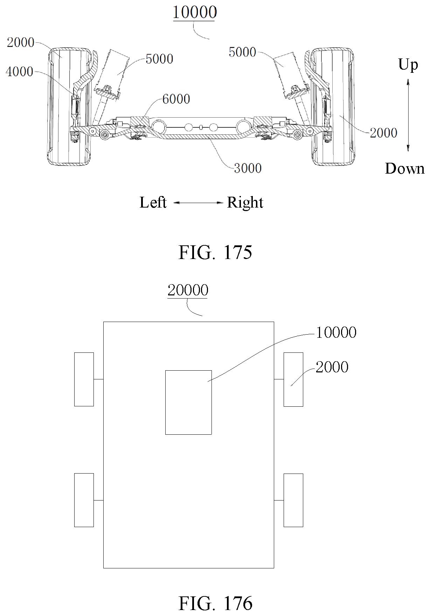

With reference to FIG. 174 and FIG. 175, a suspension system 10000 according to an embodiment of this application includes a shock absorption apparatus 5000.

The shock absorption apparatus 5000 is the foregoing shock absorption apparatus 5000, and a specific structure of the shock absorption apparatus 5000 is not described herein again.

It will be understood from the foregoing structure that, according to the suspension system 10000 in this embodiment of this application, the foregoing shock absorption apparatus 5000 is used to effectively reduce difficulty in assembling the suspension system 10000, and ensure working performance of the suspension system 10000.

In some embodiments, at least one vehicle wheel 2000 is adapted to be disposed corresponding to the shock absorption apparatus 5000, so that the shock absorption apparatus 5000 is used to cushion impact transmitted by a road surface, and isolate noise input by the road surface and the vehicle wheel 2000, thereby ensuring comfort of a vehicle 20000.

In some embodiments, the suspension system 10000 further includes a controller, and the controller is adapted to control an electromagnetic actuator 1000, so that the electromagnetic actuator 1000 can effectively run to cushion impact transmitted by a road surface, and isolate noise input by the road surface and the vehicle wheel 2000, thereby ensuring comfort of the vehicle 20000.

In some embodiments, a plurality of vehicle wheels 2000 are adapted to be disposed corresponding to the shock absorption apparatus 5000. In other words, a corresponding shock absorption apparatus 5000 is disposed for each of the plurality of vehicle wheels 2000, so that the shock absorption apparatus 5000 is used to cushion impact transmitted by a road surface, and isolate noise input by the road surface and the vehicle wheel 2000, thereby ensuring comfort of the vehicle 20000.

In some embodiments, the suspension system 10000 further includes a controller, and the controller is adapted to control the plurality of vehicle wheels 2000, so that each of the plurality of corresponding shock absorption apparatuses 5000 can cushion impact transmitted by a road surface, thereby ensuring comfort of the vehicle 20000.

In some embodiments, the suspension system 10000 further includes a plurality of controllers, and the plurality of controllers are disposed in one-to-one correspondence with the plurality of vehicle wheels 2000. Herein, this means the following: Each vehicle wheel 2000 corresponds to a controller, so that the controller is used to separately control the shock absorption apparatus 5000 corresponding to the vehicle wheel 2000, thereby ensuring performance of the shock absorption apparatus 5000.

In some embodiments, the suspension system 10000 further includes a plurality of controllers, and one controller is adapted to control at least one vehicle wheel 2000. In other words, one controller may control one vehicle wheel 2000 or a plurality of vehicle wheels 2000, so that the shock absorption apparatus 5000 corresponding to each vehicle wheel 2000 can run, thereby ensuring performance of the shock absorption apparatus 5000.

In some embodiments, with reference to FIG. 174 and FIG. 175, the suspension system 10000 further includes a leaf spring 3000, and two ends of the leaf spring 3000 are adapted to be connected to a steering knuckle 4000. In this way, when the vehicle 20000 experiences bump-induced vibration during traveling, the leaf spring 3000 may perform upward and downward bending deformation to achieve a good cushioning effect on impact from a road surface, so that a driver and a passenger feel relatively comfortable when riding the vehicle 20000.

In some embodiments, an extension size of the leaf spring 3000 in a width direction of the vehicle 20000 is greater than a spacing between two coaxial shock absorption apparatuses 5000 in the width direction of the vehicle 20000, thereby ensuring performance of the leaf spring 3000.

In some embodiments, the leaf spring 3000 is provided with a first mounting point adapted to be connected to a subframe 6000 and a second mounting point adapted to be connected to the steering knuckle 4000, and the first mounting point is higher than the second mounting point. In this way, a maximum displacement amount of the leaf spring 3000 in an up-down direction is increased during cushioning deformation, so that when a vehicle wheel 2000 of the vehicle 20000 hops, it is less likely to interfere with structures such as the subframe 6000. As a result, fatigue damage of the leaf spring 3000 is effectively reduced, enabling the leaf spring 3000 to perform a cushioning operation stably, and prolonging service life of the leaf spring 3000.

In some embodiments, in a height direction of the vehicle 20000, a distance between the first mounting point and the second mounting point is greater than a maximum deflection of the leaf spring 3000 at the second mounting point, so that the leaf spring 3000 can be stably located within a favorable tensile deformation range during use, thereby effectively delaying fatigue damage of the leaf spring 3000 and prolonging service life of the leaf spring 3000.

The following describes a vehicle 20000 according to embodiments of this application with reference to the accompanying drawings of the specification.

As shown in FIG. 176, a vehicle 20000 according to an embodiment of this application includes a suspension system 10000.

The suspension system 10000 is the foregoing suspension system 10000, and a specific structure of the suspension system 10000 is not described herein again.

It will be understood from the foregoing structure that, according to the vehicle 20000 in this embodiment of this application, the foregoing suspension system 10000 is used to effectively reduce difficulty in assembling the vehicle 20000, and ensure working performance of the vehicle 20000.

Other components of the stator assembly 210, the electromagnetic actuator 1000, the shock absorption apparatus 5000, the suspension system 10000, and the vehicle 20000 in the embodiments of this application are known to a person of ordinary skill in the art, and are not described in detail herein.

In the descriptions of this specification, descriptions referring to the terms "embodiment", "example", and the like mean that specific features, structures, materials, or characteristics described with reference to this embodiment or example are included in at least one embodiment or example of this application. In this specification, illustrative expressions of the foregoing terms do not necessarily refer to the same embodiment or example. Furthermore, the described specific features, structures, materials, or characteristics may be combined in any one or more embodiments or examples in a suitable manner.

Although embodiments of this application have been shown and described, a person of ordinary skill in the art will understand that various changes, modifications, replacements, and variations may be made to these embodiments without departing from the principles and objectives of this application, and the scope of this application is defined by the claims and equivalents thereof.

## Claims

1. A stator assembly of an electromagnetic actuator, comprising:
a central rod;
a core assembly, the core assembly being disposed on the central rod; and
a winding assembly, the winding assembly being disposed on the core assembly, and the central rod being provided with a wire-through channel through which a connection wire of the winding assembly passes.

2. The stator assembly of the electromagnetic actuator according to claim 1, wherein a plurality of core assemblies are provided, and the plurality of core assemblies are sequentially stacked in an axial direction of the central rod.

3. The stator assembly of the electromagnetic actuator according to claim 1 or 2, wherein the wire-through channel extends in the axial direction of the central rod.

4. The stator assembly of the electromagnetic actuator according to any one of claims 1 to 3, wherein the winding assembly has a first lead-out end, and at least a partial structure of the first lead-out end is located on an outer periphery of the core assembly.

5. The stator assembly of the electromagnetic actuator according to any one of claims 1 to 4, wherein a first reinforcing rib is disposed on an outer peripheral wall of the core assembly, a wire routing channel is disposed in the first reinforcing rib, and the wire routing channel is used to guide different phases of connection wires of the winding assembly to the wire-through channel of the central rod.

6. The stator assembly of the electromagnetic actuator according to any one of claims 1 to 5, wherein the wire-through channel comprises a radial hole and an axial hole, and the radial hole communicates with the axial hole.

7. The stator assembly of the electromagnetic actuator according to any one of claims 1 to 6, wherein the wire-through channel is formed on an outer wall of the central rod.

8. The stator assembly of the electromagnetic actuator according to any one of claims 1 to 7, wherein the winding assembly has a second lead-out end, and at least a partial structure of the second lead-out end is located between the core assembly and the central rod.

9. An electromagnetic actuator, comprising:
a housing, an accommodating cavity being formed in the housing;
a mover assembly, the mover assembly being disposed in the accommodating cavity; and
a stator assembly, the stator assembly being the stator assembly according to any one of claims 1 to 8, the stator assembly being disposed in the accommodating cavity, a partial structure of the central rod extending out of the housing, and one of the mover assembly and the stator assembly being connected to the housing; and
the mover assembly and the stator assembly being coupled, so that one of the mover assembly and the stator assembly moves along an axis with the housing.

10. A shock absorption apparatus, comprising the electromagnetic actuator according to claim 9, the electromagnetic actuator being adapted to be connected between a vehicle wheel and a vehicle body.

11. A suspension system, comprising the shock absorption apparatus according to claim 10.

12. A vehicle, comprising the suspension system according to claim 11.
